# EUROPEAN PATENT APPLICATION

(11) **EP 4 678 431 A1**
(43) Date of publication of application: **14.01.2026**
(21) Application number: 23929161.0
(22) Date of filing: 28.03.2023
(51) Int. Cl.: B60H 1/22

(54) **THERMAL MANAGEMENT SYSTEM, CONTROL METHOD, APPARATUS AND STORAGE MEDIUM**

(71) Applicant: Shenzhen Yinwang Intelligent Technologies Co., Ltd., Shenzhen, Guangdong 518110 (CN)
(72) Inventor: HU, Haomang, Shenzhen, Guangdong 518129 (CN); WANG, Jinlong, Shenzhen, Guangdong 518129 (CN); WANG, Lei, Shenzhen, Guangdong 518129 (CN)
(74) Representative: Gill Jennings & Every LLP
(86) International application number: PCT/CN2023/084298
(87) International publication number: WO 2024/197561

(57) **Abstract**

A thermal management system, a control method, an apparatus, and a storage medium are disclosed, and are applicable to the field of thermal management technologies, to reduce power of a heater required in the thermal management system. In the thermal management system, a heating component is disposed on a target pipeline that forms a loop with a second heat exchange pipe of a battery chiller. In an ultra-low-temperature environment, the second heat exchange pipe of the battery chiller may be heated through the heating component. When a heating temperature is sufficient to be used to start a compressor, the compressor may be started through a heat exchange operation between the second heat exchange pipe of the battery chiller and a first heat exchange pipe of the battery chiller, and then the compressor is used to assist in heating a heater core and/or a battery. In this way, power specifications of the heater only need to meet a requirement for starting the compressor, and do not need to be set to a large value, so that energy consumption and costs of implementing ultra-low-temperature heating through the thermal management system can be effectively reduced.

## Description

### TECHNICAL FIELD

This application relates to the field of thermal management technologies, and in particular, to a thermal management system, a control method, an apparatus, and a storage medium.

### BACKGROUND

In recent years, electric vehicles have gradually become a mainstream transportation tool. However, compared with conventional vehicles, the electric vehicles still have some problems to be overcome, especially in terms of low-temperature heating. In winter, phenomena such as slow battery charging, a short battery endurance, and hesitation to turn on an air conditioner for heating may occur. "Low-temperature anxiety" has become a pain point that affects user experience in a marketization process of the electric vehicles. Therefore, how to improve adaptability in a low-temperature environment becomes a key technology bottleneck currently faced by the electric vehicles.

To resolve the foregoing problem, in the industry, a positive temperature coefficient (positive temperature coefficient, PTC) heater is usually disposed in an electric vehicle. When an ambient temperature is low, the PTC heater is used to heat a battery or an air conditioner to a required operating temperature, to shorten a battery charging time, improve battery endurance, and improve a heating effect of the air conditioner. However, in an ultra-low-temperature environment at -18°C, -20°C, or even lower, heating up to the required operating temperature typically requires a significant amount of energy. Consequently, a high-power heater needs to be selected in a system design of the electric vehicle. It is understood that, for a pure electric vehicle, at least a PTC heater of about 7 kW needs to be used to adapt to an ultra-low-temperature operating environment, and air-heating energy consumption of the PCT heater accounts for 25% of energy loss of the entire vehicle. This definitely does not align with a design philosophy of reducing energy consumption of the electric vehicle.

Therefore, further research is required for the low-temperature heating of the electric vehicles.

### SUMMARY

This application provides a thermal management system, a control method, an apparatus, and a storage medium, to reduce power of a heater required in the thermal management system, so as to reduce energy consumption of implementing ultra-low-temperature heating through the thermal management system.

According to a first aspect, this application provides a thermal management system. The thermal management system includes a heating component, a compressor, a water-cooled condenser, a battery chiller, a valve body component, a first three-way valve, a one-way valve, a first water pump, a second water pump, and a third water pump, and components are connected through pipelines. Specifically, a first pipeline is connected between an output end of the compressor and an input end of the compressor, and the first pipeline passes through a second heat exchange pipe of the water-cooled condenser and an evaporator in an air conditioner box of a passenger compartment. A second pipeline is further connected between the output end of the compressor and the input end of the compressor, and the second pipeline passes through the second heat exchange pipe of the water-cooled condenser and a first heat exchange pipe of the battery chiller. A third pipeline is connected between a first end of the valve body component and an eighth end of the valve body component, and the third pipeline passes through the first water pump, a heater core in the air conditioner box of the passenger compartment, a first end of the first three-way valve, a second end of the first three-way valve, and a first heat exchange pipe of the water-cooled condenser. A fourth pipeline is connected between a second end of the valve body component and a ninth end of the valve body component, and the fourth pipeline passes through an electric actuator and the second water pump. A fifth pipeline is connected between a fifth end of the valve body component and the ninth end of the valve body component, and the fifth pipeline passes through a front-end cooling module. A sixth pipeline is connected between a third end of the valve body component and a sixth end of the valve body component, and the sixth pipeline passes through a second heat exchange pipe of the battery chiller. A seventh pipeline is connected between a seventh end of the valve body component and a fourth end of the valve body component, the seventh pipeline passes through the third water pump and a battery, and the seventh end of the valve body component is further connected to a third end of the first three-way valve, and is further connected to the second end of the first three-way valve and the first heat exchange pipe of the water-cooled condenser through the one-way valve. The heating component is disposed on a target pipeline, and the target pipeline is a pipeline that connects the heating component to the second heat exchange pipe of the battery chiller by controlling a port connection relationship between the valve body component and the first three-way valve.

In the foregoing design, the heating component is disposed on the target pipeline that forms a loop with the second heat exchange pipe of the battery chiller. In an ultra-low-temperature environment, the second heat exchange pipe of the battery chiller may be heated through the heating component. When a heating temperature is sufficient to be used to start the compressor, the compressor may be started through a heat exchange operation between the second heat exchange pipe of the battery chiller and the first heat exchange pipe of the battery chiller, and then the compressor is used to assist in heating the heater core and/or the battery. In this way, specifications of a heater only need to meet a requirement for starting the compressor, and does not need to be set to a large value. This helps effectively reduce energy consumption and costs of implementing ultra-low-temperature heating through the thermal management system.

In a possible design, the target pipeline may be any one of a battery-related pipeline, an air-heating-related pipeline, or an electric-actuator-related pipeline. Alternatively, to improve heating efficiency, the target pipeline may include at least two of the battery-related pipeline, the air-heating-related pipeline, and the electric-actuator-related pipeline. To be specific, the heater is separately disposed on at least two of the battery-related pipeline, the air-heating-related pipeline, and the electric-actuator-related pipeline, to combine heating effects of the at least two heaters and quickly start the compressor.

In a possible design, when the target pipeline is a battery-related pipeline, the heating component may include a second three-way valve, the heater, and a first valve body. The second three-way valve is disposed on the seventh pipeline, a first end of the second three-way valve is connected to an output end of the third water pump, a second end of the second three-way valve is connected to an input end of the battery, and a third end of the second three-way valve is connected to a branch point between the input end of the battery and the fourth end of the valve body component on the seventh pipeline through an eighth pipeline. The heater is disposed on the sixth pipeline, or disposed on the seventh pipeline between the seventh end of the valve body component and the first end of the second three-way valve, or disposed on the eighth pipeline, or disposed on the seventh pipeline between the branch point and the fourth end of the valve body component. The first valve body is disposed on the first pipeline, a first end of the first valve body is separately connected to the input end of the compressor and the first heat exchange pipe of the battery chiller, and a second end of the first valve body is connected to the evaporator.

In the foregoing design, the second three-way valve is disposed on a loop in which the battery is located, and the heater is connected in parallel to two ends of the battery through the second three-way valve. In this way, in a solution in which only the passenger compartment needs to be heated, the second three-way valve can be used to disconnect the heater and the battery to accurately heat a pipeline outside the battery, and in a solution in which the battery needs to be heated, the second three-way valve can be further used to connect the heater and the battery to heat the battery. This helps implement flexible control on various heating modes.

In a possible design, when the target pipeline is an air-heating-related pipeline, the heating component may include a second three-way valve, the heater, and a first valve body. The second three-way valve is disposed on the seventh pipeline, a first end of the second three-way valve is connected to an output end of the third water pump, a second end of the second three-way valve is connected to an input end of the battery, and a third end of the second three-way valve is connected to a branch point between the input end of the battery and the fourth end of the valve body component on the seventh pipeline through an eighth pipeline. The heater is disposed on the third pipeline between the first end of the valve body component and the first end of the first three-way valve. The first valve body is disposed on the first pipeline, a first end of the first valve body is separately connected to the input end of the compressor and the first heat exchange pipe of the battery chiller, and a second end of the first valve body is connected to the evaporator.

In the foregoing design, although the heater is also disposed on an air-heating loop as in the conventional technology, the first valve body and the second three-way valve are further disposed in the thermal management system. The second three-way valve, the first valve body, and other valve body components in the thermal management system are controlled, so that the heater on the air-heating loop can be connected to the battery chiller, and the heater can heat the battery chiller through the connection, to start the compressor.

In a possible design, when the target pipeline is an electric-actuator-related pipeline, the heating component may include a second three-way valve, the heater, and a first valve body. The first valve body is disposed on the first pipeline, a first end of the first valve body is separately connected to the input end of the compressor and the first heat exchange pipe of the battery chiller, and a second end of the first valve body is connected to the evaporator. The second three-way valve and the heater may be deployed in a plurality of manners. Examples are as follows:

Deployment manner 1: The second three-way valve is disposed on a common pipeline of the fourth pipeline and the fifth pipeline, a first end of the second three-way valve is separately connected to the front-end cooling module and the electric actuator, a second end of the second three-way valve is connected to the ninth end of the valve body component, a third end of the second three-way valve is connected to a branch point between the second water pump and the electric actuator on the fourth pipeline through a ninth pipeline, and the ninth pipeline passes through the heater.

Deployment manner 2: The second three-way valve is disposed on the fifth pipeline, a first end of the second three-way valve is connected to the front-end cooling module, a second end of the second three-way valve is connected to the fifth end of the valve body component, a third end of the second three-way valve is connected to a branch point between the second water pump and the electric actuator on the fourth pipeline through a ninth pipeline, and the ninth pipeline passes through the heater.

In the foregoing design, regardless of which deployment manner is used, the second three-way valve is disposed on a loop in which the electric actuator is located, and the heater and the electric actuator are connected in parallel through the second three-way valve. In this way, not only the passenger compartment and/or the battery can be heated by using a coolant heated by the heater, but also the electric actuator can be cooled by using a coolant that is not heated by the heater, to ensure that the electric actuator can be cooled down in a heating process, and maintain normal running of the electric actuator.

In a possible design, the first valve body may be a control valve or a one-way valve. When the first valve body is a control valve, the first valve body may be a solenoid valve, a gas control valve, a pressure control valve, or the like. When the first valve body is a one-way valve, an input end of the first valve body is the second end of the first valve body, and an output end of the first valve body is the first end of the first valve body. A specific type of the first valve body may be selected by a person skilled in the art based on an actual requirement. In an example, because costs of the one-way valve are lower than those of the control valve, the one-way valve may be preferably selected as the first valve body, to reduce costs of the thermal management system.

In the foregoing design, the first valve body is disposed to ensure that high-temperature and high-pressure refrigerants obtained by the compressor through compression all flow into the first heat exchange pipe of the battery chiller through the second heat exchange pipe of the water-cooled condenser, but do not flow into the evaporator. In this way, a heating capability of the compressor can all be used to heat the water-cooled condenser and further used to heat the heater core and/or the battery.

It should be noted that, when the heating component includes only the second three-way valve, the heater, and the first valve body, when heating the passenger compartment, the thermal management system directly uses the heater core to heat the passenger compartment, and does not use the evaporator for preheating. In this case, the thermal management system is referred to as a non-preheating thermal management system.

In a possible design, when the thermal management system is a preheating thermal management system, in addition to the second three-way valve, the heater, and the first valve body, the heating component may further include a second valve body and a third valve body. A tenth pipeline is connected between the second end of the first valve body and the first heat exchange pipe of the battery chiller. The second valve body is disposed on the tenth pipeline, a first end of the second valve body is separately connected to the second end of the first valve body and an end of the evaporator, and a second end of the second valve body is separately connected to the first heat exchange pipe of the battery chiller and a first end of the third valve body. The third valve body is disposed on the second pipeline, the first end of the third valve body is separately connected to the second end of the second valve body and the first heat exchange pipe of the battery chiller, and a second end of the third valve body is separately connected to the other end of the evaporator and the second heat exchange pipe of the water-cooled condenser.

In the foregoing design, the tenth pipeline, the second valve body, and the third valve body are disposed, so that the compressor, the evaporator, and the second heat exchange pipe of the battery chiller can be connected together. In this way, when the passenger compartment is heated, heat generated by the compressor through compression may be first used to heat the evaporator, so that the passenger compartment is heated for a first time through the evaporator, and then the second heat exchange pipe of the battery chiller is used to heat the heater core, so that the passenger compartment is heated for a second time through the heater core. In this way, the passenger compartment is preheated, and a speed of heating the passenger compartment is improved.

In a possible design, when the heating component includes the first valve body, the second valve body, and the third valve body, the first valve body and the third valve body may be control valves, and the second valve body may be a control valve or a one-way valve. When the second valve body is a one-way valve, an input end of the second valve body is the first end of the second valve body, and an output end of the second valve body is the second end of the second valve body.

In the foregoing design, the first valve body and the third valve body may be configured as control valves, and the first valve body and the third valve body may be controlled to be turned off, so that the compressor, the evaporator, and the second heat exchange pipe of the battery chiller are connected, to provide support for the solution of preheating the passenger compartment.

In a possible design, the thermal management system may further include a liquid storage tank. The liquid storage tank is disposed on an outer side of an output end of the second heat exchange pipe of the water-cooled condenser, and the liquid storage tank and the water-cooled condenser form an undercooled water-cooled condenser. In this way, through a connection arrangement of the undercooled water-cooled condenser, a cooling capacity flowing out from the water-cooled condenser can be recycled, a gasification rate of liquid flowing out from the water-cooled condenser can be reduced, and condensation performance of the water-cooled condenser can be improved.

In a possible design, as an alternative solution of the liquid storage tank, the thermal management system may further include a gas-liquid separator, and the gas-liquid separator is disposed at an inlet end of the compressor. In this way, the gas-liquid separator is disposed in front of the input end of the compressor, so that the compressor can receive pure refrigerant gas, to improve a compression effect of the compressor.

In a possible design, an integrated design may be performed on at least two of the following components in the thermal management system and a pipeline connected between the at least two components: the water-cooled condenser, the battery chiller, the valve body component, the one-way valve, the first three-way valve, the first water pump, the second water pump, the third water pump, the liquid storage tank, the second three-way valve, the first valve body, the second valve body, and the third valve body.

In the foregoing design, the plurality of components in the thermal management system are integrated. This not only helps reduce structural complexity of the thermal management system and reduce occupied space, but also shortens cabling between the components through this compact structural arrangement. In this way, when the coolant or the refrigerant circulates in such a short circulation link, a pressure loss of the coolant or the refrigerant in a circulation flow process is reduced, to further help improve efficiency of a refrigerant loop. In addition, this integration manner can be made into modular components that are easy to maintain and carry.

According to a second aspect, an embodiment of this application provides a control method. The control method is applicable to the thermal management system described in any design of the first aspect, and the method includes: when it is determined to heat a to-be-heated device, first obtaining an ambient temperature, and if the ambient temperature is lower than a first temperature threshold, controlling a heater and one or more water pumps in the thermal management system to be started, and controlling a port connection relationship between valve bodies in the thermal management system, to make the heater and a second heat exchange pipe of a battery chiller form a loop, so as to use the heater to heat the second heat exchange pipe of the battery chiller; then, in a process of heating the second heat exchange pipe, after it is determined that a temperature at an output end of the second heat exchange pipe of the battery chiller is not lower than a second temperature threshold, controlling a compressor in the thermal management system to be started, to make the compressor, a first heat exchange pipe of the battery chiller, and a second heat exchange pipe of a water-cooled condenser form a loop, so as to heat the second heat exchange pipe of the water-cooled condenser through the compressor; and after the compressor is controlled to be started, controlling the port connection relationship between the valve bodies in the thermal management system, and/or controlling one or more water pumps in the thermal management system to be started, to make the to-be-heated device and a first heat exchange pipe of the water-cooled condenser form a loop, so as to heat the to-be-heated device by using heat exchanged from the second heat exchange pipe of the water-cooled condenser through the first heat exchange pipe of the water-cooled condenser.

In the foregoing design, the first temperature threshold indicates an ultra-low-temperature environment, and the second temperature threshold indicates a start temperature of the compressor. In other words, in the ultra-low-temperature environment, the second heat exchange pipe of the battery chiller is first heated through the heater, and after a heating temperature is sufficient to be used to start the compressor, the compressor may be heated through a heat exchange operation between the second heat exchange pipe and the first heat exchange pipe of the battery chiller, to start the compressor, and then the started compressor may be used to assist in heating a heater core and/or a battery. In this way, according to this design idea, specifications of the heater only need to meet a requirement for starting the compressor, and does not need to be set to a large value. This helps reduce power consumption and costs of the thermal management system.

In a possible design, when the thermal management system includes only a second three-way valve, the heater, and a first valve body, if the first valve body is a control valve, after the compressor in the thermal management system is controlled to be started, the first valve body may be further controlled to be turned off, to ensure that a high-temperature and high-pressure refrigerant output by the compressor completely flows into the first heat exchange pipe of the battery chiller after passing through the second heat exchange pipe of the water-cooled condenser, and is not shunted by an evaporator, and ensure that all the heating capacity of the compressor is used to heat the water-cooled condenser and further used to heat the heater core and/or the battery.

In a possible design, when the thermal management system not only includes a second three-way valve, the heater, and a first valve body, but also includes a second valve body and a third valve body, after the compressor in the thermal management system is controlled to be started, the first valve body and the third valve body may be further controlled to be turned off, and when the second valve body is a control valve, the second valve body is controlled to be turned off.

In the foregoing design, the first valve body and the third valve body are controlled to be turned off, to ensure that the compressor, the evaporator, and the second heat exchange pipe of the battery chiller are connected together. In this way, when the passenger compartment is heated, heat generated by the compressor through compression may be first used to heat the evaporator, so that the passenger compartment is heated for a first time through the evaporator, and then the second heat exchange pipe of the battery chiller is used to heat the heater core, so that the passenger compartment is heated for a second time through the heater core. In this way, the passenger compartment is preheated, and a speed of heating the passenger compartment is improved.

In a possible design, when a heating component is disposed on a battery-related pipeline (that is, the heater is disposed on a sixth pipeline, a seventh pipeline, or an eighth pipeline), controlling the heater and the one or more water pumps in the thermal management system to be started, and controlling the port connection relationship between the valve bodies in the thermal management system, to make the heater and the second heat exchange pipe of the battery chiller form the loop includes: controlling the heater and a third water pump to be started, controlling a first end of the second three-way valve to be connected to a third end of the second three-way valve, controlling a third end of a valve body component to be connected to a fourth end of the valve body component, and controlling a sixth end of the valve body component to be connected to a seventh end of the valve body component.

In the foregoing design, the components are controlled in the given manner, so that the third water pump, the first end of the second three-way valve, the third end of the second three-way valve, the heater, the fourth end of the valve body component, the third end of the valve body component, the second heat exchange pipe of the battery chiller, the sixth end of the valve body component, and the seventh end of the valve body component can be connected to form a loop. In this way, the heater heats the second heat exchange pipe of the battery chiller.

In a further design, when the to-be-heated device is a passenger compartment, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling a first water pump to be started, controlling a first end of a first three-way valve to be connected to a second end of the first three-way valve, and controlling a first end of the valve body component to be connected to an eighth end of the valve body component.

In the foregoing design, the components are controlled in the given manner, so that the first water pump, the heater core, the first heat exchange pipe of the water-cooled condenser, the eighth end of the valve body component, and the first end of the valve body component can be connected to form a loop, and the heater core is heated by using heat absorbed by the first heat exchange pipe of the water-cooled condenser from the second heat exchange pipe of the water-cooled condenser.

In a further design, when the to-be-heated device is a battery, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling a first water pump to be started, controlling a first end of a first three-way valve to be connected to a third end of the first three-way valve, controlling the first end of the second three-way valve to be connected to a second end of the second three-way valve, and controlling a first end of the valve body component to be connected to an eighth end of the valve body component.

In the foregoing design, the components are controlled in the given manner, so that the first water pump, the heater core, the third water pump, the battery, the fourth end of the valve body component, the third end of the valve body component, the second heat exchange pipe of the battery chiller, the sixth end of the valve body component, the seventh end of the valve body component, the one-way valve, the first heat exchange pipe of the water-cooled condenser, the eighth end of the valve body component, and the first end of the valve body component can be connected to form a loop, and the battery is heated by using heat absorbed by the first heat exchange pipe of the water-cooled condenser from the second heat exchange pipe of the water-cooled condenser.

In a further design, when the to-be-heated device is a passenger compartment and a battery, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling a first water pump to be started, controlling a first end of a first three-way valve to be separately connected to a second end of the first three-way valve and a third end of the first three-way valve, controlling the first end of the second three-way valve to be connected to a second end of the second three-way valve, and controlling a first end of the valve body component to be connected to an eighth end of the valve body component.

In the foregoing design, the components are controlled in the given manner, so that the first heat exchange pipe of the water-cooled condenser can separately form a loop with the heater core and the battery, to implement an effect of simultaneously heating the passenger compartment and the battery.

In a possible design, when a heating component is disposed on an air-heating-related pipeline (that is, the heater is disposed on a third pipeline), controlling the heater and the one or more water pumps in the thermal management system to be started, and controlling the port connection relationship between the valve bodies in the thermal management system, to make the heater and the second heat exchange pipe of the battery chiller form the loop includes: controlling the heater, a first water pump, and a third water pump to be started, controlling a first end of a first three-way valve to be connected to a third end of the first three-way valve, controlling a first end of the second three-way valve to be connected to a third end of the second three-way valve, controlling a third end of a valve body component to be connected to a fourth end of the valve body component, controlling a sixth end of the valve body component to be connected to a seventh end of the valve body component, and controlling a first end of the valve body component to be connected to an eighth end of the valve body component.

In the foregoing design, the components are controlled in the given manner, so that the first water pump, the heater, the heater core, the first end of the first three-way valve, the third end of the first three-way valve, the third water pump, the first end of the second three-way valve, the third end of the second three-way valve, the fourth end of the valve body component, the third end of the valve body component, the second heat exchange pipe of the battery chiller, the sixth end of the valve body component, the seventh end of the valve body component, the first heat exchange pipe of the water-cooled condenser, the eighth end of the valve body component, and the first end of the valve body component can be connected to form a loop. In this way, the heater heats the second heat exchange pipe of the battery chiller.

In a further design, when the to-be-heated device is a passenger compartment, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling the first end of the first three-way valve to be connected to a second end of the first three-way valve.

In the foregoing design, the components are controlled in the given manner. The first heat exchange pipe of the water-cooled condenser absorbs heat of a refrigerant flowing in the second heat exchange pipe of the water-cooled condenser, to obtain a heated coolant. The heated coolant flows into the heater after sequentially passing through the eighth end of the valve body component, the first end of the valve body component, and the first water pump, and the heater further heats the coolant that has been heated by the compressor to obtain a coolant of a higher temperature. Then, the coolant flows into the heater core to heat the heater core, to heat the passenger compartment through the heater core that is jointly heated by the compressor and the heater, so as to improve passenger compartment heating efficiency.

In a further design, when the to-be-heated device is a battery, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling the first end of the second three-way valve to be connected to the third end of the second three-way valve.

In the foregoing design, the components are controlled in the given manner, one part of the coolant that flows into the first end of the second three-way valve and that is heated by using heat generated by the compressor through compression flows out from the third end of the second three-way valve and then participates in a loop for heating by the compressor, and the other part flows out from the third end of the second three-way valve to heat the battery.

In a further design, when the to-be-heated device is a passenger compartment and a battery, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling the first end of the first three-way valve to be connected to a second end of the first three-way valve, and controlling the first end of the second three-way valve to be connected to the third end of the second three-way valve.

In the foregoing design, the components are controlled in the given manner, so that not only the heater core can be heated by using the heated coolant obtained by exchanging heat with the loop in which the compressor is located, to heat the passenger compartment, but also the battery can be heated by using the heated coolant obtained by exchanging heat with the loop in which the compressor is located.

In a possible design, when a heating component is disposed on an electric actuator-related pipeline, different deployment solutions correspond to different control solutions. Details are as follows:

Deployment solution 1: If the second three-way valve is disposed on a common pipeline of a fourth pipeline and a fifth pipeline, and the heater is disposed on a ninth pipeline, controlling the heater and the one or more water pumps in the thermal management system to be started, and controlling the port connection relationship between the valve bodies in the thermal management system, to make the heater and the second heat exchange pipe of the battery chiller form the loop includes: controlling the heater and a second water pump to be started, controlling a second end of the second three-way valve to be separately connected to a first end of the second three-way valve and a third end of the second three-way valve, controlling a second end of a valve body component to be connected to a third end of the valve body component, and controlling a sixth end of the valve body component to be connected to a ninth end of the valve body component. In this way, the components are controlled in the given manner, so that the heater, the second water pump, the second end of the valve body component, the third end of the valve body component, the second heat exchange pipe of the battery chiller, the sixth end a₆ of the valve body component, the ninth end a₉ of the valve body component, the second end of the second three-way valve, and parallel pipelines formed by the first end of the second three-way valve and the third end of the second three-way valve can be connected to form a loop. In this way, the heater heats the second heat exchange pipe of the battery chiller.

Deployment solution 2: If the second three-way valve is disposed on a fifth pipeline, and the heater is disposed on a ninth pipeline, controlling the heater and the one or more water pumps in the thermal management system to be started, and controlling the port connection relationship between the valve bodies in the thermal management system, to make the heater and the second heat exchange pipe of the battery chiller form the loop includes: controlling the heater and a second water pump to be started, controlling a second end of the second three-way valve to be connected to a third end of the second three-way valve, controlling a second end of a valve body component to be connected to a third end of the valve body component, and controlling a sixth end of the valve body component to be separately connected to a fifth end of the valve body component and a ninth end of the valve body component. In this way, the components are controlled in the given manner, so that the heater, the second water pump, the second end of the valve body component, the third end of the valve body component, the second heat exchange pipe of the battery chiller, the sixth end of the valve body component, parallel pipelines formed by the ninth end of the valve body component and the fifth end of the valve body component, the second end of the second three-way valve, and the third end of the second three-way valve can be connected to form a loop. In this way, the heater heats the second heat exchange pipe of the battery chiller.

In a further design, when the to-be-heated device is a passenger compartment, controlling the one or more water pumps in the thermal management system to be started, and/or controlling the port connection relationship between the valve bodies in the thermal management system, to make the to-be-heated device and the first heat exchange pipe of the water-cooled condenser form the loop includes: controlling a first water pump to be started, controlling a first end of a first three-way valve to be connected to a second end of the first three-way valve, and controlling a first end of the valve body component to be connected to an eighth end of the valve body component.

In the foregoing design, the components are controlled in the given manner, so that the first heat exchange pipe of the water-cooled condenser, the eighth end of the valve body component, the first end of the valve body component, the first water pump, the heater core, the first end of the first three-way valve, and the second end of the first three-way valve can form a loop, to heat the heater core by using heat absorbed by the first heat exchange pipe of the water-cooled condenser from the second heat exchange pipe of the water-cooled condenser, so as to heat the passenger compartment.

In a further design, when the to-be-heated device is a battery, the to-be-heated device and the first heat exchange pipe of the water-cooled condenser may be controlled to form a loop in a plurality of manners. Examples are as follows:
Manner 1: A first water pump and a third water pump are controlled to be started, a first end of a first three-way valve is controlled to be connected to a third end of the first three-way valve, a first end of the valve body component is controlled to be connected to an eighth end of the valve body component, and a fourth end of the valve body component is controlled to be connected to a seventh end of the valve body component. In this way, the components are controlled in the given manner, so that the first heat exchange pipe of the water-cooled condenser, the eighth end of the valve body component, the first end of the valve body component, the first water pump, the heater core, the first end of the first three-way valve, the third end of the first three-way valve, the third water pump, the battery, the fourth end of the valve body component, the seventh end of the valve body component, and parallel pipelines formed by the third water pump and the one-way valve can form a loop, to heat the battery by using heat absorbed by the first heat exchange pipe of the water-cooled condenser from the second heat exchange pipe of the water-cooled condenser.
Manner 2: A first water pump and a third water pump are controlled to be started, a first end of a first three-way valve is controlled to be connected to a second end of the first three-way valve, a first end of the valve body component is controlled to be connected to a fourth end of the valve body component, and a seventh end of the valve body component is controlled to be connected to an eighth end of the valve body component. In this way, the components are controlled in the given manner, so that the first heat exchange pipe of the water-cooled condenser, the eighth end of the valve body component, the seventh end of the valve body component, the third water pump, the battery, the valve body component, the first end of the valve body component, the first water pump, the heater core, the first end of the first three-way valve, and the second end of the first three-way valve can form a loop, to heat the battery by using heat absorbed by the first heat exchange pipe of the water-cooled condenser from the second heat exchange pipe of the water-cooled condenser.

In a further design, when the to-be-heated device is a passenger compartment and a battery, the to-be-heated device and the first heat exchange pipe of the water-cooled condenser may be controlled to form a loop in a plurality of manners. Examples are as follows:
Manner 1: A first water pump and a third water pump are controlled to be started, a first end of a first three-way valve is controlled to be separately connected to a second end of the first three-way valve and a third end of the first three-way valve, a first end of the valve body component is controlled to be connected to an eighth end of the valve body component, and a fourth end of the valve body component is controlled to be connected to a seventh end of the valve body component.
Manner 2: A first water pump and a third water pump are controlled to be started, a first end of a first three-way valve is controlled to be separately connected to a second end of the first three-way valve and a third end of the first three-way valve, a first end of the valve body component is controlled to be connected to a fourth end of the valve body component, and a seventh end of the valve body component is controlled to be connected to an eighth end of the valve body component.

In the foregoing two designed manners, the first heat exchange pipe of the water-cooled condenser can separately form a loop with the heater core and the battery, to simultaneously heat the passenger compartment and the battery by using the heat absorbed by the first heat exchange pipe of the water-cooled condenser from the second heat exchange pipe of the water-cooled condenser.

It should be noted that, the foregoing content describes how to control the components in the thermal management system in the ultra-low-temperature environment to implement different heating modes. The following describes how to control the components in the thermal management system in a non-ultra-low-temperature environment to implement different heating modes.

In a possible design, after the ambient temperature is obtained, if it is determined that the ambient temperature is not lower than the first temperature threshold and is lower than the second temperature threshold, one or more water pumps in the thermal management system are controlled to be started, and the port connection relationship between the valve bodies in the thermal management system is controlled, to make an electric actuator and the second heat exchange pipe of the battery chiller form a loop.

In the foregoing design, when the ambient temperature is not an ultra-low temperature, but does not reach the start temperature of the compressor, the electric actuator and the second heat exchange pipe of the battery chiller form a loop, so that the second heat exchange pipe of the battery chiller can be heated by using a heat dissipation capability of the electric actuator during running, to assist in starting the compressor, without wasting power of the heater for heating.

In a further design, controlling the one or more water pumps in the thermal management system to be started, and controlling the port connection relationship between the valve bodies in the thermal management system, to make the electric actuator and the second heat exchange pipe of the battery chiller form the loop includes: controlling the second water pump to be started, controlling the second end of the valve body component to be connected to the third end of the valve body component, and controlling the sixth end of the valve body component to be connected to the fifth end of the valve body component.

In the foregoing design, the components are controlled in the given manner, so that the electric actuator, the second water pump, the second end of the valve body component, the third end of the valve body component, the second heat exchange pipe of the battery chiller, the sixth end of the valve body component, the fifth end of the valve body component, and a chiller can form a loop, to heat the second heat exchange pipe of the battery chiller by using heat generated during running of the electric actuator.

In a further design, in a process of heating through the electric actuator, a temperature at an outlet end of a front-end cooling module and a temperature at an outlet end of the battery chiller may be further monitored. When the temperature at the outlet end of the battery chiller is lower than the temperature at the outlet end of the front-end cooling module, it indicates that a temperature of the coolant flowing through the battery chiller is still lower than the ambient temperature. In this case, the sixth end of the valve body component may continue to be connected to the fifth end of the valve body component. In this way, a higher ambient temperature is first obtained by using the front-end cooling module for heat exchange, and then the coolant is heated through the electric actuator, to increase a temperature of the coolant at the output end of the electric actuator. On the contrary, when the temperature at the outlet end of the battery chiller is higher than the temperature at the outlet end of the front-end cooling module, it indicates that the temperature of the coolant flowing through the battery chiller is higher than the ambient temperature. In this case, the sixth end of the valve body component may be controlled to be disconnected from the fifth end of the valve body component, and the sixth end of the valve body component may be controlled to be connected to the ninth end of the valve body component, so that the coolant that passes through the battery chiller and whose temperature is higher than the ambient temperature directly flows into the electric actuator for heating, to increase the temperature of the coolant at the output end of the electric actuator.

In the foregoing design, a coolant with a higher temperature between the coolant with the ambient temperature and the coolant that flows through the battery chiller is input to the electric actuator for heating, to reach the temperature required for starting the compressor as soon as possible, and start the compressor as soon as possible.

According to a third aspect, this application provides a controller, including at least one processor and an interface circuit, where the interface circuit is configured to provide data or code instructions for the at least one processor, and the at least one processor is configured to implement the control method in any design of the second aspect through a logic circuit or by executing the code instructions.

According to a fourth aspect, this application provides an electric vehicle, including a controller and the thermal management system in any design of the first aspect. The controller is configured to control components in the thermal management system according to the control method in any design of the second aspect, to implement one or more of a mode of heating only a passenger compartment, a battery heating mode, or a mode of heating both a passenger compartment and a battery.

According to a fifth aspect, this application provides a computer-readable storage medium, where the computer-readable storage medium stores a computer program, and when the computer program is run, the control method in any design of the second aspect is performed.

According to a sixth aspect, this application provides a computer program product. When the computer program product runs on a processor, the control method in any design of the first aspect is implemented.

For details of beneficial effect of the third aspect to the sixth aspect, refer to technical effect that can be achieved by corresponding designs in the first aspect and the second aspect. Details are not described herein again.

### BRIEF DESCRIPTION OF DRAWINGS

FIG. 1 is an architectural diagram of a thermal management system provided in the industry;
FIG. 2A is a diagram of a pipeline flow relationship for implementing ultra-low-temperature heating of a passenger compartment through a thermal management system provided in the industry;
FIG. 2B is a diagram of a pipeline flow relationship for implementing ultra-low-temperature heating of a battery through a thermal management system provided in the industry;
FIG. 2C is a diagram of a pipeline flow relationship for implementing ultra-low-temperature heating of a passenger compartment and a battery through a thermal management system provided in the industry;
FIG. 3 is an architectural diagram of a non-preheating thermal management system according to an embodiment of this application;
FIG. 4A is a diagram of a pipeline flow relationship for implementing a mode of heating only a passenger compartment;
FIG. **4B** is a diagram of a pipeline flow relationship for implementing a mode of heating only a battery;
FIG. 4C is a diagram of a pipeline flow relationship for implementing a mode of heating both a passenger compartment and a battery;
FIG. 5 is an architectural diagram of another non-preheating thermal management system according to an embodiment of this application;
FIG. 6 is an architectural diagram of another non-preheating thermal management system according to an embodiment of this application;
FIG. 7A is a diagram of a pipeline flow relationship for implementing a mode of heating only a passenger compartment;
FIG. 7B is a diagram of a pipeline flow relationship for implementing a mode of heating only a battery;
FIG. 7C is a diagram of a pipeline flow relationship for implementing a mode of heating both a passenger compartment and a battery;
FIG. 8 is an architectural diagram of another non-preheating thermal management system according to an embodiment of this application;
FIG. 9A is a diagram of a pipeline flow relationship for implementing a mode of heating only a passenger compartment;
FIG. 9B is a diagram of a pipeline flow relationship for implementing a mode of heating only a battery;
FIG. 9C is a diagram of another pipeline flow relationship for implementing a mode of heating only a battery;
FIG. 9D is a diagram of a pipeline flow relationship for implementing a mode of heating both a passenger compartment and a battery;
FIG. 9E is a diagram of another pipeline flow relationship for implementing a mode of heating both a passenger compartment and a battery;
FIG. 10 is an architectural diagram of another non-preheating thermal management system according to an embodiment of this application;
FIG. 11A is a diagram of a pipeline flow relationship for implementing a mode of heating only a passenger compartment;
FIG. 11B is a diagram of a pipeline flow relationship for implementing a mode of heating only a battery;
FIG. 11C is a diagram of another pipeline flow relationship for implementing a mode of heating only a battery;
FIG. 11D is a diagram of a pipeline flow relationship for implementing a mode of heating both a passenger compartment and a battery;
FIG. 11E is a diagram of another pipeline flow relationship for implementing a mode of heating both a passenger compartment and a battery;
FIG. 12 is an architectural diagram of a preheating thermal management system according to an embodiment of this application;
FIG. 13A is a diagram of a pipeline flow relationship for implementing a mode of heating only a passenger compartment;
FIG. 13B is a diagram of a pipeline flow relationship for implementing a mode of heating only a battery;
FIG. 13C is a diagram of a pipeline flow relationship for implementing a mode of heating both a passenger compartment and a battery;
FIG. 14 is an architectural diagram of another preheating thermal management system according to an embodiment of this application;
FIG. 15 is an architectural diagram of another preheating thermal management system according to an embodiment of this application;
FIG. 16A is a diagram of a pipeline flow relationship for implementing a mode of heating only a passenger compartment;
FIG. 16B is a diagram of a pipeline flow relationship for implementing a mode of heating only a battery;
FIG. 16C is a diagram of a pipeline flow relationship for implementing a mode of heating both a passenger compartment and a battery;
FIG. 17 is an architectural diagram of another preheating thermal management system according to an embodiment of this application;
FIG. 18A is a diagram of a pipeline flow relationship for implementing a mode of heating only a passenger compartment;
FIG. 18B is a diagram of a pipeline flow relationship for implementing a mode of heating only a battery;
FIG. 18C is a diagram of another pipeline flow relationship for implementing a mode of heating only a battery;
FIG. 18D is a diagram of a pipeline flow relationship for implementing a mode of heating both a passenger compartment and a battery;
FIG. 18E is a diagram of another pipeline flow relationship for implementing a mode of heating both a passenger compartment and a battery;
FIG. 19 is an architectural diagram of another preheating thermal management system according to an embodiment of this application;
FIG. 20A is a diagram of a pipeline flow relationship for implementing a mode of heating only a passenger compartment;
FIG. 20B is a diagram of a pipeline flow relationship for implementing a mode of heating only a battery;
FIG. 20C is a diagram of another pipeline flow relationship for implementing a mode of heating only a battery;
FIG. 20D is a diagram of a pipeline flow relationship for implementing a mode of heating both a passenger compartment and a battery;
FIG. 20E is a diagram of another pipeline flow relationship for implementing a mode of heating both a passenger compartment and a battery;
FIG. 21A is a diagram of a pipeline flow relationship for implementing non-ultra-low-temperature heating of a passenger compartment according to a non-preheating thermal management solution;
FIG. 21B is a diagram of a pipeline flow relationship for implementing non-ultra-low-temperature heating of a battery according to a non-preheating thermal management solution;
FIG. 21C is a diagram of a pipeline flow relationship for implementing non-ultra-low-temperature heating of a passenger compartment and a battery according to a non-preheating thermal management solution;
FIG. 21D is a diagram of another pipeline flow relationship for implementing non-ultra-low-temperature heating of a passenger compartment according to a non-preheating thermal management solution;
FIG. 21E is a diagram of another pipeline flow relationship for implementing non-ultra-low-temperature heating of a battery according to a non-preheating thermal management solution;
FIG. 21F is a diagram of another pipeline flow relationship for implementing non-ultra-low-temperature heating of a passenger compartment and a battery according to a non-preheating thermal management solution;
FIG. 22A is a diagram of a pipeline flow relationship for implementing non-ultra-low-temperature heating of a passenger compartment according to a preheating thermal management solution;
FIG. 22B is a diagram of a pipeline flow relationship for implementing non-ultra-low-temperature heating of a battery according to a preheating thermal management solution;
FIG. 22C is a diagram of a pipeline flow relationship for implementing non-ultra-low-temperature heating of a passenger compartment and a battery according to a preheating thermal management solution;
FIG. 22D is a diagram of another pipeline flow relationship for implementing non-ultra-low-temperature heating of a passenger compartment according to a preheating thermal management solution;
FIG. 22E is a diagram of another pipeline flow relationship for implementing non-ultra-low-temperature heating of a battery according to a preheating thermal management solution;
FIG. 22F is a diagram of another pipeline flow relationship for implementing non-ultra-low-temperature heating of a passenger compartment and a battery according to a preheating thermal management solution;
FIG. 23 is a diagram of a connection manner of an undercooled water-cooled condenser according to an embodiment of this application;
FIG. 24 is an architectural diagram of another thermal management system according to an embodiment of this application;
FIG. 25 is a diagram of an integration manner of a non-preheating thermal management system according to an embodiment of this application; and
FIG. 26 is a diagram of an integration manner of a preheating thermal management system according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In descriptions of this application, "at least one" means one or more, and "a plurality of" means two or more. In view of this, in embodiments of the present invention, "a plurality of" may also be understood as "at least two". "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are for distinguishing between a plurality of objects, but are not intended to limit priorities or importance of the plurality of objects. For example, a first three-way valve is a three-way valve located between a water-cooled condenser and a heater core, and a second three-way valve is a three-way valve that is disposed together with a heater and that is located in a battery-related pipeline, an electric-actuator-related pipeline, or an air-heating-related pipeline, but this does not mean that priorities or importance degrees of the two three-way valves are different.

In addition, a "connection" in the following embodiments of this application refers to a pipeline connection, and a connection between two components may be a direct or indirect connection between the two components. For example, that A is connected to B may be that A is directly connected to B, or A is indirectly connected to B through one or more other components. For example, A is directly connected to B through a pipeline. Alternatively, A is directly connected to C through a pipeline, C is directly connected to B through a pipeline, and A and B are connected through C. In some scenarios, the "connection" may alternatively be understood as another meaning. In conclusion, the connection between A and B enables a coolant or a refrigerant to be transmitted between A and B.

A thermal management system in embodiments of this application is applicable to an electric vehicle. The electric vehicle is also referred to as a new energy vehicle, and is a vehicle driven by electric energy. A thermal management system of the electric vehicle is derived from a thermal management system of a conventional fuel vehicle. The thermal management system of the electric vehicle has a same part as the thermal management system of the conventional fuel vehicle, for example, a part used to cool or heat an air conditioner, and also has many new parts, for example, a part used to heat or cool a battery and a part used to heat or cool an electric actuator. Therefore, compared with that of the conventional fuel vehicle, the thermal management system of the electric vehicle not only needs to control a temperature in a passenger compartment to provide a comfortable driving environment for a driver, but also needs to control a temperature of the battery, especially needs to heat the battery in cold winter, to shorten charging time of the battery and improve a battery endurance capacity.

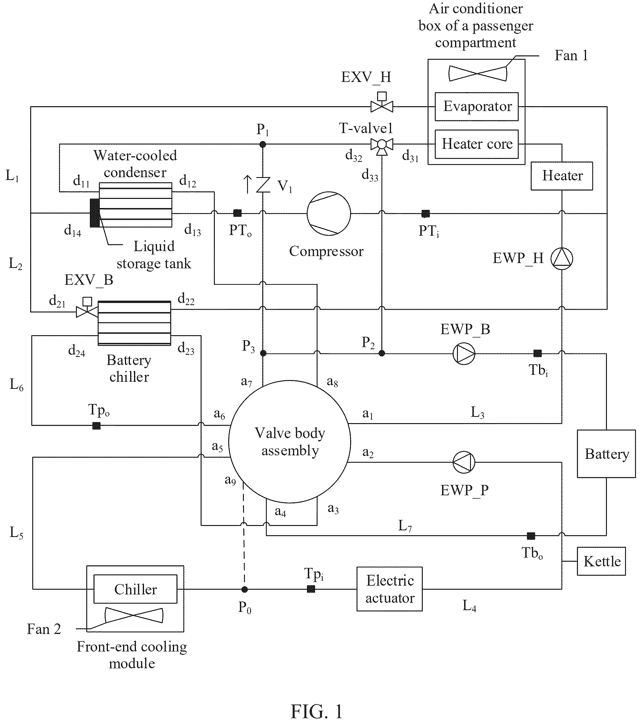

FIG. 1 is an architectural diagram of a thermal management system provided in the industry. The thermal management system includes a compressor, a water-cooled condenser, a battery chiller, a valve body component, a first three-way valve T-valvel, a one-way valve V₁, a first water pump EWP_H, a second water pump EWP_P, and a third water pump EWP_B. The valve body component includes at least nine ends, for example, may be a single valve body like a nine-way valve or a ten-way valve, or may be a combined valve body formed by a plurality of valve bodies such as a five-way valve, a four-way valve, or a three-way valve. This is not specifically limited.

In addition, the thermal management system further includes a plurality of pipelines for connecting the components, for example, a first pipeline L₁, a second pipeline L₂, a third pipeline L₃, a fourth pipeline L₄, a fifth pipeline L₅, a sixth pipeline L₆, and a seventh pipeline L₇. Still refer to FIG. 1. The following describes each pipeline in detail.

The first pipeline L₁ and the second pipeline L₂ are separately connected between an output end of the compressor and an input end of the compressor. The first pipeline L₁ passes through a second heat exchange pipe (namely, a heat exchange pipe between a port d₁₃ and a port d₁₄, referred to as a second heat exchange pipe d₁₃d₁₄ for short, where another similar heat exchange pipe is named according to the same rule) of the water-cooled condenser and an evaporator in an air conditioner box of a passenger compartment, and the second pipeline L₂ passes through the second heat exchange pipe d₁₃d₁₄ of the water-cooled condenser and a first heat exchange pipe d₂₁d₂₂ of the battery chiller.

The third pipeline L₃ is connected between a first end a₁ of the valve body component and an eighth end as of the valve body component, and the third pipeline L₃ passes through the first water pump EWP_H, a heater core in the air conditioner box of the passenger compartment, a first end d₃₁ of the first three-way valve T-valvel, a second end d₃₂ of the first three-way valve T-valvel, and a first heat exchange pipe d₁₁d₁₂ of the water-cooled condenser;
The fourth pipeline L₄ is connected between a second end a₂ of the valve body component and a ninth end a₉ of the valve body component, and the fourth pipeline L₄ passes through an electric actuator and the second water pump EWP_P.

The fifth pipeline L₅ is connected between a fifth end as of the valve body component and the ninth end a₉ of the valve body component, and the fifth pipeline L₅ passes through a chiller in a front-end cooling module.

The sixth pipeline L₆ is connected between a third end a₃ of the valve body component and a sixth end a₆ of the valve body component, and the sixth pipeline L₆ passes through a second heat exchange pipe d₂₃d₂₄ of the battery chiller.

The seventh pipeline L₇ is connected between a seventh end a₇ of the valve body component and a fourth end a₄ of the valve body component, and the seventh pipeline L₇ passes through the third water pump EWP_B and a battery.

In addition, a branch point P₂ and a branch point P₃ further exist on the seventh pipeline L₇, and a branch point P₁ further exists on the third pipeline L₃. The branch point P₂ is connected to a third end d₃₃ of the first three-way valve T-valvel through a pipeline. The branch point P₃ is connected to the branch point P₁ through another pipeline, and the another pipeline passes through the one-way valve V₁. In addition, an input end of the one-way valve V₁ is connected to the branch point P₃, and an output end of the one-way valve V₁ is connected to the branch point P₁.

It should be noted that a component connection relationship shown in FIG. 1 is merely an example, and positions of components on a pipeline may alternatively be exchanged, and are not limited to positions shown in FIG. 1. For example, in some embodiments, positions of the first water pump EWP_H and the heater core in the third pipeline L₄ may be exchanged, positions of the second water pump EWP_P and the electric actuator in the fourth pipeline L₄ may be exchanged, and positions of the third water pump EWP_B and the battery in the seventh pipeline L₇ may be exchanged. This position exchange has no essential impact on implementation of the solution. Therefore, this exchange solution is not described in detail in embodiments of this application. For implementation of the thermal management solution, directly refer to the following descriptions.

In some embodiments, the electric actuator is a component that can convert electric energy into kinetic energy to actuate an electric vehicle to travel. For example, the electric actuator may include a power distribution unit (power distribution unit, PDU), a microcontroller unit (microcontroller unit, MCU), an engine, a mobile data center (Mobile Data Center, MDC), an electronic control unit (electronic control unit, ECU), and a motor.

In some embodiments, a fan 1 may be further disposed in the front-end cooling module. The fan 1 is configured to implement heat exchange between an ambient temperature and the chiller, for example, cooling a coolant flowing through the chiller based on an ambient temperature in winter, or cooling the coolant flowing through the chiller based on an ambient temperature in summer.

In some embodiments, a fan 2 may be further disposed in the air conditioner box of the passenger compartment. The fan 2 may directly blow ambient air to the passenger compartment, or may first cool the ambient air through the evaporator before blowing the ambient air, or may first heat the ambient air through the heater core before blowing the ambient air.

In some embodiments, the thermal management system may further include a throttle valve, for example, a throttle valve EXV_H disposed on an input end side of the evaporator is located and a throttle valve EXV_B disposed on a side on which the port d₂₁ of the battery chiller is located. The throttle valve EXV_H is configured to control a flow of refrigerant liquid output from the second heat exchange pipe d₁₃d₁₄ of the water-cooled condenser to the evaporator. When the throttle valve EXV_H is completely turned off, the refrigerant liquid output from the second heat exchange pipe d₁₃d₁₄ of the water-cooled condenser is not transmitted to the evaporator. Similarly, the throttle valve EXV_B is configured to control a flow of refrigerant liquid output from the second heat exchange pipe d₁₃d₁₄ of the water-cooled condenser to the first heat exchange pipe d₂₁d₂₂ of the battery chiller. When the throttle valve EXV_B is completely turned off, the refrigerant liquid output from the second heat exchange pipe d₁₃d₁₄ of the water-cooled condenser is not transmitted to the first heat exchange pipe d₂₁d₂₂ of the battery chiller.

In some embodiments, the thermal management system may further include a kettle, an input end of the kettle is connected to the electric actuator, and an output end of the kettle is connected to the second water pump EWP_P. The kettle is a container with an upper opening, the input end of the kettle is located on an upper side of the kettle, and the output end of the kettle is located on a lower side of the kettle. When a gas-liquid mixture flowing out from the electric actuator enters the kettle through the input end of the kettle, liquid in the gas-liquid mixture flows into a lower end of the kettle due to gravity, and then flows out to the pump through the output end of the kettle, and gas in the gas-liquid mixture is left in the kettle. In this way, the kettle can purify coolant liquid in the fourth pipeline L₄, and when the coolant liquid is more purified, a temperature adjustment effect of the fourth pipeline L₄ is better.

In some embodiments, the thermal management system may further include a liquid storage tank. The liquid storage tank is disposed on a side on which the port d₁₄ of the water-cooled condenser is located, is configured to store redundant refrigerant liquid in a loop in which the liquid storage tank is located, and may be further configured to adjust an amount of the stored refrigerant liquid based on a current temperature of the loop, so that a refrigerant currently flowing in the loop matches a refrigerant corresponding to a required temperature.

In some embodiments, to learn an actual temperature and pressure status at each key position in the thermal management system, so as to determine whether a temperature control effect needs to be adjusted in a next step, a temperature sensor or a pressure sensor may be further disposed at each key position in the thermal management system. For example, a temperature sensor Tpₒ is disposed on a side on which the port d₂₄ of the battery chiller is located, a temperature sensor Tpᵢ is disposed on an inlet end side of the electric actuator, a temperature sensor Tbᵢ is disposed on an inlet end side of the battery, a temperature sensor Tbₒ is disposed on an outlet end side of the battery, a pressure sensor PTᵢ is disposed on an inlet end side of the compressor, and a pressure sensor PTₒ is disposed on an outlet end side of the compressor. The temperature sensor is configured to detect a temperature of liquid that flows at a current position on a pipeline on which the temperature sensor is located, and the pressure sensor is configured to detect a pressure of liquid that flows at a current position on a pipeline on which the pressure sensor is located, so that the thermal management system implements precise temperature control based on the temperature and the pressure.

It should be understood that the foregoing illustrated key positions are merely examples for description and that this application is not limited to these key positions. In addition, because these sensors are not closely related to the thermal management solution to be described in embodiments of this application, these sensors are not described in detail in embodiments of this application.

In some embodiments, a controller (not shown in FIG. 1) is further disposed in the thermal management system, and the controller is separately connected to the compressor, a control end of each valve, a control end of each water pump, an output end of each temperature sensor, and an output end of each pressure sensor. The controller may obtain the temperature and the pressure at each key position from the output end of each temperature sensor and the output end of each pressure sensor, and may determine and implement a control policy of a current temperature mode based on the temperature and the pressure at each key position, to control the compressor, each valve, and each water pump according to the control policy. In addition, in a control process, the controller may further determine, in real time based on the temperature and the pressure at each key position, whether the current control policy meets a requirement of the current temperature mode. If the current control policy does not meet the requirement, the controller may further perform real-time adjustment, to adjust the temperature and the pressure to the current temperature mode as much as possible.

In the foregoing plurality of pipelines, pipelines other than the first pipeline L₁ and the second pipeline L₂ on which the compressor is located, for example, the third pipeline L₃ to the seventh pipeline L₇, a pipeline between the branch point P₁ and the branch point P₃, and a pipeline between the branch point P₂ and the third end d₃₃ of the first three-way valve T-valvel, have a flowing coolant, and therefore are also referred to as coolant pipelines. The first pipeline L₁ and the second pipeline L₂ on which the compressor is located are also referred to as refrigerant pipelines, and are used to flow a refrigerant, for example, a current mainstream refrigerant R134a or R1234yf. The compressor may compress refrigerant liquid flowing into an inlet of the compressor into high-temperature and high-pressure refrigerant gas, to implement a heat pump function. However, when the electric vehicle is in an ultra-low-temperature environment at -18°C or -20°C or below, a pressure of the refrigerant is lower than one atmospheric pressure, causing a pressure at the inlet of the compressor to be lower than one atmospheric pressure. The pressure is lower than a pressure (about two or three atmospheric pressures) required for starting the compressor, and consequently the compressor cannot be started. In other words, in the ultra-low-temperature environment, the compressor in the thermal management system cannot be directly started to heat the heater core or the battery. Therefore, to heat the heater core or the battery in the ultra-low-temperature environment, a heater like an electric heater, a water (Water) heater, or a PTC heater further needs to be disposed in the thermal management system.

Still refer to FIG. 1. The heater is disposed on the third pipeline L₃ between an input end of the heater core and an output end of the first water pump EWP_H in the industry. When it is determined that a current environment is the ultra-low-temperature environment, the heater is used to directly heat the heater core and/or the battery. A specific control logic is as follows:

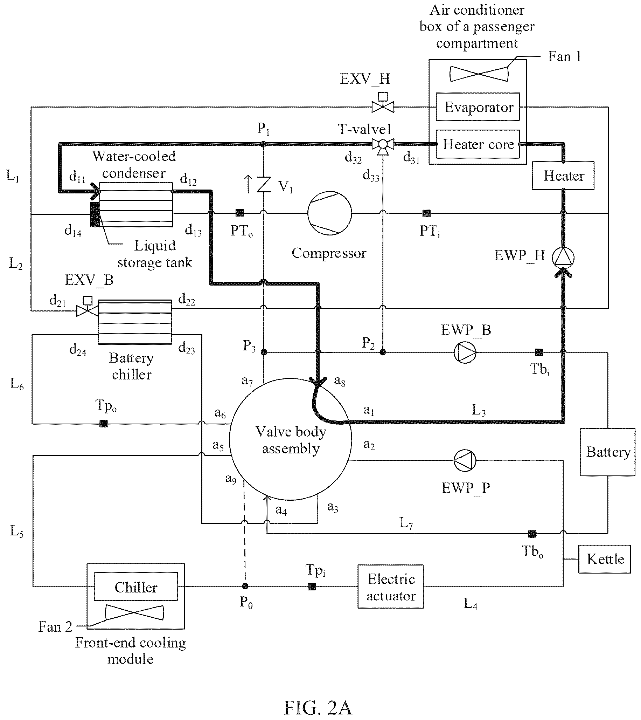

FIG. 2A is a diagram of a pipeline flow relationship for implementing ultra-low-temperature heating of a passenger compartment through the thermal management system provided in the industry. In a specific implementation, after detecting that a user enables an air conditioner heating mode, the controller first obtains a temperature that is collected by the temperature sensor Tpₒ and that is of an outlet end d₂₄ of the second heat exchange pipe d₂₃d₂₄ of the battery chiller, and when the temperature is lower than -18°C or -20°C, controls the heater and the first water pump EWP_H to be started, controls the first end d₃₁ of the first three-way valve T-valvel to be connected to the second end d₃₂ of the first three-way valve T-valvel, and controls the eighth end as of the valve body component to be connected to the first end a₁ of the valve body component. In this way, a coolant output from an outlet end of the first water pump EWP_H flows to the heater core after being heated by the heater, to heat the heater core. Further, ambient air heated by the heater core is blown out to the passenger compartment through the fan 1, to heat the passenger compartment. Then, the coolant flowing through the heater core flows back to the first water pump EWP_H after sequentially passing through the first end d₃₁ of the first three-way valve T-valvel, the second end d₃₂ of the first three-way valve T-valvel, the first heat exchange pipe d₁₁d₁₂ of the water-cooled condenser, the eighth end as of the valve body component, and the first end a₁ of the valve body component.

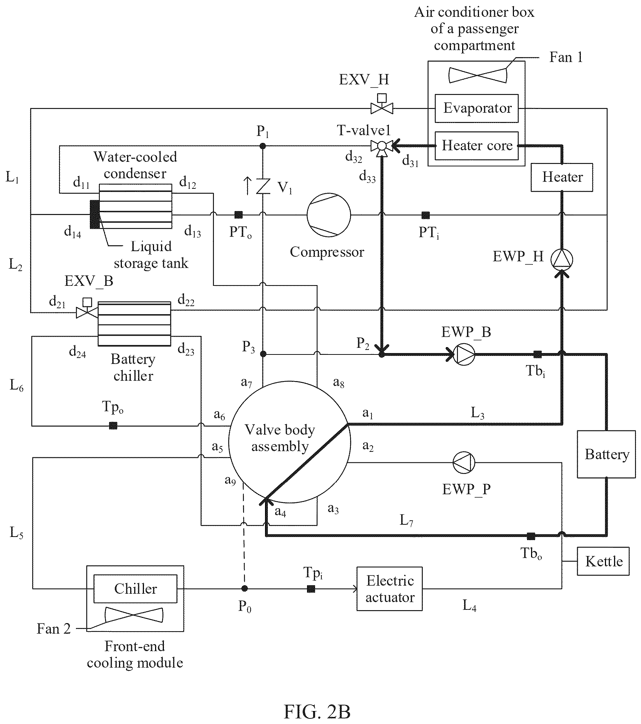

FIG. 2B is a diagram of a pipeline flow relationship for implementing ultra-low-temperature heating of the battery through the thermal management system provided in the industry. In a specific implementation, after detecting that a user indicates to heat the battery, the controller also first obtains a temperature that is collected by the temperature sensor Tpₒ and that is of an outlet end d₂₄ of the second heat exchange pipe d₂₃d₂₄ of the battery chiller, and when the temperature is lower than -18°C or -20°C, controls the heater, the first water pump EWP_H, and the third water pump EWP_B to be started, controls the first end d₃₁ of the first three-way valve T-valvel to be connected to the third end d₃₃ of the first three-way valve T-valvel, and controls the first end a₁ of the valve body component to be connected to the fourth end a₄ of the valve body component. In this way, a coolant output from an outlet end of the first water pump EWP_H flows to the heater core after being heated by the heater. Because an air conditioner is not turned on in this case, the heater core does not work, but directly serves as an intermediate pipeline to transfer the heated coolant to the first end d₃₁ of the first three-way valve T-valve1. Then, the coolant flows out from the third end d₃₃ of the first three-way valve T-valvel and enters the third water pump EWP_B, and the third water pump EWP_B drives the coolant to flow into the battery, to heat the battery. The coolant flowing out from an outlet end of the battery flows back to the first water pump EWP_H after sequentially passing through the first end a₁ of the valve body component and the fourth end a₄ of the valve body component.

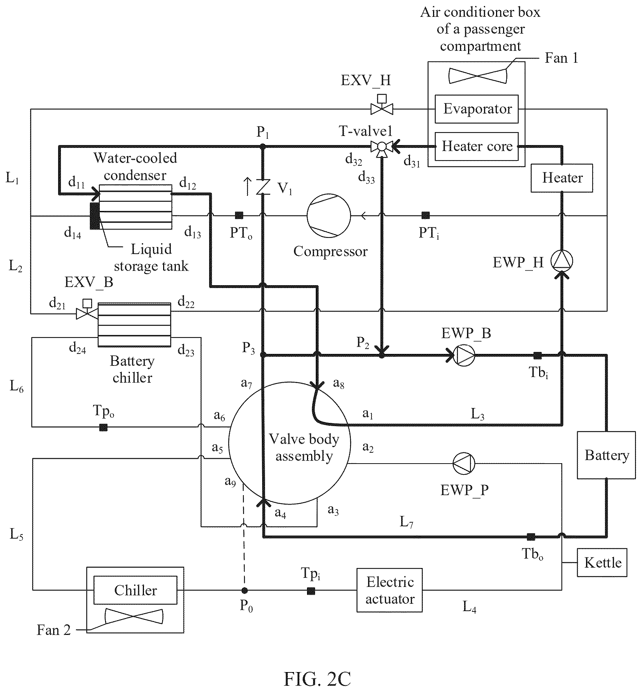

FIG. 2C is a diagram of a pipeline flow relationship for implementing ultra-low-temperature heating of both a passenger compartment and the battery through the thermal management system provided in the industry. In a specific implementation, after detecting that a user enables an air conditioner heating mode and indicates to heat the battery, the controller first obtains a temperature that is collected by the temperature sensor Tpₒ and that is of an outlet end d₂₄ of the second heat exchange pipe d₂₃d₂₄ of the battery chiller, and when the temperature is lower than -18°C or -20°C, controls the heater, the first water pump EWP_H, and the third water pump EWP_B to be started, controls the first end d₃₁ of the first three-way valve T-valvel to be separately connected to the second end d₃₂ of the first three-way valve T-valvel and the third end d₃₃ of the first three-way valve T-valvel, controls the first end a₁ of the valve body component to be connected to the eighth end as of the valve body component, and controls the fourth end a₄ of the valve body component to be connected to the seventh end a₇ of the valve body component. In this way, a coolant at an outlet end of the first water pump EWP_H flows to the heater core after being heated by the heater, to heat the heater core. Further, ambient air heated by the heater core is blown out to the passenger compartment through the fan 1, to heat the passenger compartment. Then, the coolant flowing through the heater core flows into the first end d₃₁ of the first three-way valve T-valvel. One part of the coolant flows to the first heat exchange pipe d₁₁d₁₂ of the water-cooled condenser through the second end d₃₂ of the first three-way valve T-valvel, and then returns to the first water pump EWP_H after passing through the eighth end as of the valve body component and the first end a₁ of the valve body component. The other part of the coolant flows to the third water pump EWP_B through the third end d₃₃ of the first three-way valve T-valvel, and then enters the battery to heat the battery. The coolant flowing out from an outlet end of the battery enters the fourth end a₄ of the valve body component, and then flows out from the seventh end a₇ of the valve body component, where one part of the coolant flows back to the third water pump EWP_B, and the other part passes through the one-way valve V₁ and is merged into the first heat exchange pipe d₁₁d₁₂ of the water-cooled condenser.

It can be learned from the foregoing analysis that, regardless of whether the passenger compartment is separately heated, or the battery is separately heated, or both the passenger compartment and the battery are heated, the heater is directly used in the industry to heat the passenger compartment and/or the battery to a target temperature. However, in this manner in which heating is performed simply through the heater, a large amount of heat is definitively required. As a result, when the thermal management system is designed, a heater of a large specification also needs to be selected. However, power consumption and costs required by the heater of the large specification are both large. This is definitely unfavorable to a design concept of low power consumption and low costs of the electric vehicle.

In view of this, embodiments of this application provide a thermal management system. In the thermal management system, a heater is disposed on a target pipeline that can form a loop with a second heat exchange pipe d₂₃d₂₄ of a battery chiller. When it is determined that a current environment is an ultra-low-temperature environment, a connection relationship between the heater, one or more water pumps, and each valve body in the thermal management system is first controlled, so that the heater and the second heat exchange pipe of the battery chiller form a loop, to heat the second heat exchange pipe of the battery chiller through the heater. Then, in the process of heating the second heat exchange pipe, after it is determined that a temperature of the loop in which the second heat exchange pipe of the battery chiller is located is not lower than a start temperature of a compressor, the compressor in the thermal management system is controlled to be started, so that the compressor, a first heat exchange pipe of the battery chiller, and a second heat exchange pipe of a water-cooled condenser form a loop, to heat the second heat exchange pipe of the water-cooled condenser through the compressor. Finally, after the compressor is controlled to be started, a connection relationship between each water pump and each valve body in the thermal management system is controlled, so that a to-be-heated device and a first heat exchange pipe of the water-cooled condenser form a loop, to heat the to-be-heated device by using heat exchanged from the second heat exchange pipe of the water-cooled condenser through the first heat exchange pipe of the water-cooled condenser.

It can be learned that, according to the thermal management solution in embodiments of this application, in the ultra-low-temperature environment, the second heat exchange pipe of the battery chiller may be first heated through the heater, and after a heating temperature is sufficient to be used to start the compressor, the compressor may be heated through a heat exchange operation between the second heat exchange pipe and the first heat exchange pipe of the battery chiller, to start the compressor, and then the started compressor may be used to assist in heating a heater core and/or a battery. In this way, according to this design idea, specifications of the heater only need to meet a requirement for starting the compressor, and does not need to be set to a large value. This helps reduce power consumption and costs of the thermal management system.

It should be noted that the target pipeline may be any pipeline existing in the thermal management system, for example, any pipeline from a first pipeline L₁ to a seventh pipeline L₇. Alternatively, the target pipeline may include at least two pipelines in the thermal management system. To be specific, the heater is separately disposed on the at least two pipelines, to combine the at least two heaters to improve heating efficiency, so as to start the compressor as soon as possible.

In addition, the thermal management solution in embodiments of this application may be classified into a non-preheating thermal management solution and a preheating thermal management solution. Non-preheating and preheating herein are intended for a scenario in which a passenger compartment is heated. The non-preheating thermal management solution means that the heater core is directly used to assist in heating the passenger compartment. The preheating thermal management solution means that before the heater core is used to assist in heating the passenger compartment, another component is used to heat the passenger compartment first. For example, an evaporator is used to heat the passenger compartment for a first time, and then the compressor is used to heat the passenger compartment for a second time.

The following specifically describes several possible non-preheating thermal management solutions and preheating thermal management solutions by using an example in which the heater is disposed on a single pipeline.

### Non-preheating thermal management solution 1

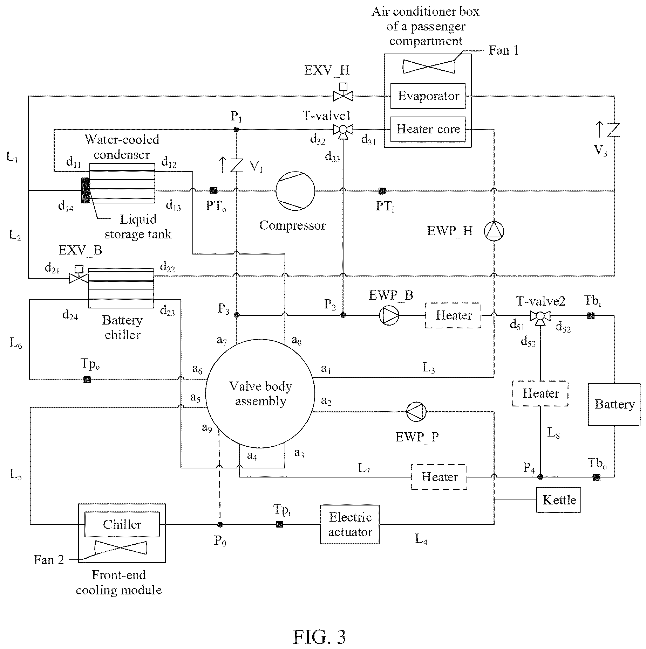

FIG. 3 is an architectural diagram of a non-preheating thermal management system according to an embodiment of this application. In addition to the compressor, the water-cooled condenser, the battery chiller, the valve body component, the first three-way valve T-vavle1, the one-way valve V₁, the first water pump EWP_H, the second water pump EWP_P, and the third water pump EWP_B described in the foregoing content, the thermal management system may include a second three-way valve T-valve2, a heater, and a first valve body V₃.

The second three-way valve T-valve2 is disposed on a seventh pipeline L₇, a first end d₅₁ of the second three-way valve T-valve2 is connected to an output end of the third water pump EWP_B, a second end d₅₂ of the second three-way valve T-valve2 is connected to an input end of a battery, and a third end d₅₃ of the second three-way valve T-valve2 is connected to a branch point P₄ on the seventh pipeline L₇ through an eighth pipeline Ls. The branch point P₄ is located between an output end of the battery and a fourth end a₄ of the valve body component on the seventh pipeline L₇.

The heater may be disposed on the seventh pipeline L₇ between a seventh end a₇ of the valve body component and the first end d₅₁ of the second three-way valve T-valve2, or may be disposed on the eighth pipeline L₈, or may be disposed on the seventh pipeline L₇ between the branch point P₄ and the fourth end a₄ of the valve body component. This is not specifically limited.

The first valve body V₃ is disposed on a first pipeline L₁, a first end of the first valve body V₃ is separately connected to an input end of the compressor and a port d₂₂ of the battery chiller, and a second end of the first valve body V₃ is connected to an evaporator. The first valve body V₃ may be a control valve like a pressure control valve, a solenoid valve, or a gas control valve, or may be a one-way valve. When the first valve body V₃ is a one-way valve, still refer to FIG. 3. An output end of the one-way valve is the first end of the first valve body V₃, and an input end of the one-way valve is the second end of the first valve body V₃.

Further, a controller may be disposed in the thermal management system. The controller is separately connected to the compressor, the heater, the valve body component, the first three-way valve T-valvel, the second three-way valve T-valve2, the first water pump EWP_H, the second water pump EWP_P, the third water pump EWP_B, an output end of each pressure sensor, and an output end of each temperature sensor. In addition, when the first valve body V₃ is a control valve, the controller may be further connected to a control end of the first valve body V₃. The controller can control startup of the compressor, heater, and each water pump and a port connection relationship between the valve bodies, to implement a mode of heating only the passenger compartment, a mode of heating only the battery, or a mode of heating both the passenger compartment and the battery in an ultra-low-temperature environment. The following uses an example in which the heater is disposed on the eighth pipeline L₈ and the first valve body V₃ is a one-way valve, to separately describe in detail specific control logic for implementing each heating mode in the non-preheating thermal management solution 1.

### Mode of heating only the passenger compartment

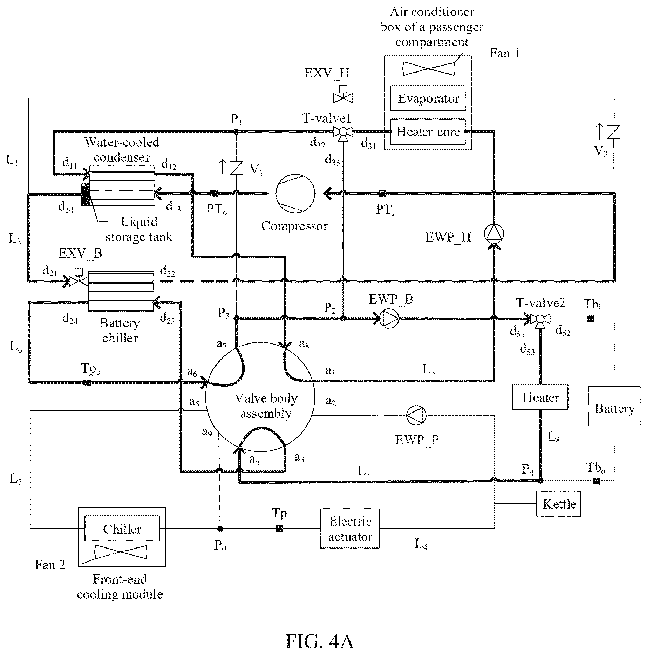

FIG. 4A is a diagram of a pipeline flow relationship for implementing the mode of heating only the passenger compartment, and entire control logic corresponding to the mode includes the following content.

When determining that the passenger compartment needs to be heated currently, the controller first obtains a coolant temperature that is collected by a temperature sensor Tpₒ and that is at an outlet end of the second heat exchange pipe d₂₃d₂₄ of the battery chiller. When the temperature is lower than a first temperature threshold (indicating an ultra-low-temperature environment, which may be usually set to -18°C or -20°C), it indicates that a current environment is the ultra-low-temperature environment, and the compressor cannot be directly started. In this case, the controller may control the heater and the third water pump EWP_B to be started, control the first end d₅₁ of the second three-way valve T-valve2 to be connected to the third end d₅₃ of the second three-way valve T-valve2, control a third end a₃ of the valve body component to be connected to the fourth end a₄ of the valve body component, and control a sixth end a₆ of the valve body component to be connected to the seventh end a₇ of the valve body component, so that a loop is formed between the heater and the second heat exchange pipe d₂₃d₂₄ of the battery chiller. In this way, a coolant output from an outlet end of the third water pump EWP_B enters the heater after passing through the first end d₅₁ of the second three-way valve T-valve2 and the third end d₅₃ of the second three-way valve T-valve2, enters the fourth end a₄ of the valve body component after being heated by the heater, and then flows out from the third end a₃ of the valve body component and enters the second heat exchange pipe d₂₃d₂₄ of the battery chiller, to heat the second heat exchange pipe d₂₃d₂₄ of the battery chiller. The coolant flowing out from the second heat exchange pipe d₂₃d₂₄ of the battery chiller returns to the third water pump EWP_B after sequentially passing through the sixth end a₆ of the valve body component and the seventh end a₇ of the valve body component.

As the second heat exchange pipe d₂₃d₂₄ of the battery chiller is continuously heated, the controller continues to periodically obtain the coolant temperature that is collected by the temperature sensor Tpₒ and that is at the outlet end of the second heat exchange pipe d₂₃d₂₄. When the temperature is not lower than a second temperature threshold (indicating a start temperature of the compressor, which may be usually set to -15°C), it indicates that the current temperature of the second heat exchange pipe d₂₃d₂₄ of the battery chiller reaches the start temperature of the compressor. Further, it means that after heat exchange with the second heat exchange pipe d₂₃d₂₄, a temperature of a refrigerant flowing out from a first heat exchange pipe d₂₁d₂₂ of the battery chiller to an inlet end of the compressor is sufficient to be used to start the compressor. In this case, the controller may control the compressor to be started, so that a loop is formed between the compressor and the first heat exchange pipe d₂₁d₂₂ of the battery chiller. In this way, after the first heat exchange pipe d₂₁d₂₂ of the battery chiller absorbs heat of the coolant flowing in the second heat exchange pipe d₂₃d₂₄ of the battery chiller, heated refrigerant liquid is obtained. The refrigerant liquid is further compressed into high-temperature and high-pressure refrigerant gas by the compressor, then flows into a second heat exchange pipe d₁₃d₁₄ of the water-cooled condenser, heats the second heat exchange pipe d₁₃d₁₄ of the water-cooled condenser, and then returns to the first heat exchange pipe d₂₁d₂₂ of the battery chiller.

After controlling the compressor to be started, the controller may further control the first water pump EWP_H to be started, control the first end d₃₁ of the first three-way valve T-valve1 to be connected to the second end d₃₂ of the first three-way valve T-valvel, and control the eighth end as of the valve body component to be connected to the first end a₁ of the valve body component, so that a loop is formed between a heater core and the first heat exchange pipe d₁₁d₁₂ of the water-cooled condenser. In this way, after the first heat exchange pipe d₁₁d₁₂ of the water-cooled condenser absorbs heat of the refrigerant flowing in the second heat exchange pipe d₁₃d₁₄ of the water-cooled condenser, a heated coolant is obtained, and the heated coolant flows into the heater core after sequentially passing through the eighth end as of the valve body component, the first end a₁ of the valve body component, and the first water pump EWP_H, to heat the heater core. In this way, a fan 1 blows ambient air heated by the heater core out to the passenger compartment, to heat the passenger compartment. The coolant flowing through the heater core sequentially passes through the first end d₃₁ of the first three-way valve T-valvel and the second end d₃₂ of the first three-way valve T-valvel, and then returns to the first heat exchange pipe d₁₁d₁₂ of the water-cooled condenser.

In conclusion, when the mode of heating only the passenger compartment is implemented, the heater needs to heat only the coolant flowing in the second heat exchange pipe d₂₃d₂₄ of the battery chiller to a temperature not lower than the start temperature of the compressor, to heat the refrigerant at the inlet of the compressor through the heat exchange operation between the first heat exchange pipe d₂₁d₂₂ of the battery chiller and the second heat exchange pipe d₂₃d₂₄ of the battery chiller, so as to start the compressor. After the compressor is started, the compressor may be used to assist in heating the heater core. It can be learned that, in this heating manner, specifications of the heater only need to meet a requirement for starting the compressor, and does not need to be set to a large value. Therefore, the specification of the heater that needs to be disposed in the thermal management system can be effectively reduced, to reduce power and costs of the thermal management system.

### Mode of heating only the battery

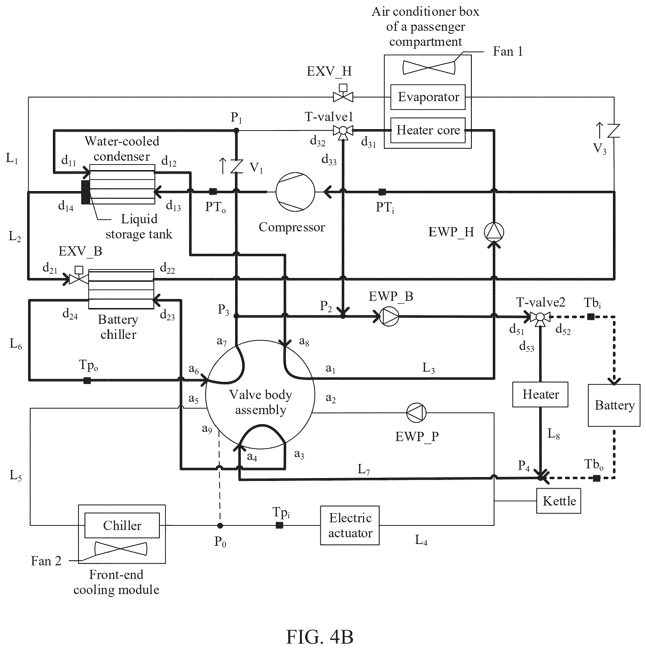

FIG. 4B is a diagram of a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started, if the mode of heating only the battery is to be implemented, the controller controls the first end d₅₁ of the second three-way valve T-valve2 to be connected to the second end d₅₂ of the second three-way valve T-valve2, so that the battery and the heater form a loop. In this way, a heated coolant in the loop in which the heater is located flows into the first end d₅₁ of the second three-way valve T-valve2 through the third water pump EWP_B. Then, one part of the coolant returns to the loop in which the heater is located through the third end d₅₃ of the second three-way valve T-valve2, so that the heater cyclically heats the coolant. The other part flows into the battery through the second end d₅₂ of the second three-way valve T-valve2, to heat the battery. Then, the coolant flowing out from the battery also returns to the loop in which the heater is located at the branch point P₄.

Further, because specifications of the heater in the thermal management system may be small, a heating capability of the heater is limited, and the battery cannot be fully heated only by relying on the heater. Therefore, after the first end d₅₁ of the second three-way valve T-valve2 is controlled to be connected to the second end d₅₂ of the second three-way valve T-valve2, the controller may further control the first water pump EWP_H to be started, control the first end d₃₁ of the first three-way valve T-valvel to be connected to the third end d₃₃ of the first three-way valve T-valvel, and control the first end a₁ of the valve body component to be connected to the eighth end as of the valve body component. In this way, after the first heat exchange pipe d₁₁d₁₂ of the water-cooled condenser absorbs heat of a refrigerant that is heated by the compressor through compression and that flows in the second heat exchange pipe d₁₃d₁₄ of the water-cooled condenser, the heated coolant is obtained, and the heated coolant flows into the heater core after sequentially passing through the eighth end as of the valve body component, the first end a₁ of the valve body component, and the first water pump EWP_H. In this case, because an air conditioner is not turned on, the heater core does not work, but serves only as an intermediate pipeline to transfer the heated coolant to the first end d₃₁ of the first three-way valve T-valve1. Then, the coolant flows out from the third end d₃₃ of the first three-way valve T-valvel, and then is merged into the third water pump EWP_B. The coolant flowing out from the outlet end of the third water pump EWP_B flows into the first end d₅₁ of the second three-way valve T-valve2. Then, one part of the coolant is merged into the loop in which the heater is located through the third end d₅₃ of the second three-way valve T-valve2, and the coolant is cyclically heated together with the heater. The other part flows into the battery through the second end d₅₂ of the second three-way valve T-valve2, to heat the battery for a second time together with the compressor and the heater. Then, after the coolant flowing out from the battery and the coolant heated by the heater merge at the branch point P₄, the coolants flow out from the seventh end a₇ of the valve body component after sequentially passing through the fourth end a₄ of the valve body component, the third end a₃ of the valve body component, the second heat exchange pipe d₂₃d₂₄ of the battery chiller, and the sixth end a₆ of the valve body component. Then, one part of the coolants returns to the third water pump EWP_B, and the other part returns to the first heat exchange pipe d₁₁d₁₂ of the water-cooled condenser through the one-way valve V₁.

As described above, the first end d₅₁ of the second three-way valve T-valve2 needs to be connected to the second end d₅₂ of the second three-way valve T-valve2, and also needs to be connected to the third end d₅₃ of the second three-way valve T-valve2. In other words, both liquid output by the second end d₅₂ of the second three-way valve T-valve2 and liquid output by the third end d₅₃ of the second three-way valve T-valve2 come from the first end d₅₁ of the second three-way valve T-valve2. Therefore, the second three-way valve T-valve2 may be configured as a shunt valve.

In an example, proportions of coolants obtained by the second end d₅₂ of the second three-way valve T-valve2 and the third end d₅₃ of the second three-way valve T-valve2 from the first end d₅₁ of the second three-way valve T-valve2 may be specifically determined by a temperature at the first end d₅₁ of the second three-way valve T-valve2. For example, when the compressor is not started, the controller turns on the heater, and controls all the coolant at the first end d₅₁ of the second three-way valve T-valve2 to flow out to the third end d₅₃ of the second three-way valve T-valve2, to use all the heating capability of the heater to start the compressor, so as to accelerate startup of the compressor. However, when the compressor is just started, the compressor still needs some time to heat a loop in which the compressor is located. Therefore, the controller may control most of the coolant at the first end d₅₁ of the second three-way valve T-valve2 to flow out to the third end d₅₃ of the second three-way valve T-valve2, and a small part to flow out to the second end d₅₂ of the second three-way valve T-valve2, to use one part of the heating capability of the heater to heat the battery, and reserve most of the heating capability to assist in heating for the startup of the compressor, so that the battery is heated for a first time by using a power margin of the battery during the startup of the compressor. Then, after the compressor is completely started, as the compressor continuously performs cyclic heating, a coolant temperature at the first end d₅₁ of the second three-way valve T-valve2 is driven to increase continuously. In this case, the controller may gradually decrease the coolant flowing from the first end d₅₁ of the second three-way valve T-valve2 to the third end d₅₃ of the second three-way valve T-valve2, and increase the coolant flowing out from the first end d₅₁ of the second three-way valve T-valve2 to the second end d₅₂ of the second three-way valve T-valve2, to gradually transfer heating capabilities of the heater and the compressor to a function of heating the battery.

In conclusion, implementing the mode of heating only the battery according to the foregoing control logic can effectively reduce specifications of the heater that needs to be disposed in the thermal management system, and can fully use heat of the heater and the compressor in an entire thermal management periodicity, to improve battery heating efficiency.

### Mode of heating both the passenger compartment and the battery

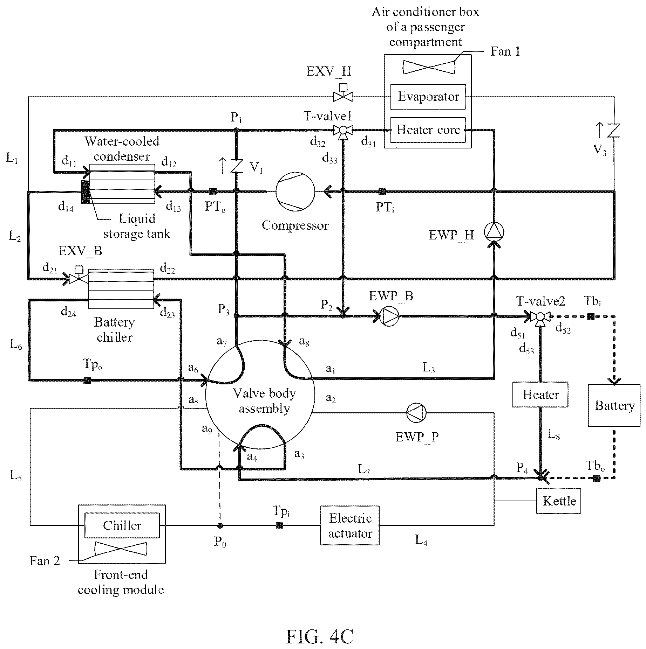

FIG. 4C is a diagram of a pipeline flow relationship for implementing the mode of heating both the passenger compartment and the battery. In this mode, control logic for controlling the compressor to be started and control logic before the startup are completely the same as the control logic in the mode of heating only the passenger compartment and the mode of heating only the battery, and control logic after the compressor is controlled to be started is different from the control logic in the mode of heating only the passenger compartment and the mode of heating only the battery. Main differences are as follows:

After the compressor is controlled to be started, if the mode of heating both the passenger compartment and the battery is to be implemented, the controller may control the first water pump EWP_H to be started, control the first end d₃₁ of the first three-way valve T-valvel to be connected to the second end d₃₂ of the first three-way valve T-valvel, and control the first end a₁ of the valve body component to be connected to the eighth end as of the valve body component, so that a loop is formed between the first heat exchange pipe d₁₁d₁₂ of the water-cooled condenser and the heater core, and the heater core is heated by using heat absorbed by the first heat exchange pipe d₁₁d₁₂ of the water-cooled condenser from the second heat exchange pipe d₁₃d₁₄ of the water-cooled condenser, to heat the passenger compartment. In addition, the controller may further control the first end d₅₁ of the second three-way valve T-valve2 to be connected to the second end d₅₂ of the second three-way valve T-valve2, so that a loop is formed between the battery and the heater, and the heater is used to heat the battery for a first time.

After controlling the first end d₅₁ of the second three-way valve T-valve2 to be connected to the second end d₅₂ of the second three-way valve T-valve2, the controller may further control the first end d₃₁ of the first three-way valve T-valvel to be connected to the third end d₃₃ of the first three-way valve T-valve1. In this way, after flowing through the heater core, a heated coolant from the first heat exchange pipe d₁₁d₁₂ of the water-cooled condenser is merged into the loop in which the heater is located as soon as possible. The compressor performs compression to generate heat, to efficiently heat the coolant together with the heater. In addition, the heat generated by the compressor through compression participates in battery heating as soon as possible, so that the battery is heated for a second time through both the compressor and the heater, to improve battery heating efficiency.

It should be noted that, the control logic after the compressor is controlled to be started in the mode of heating both the passenger compartment and the battery may be considered as a combination form of the control logic in the mode of heating only the passenger compartment and the mode of heating only the battery. For a specific loop flow relationship, refer to related descriptions in the mode of heating only the passenger compartment and the mode of heating only the battery. Details are not described herein again.

In addition, similar to the mode of heating only the battery, the first end d₃₁ of the first three-way valve T-valvel needs to be connected to the second end d₃₂ of the first three-way valve T-valvel, and also needs to be connected to the third end d₃₃ of the first three-way valve T-valvel. In other words, both liquid output by the second end d₃₂ of the first three-way valve T-valvel and liquid output by the third end d₃₃ of the first three-way valve T-valvel come from the first end d₃₁ of the first three-way valve T-valvel. Therefore, the first three-way valve T-valvel may be configured as a shunt valve.

In an example, proportions of coolants obtained by the second end d₃₂ of the first three-way valve T-valvel and the third end d₃₃ of the first three-way valve T-valvel from the first end d₃₁ of the first three-way valve T-valvel may be specifically determined by a temperature difference between a current temperature and a target temperature of the passenger compartment. For example, when the temperature difference between the current temperature and the target temperature of the passenger compartment is large, the controller may control most of the coolant at the first end d₃₁ of the first three-way valve T-valvel to flow out to the second end d₃₂ of the first three-way valve T-valvel, and a small part to flow out to the third end d₃₃ of the first three-way valve T-valvel, so that most of the heating capability of the compressor is used to heat the passenger compartment, to improve driving experience of a user. However, as the current temperature of the passenger compartment gradually approaches the target temperature, the controller may gradually decrease the coolant flowing out to the second end d₃₂ of the first three-way valve T-valvel, and gradually increase the coolant flowing out to the third end d₃₃ of the first three-way valve T-valvel, to transfer most of the heating capability of the compressor to battery heating when a temperature requirement of the user for the passenger compartment is basically met, so as to improve a battery heating effect.

In the non-preheating thermal management solution 1, the heater is disposed on a battery-related pipeline, for example, disposed on the seventh pipeline L₇ on which the battery is located, or disposed on the eighth pipeline L₈ connected to the battery in parallel. In addition, when the heater is disposed, the second three-way valve T-valve2 and the first valve body V₃ are further disposed jointly. The second three-way valve T-valve2, the first valve body V₃, and the original first three-way valve T-valvel and valve body component in the thermal management system are controlled, so that the compressor can be started through the heater first at an ultra-low-temperature, and then the compressor assists in heating the passenger compartment and/or the battery.

### Non-preheating thermal management solution 2

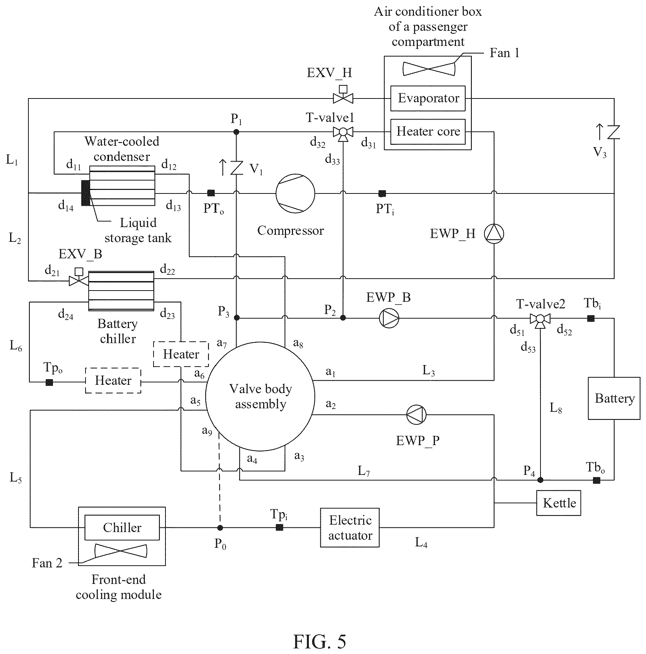

FIG. 5 is an architectural diagram of another non-preheating thermal management system according to an embodiment of this application. A difference between the thermal management system and that in the non-preheating thermal management solution 1 lies in that a heater is disposed on a sixth pipeline L₆, for example, may be disposed between a sixth end a₆ of a valve body component and a port d₂₄ of a battery chiller, or may be disposed between a port d₂₃ of the battery chiller and a third end a₃ of the valve body component.

In addition, except that the heater is different from that in the non-preheating thermal management solution 1, a second three-way valve T-valve2, a first valve body V₁, a compressor, a water-cooled condenser, the battery chiller, the valve body component, a first three-way valve T-vavle1, a one-way valve V₁, a first water pump EWP_H, a second water pump EWP_P, and a third water pump EWP_B in the non-preheating thermal management solution 2 are all the same as those in the non-preheating thermal management solution 1. Details are not described herein again.

In addition, in an ultra-low-temperature environment, control logic for implementing the mode of heating only the passenger compartment, the mode of heating only the battery, and the mode of heating both the passenger compartment and the battery in the non-preheating thermal management solution 2 may be the same as that in the non-preheating thermal management solution 1. For details, refer to related descriptions of the modes in the non-preheating thermal management solution 1. Details are not described herein again.

### Non-preheating thermal management solution 3

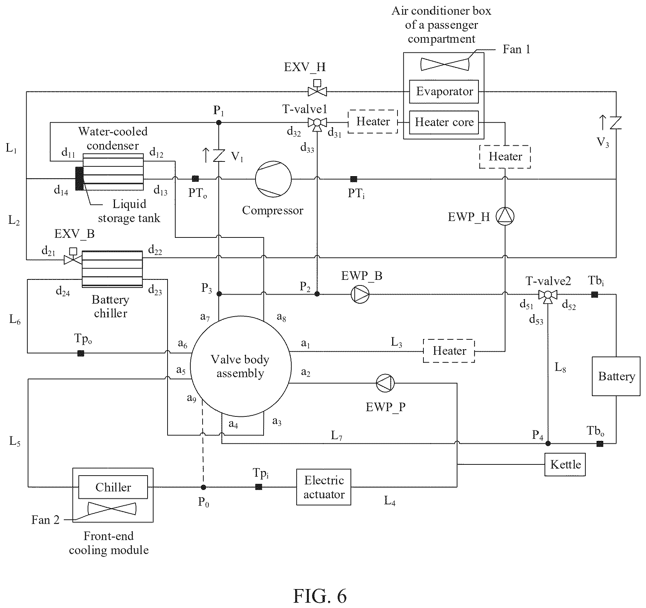

FIG. 6 is an architectural diagram of another non-preheating thermal management system according to an embodiment of this application. A difference between the thermal management system and that in the non-preheating thermal management solution 1 lies in that a heater is disposed on a third pipeline L₃ between a first end a₁ of a valve body component and a first end d₃₁ of a first three-way valve T-valvel, for example, may be disposed between the first end a₁ of the valve body component and an input end of a first water pump EWP_H, or may be disposed between an output end of the first water pump EWP_H and an input end of a heater core, or may be disposed between an output end of the heater core and the first end d₃₁ of the first three-way valve T-valve1.

In addition, except that the heater is different from that in the non-preheating thermal management solution 1, a second three-way valve T-valve2, a first valve body V₁, a compressor, a water-cooled condenser, the battery chiller, the valve body component, a first three-way valve T-vavle1, a one-way valve V₁, a first water pump EWP_H, a second water pump EWP_P, and a third water pump EWP_B in the non-preheating thermal management solution 3 are all the same as those in the non-preheating thermal management solution 1. Details are not described herein again.

For example, the following uses an example in which the heater is disposed on the third pipeline L₃ between the output end of the first water pump EWP_H and the input end of the heater core, to separately describe in detail specific control logic for implementing each heating mode in the non-preheating thermal management solution 3.

### Mode of heating only the passenger compartment

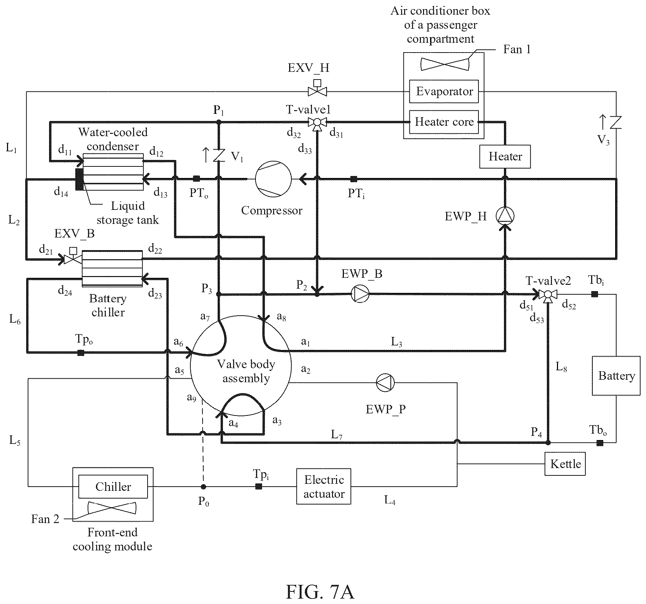

FIG. 7A is a diagram of a pipeline flow relationship for implementing the mode of heating only the passenger compartment, and entire control logic corresponding to the mode may include the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater, the first water pump EWP_H, and the third water pump EWP_B to be started, controls the first end d₃₁ of the first three-way valve T-valve1 to be connected to the third end d₃₃ of the first three-way valve T-valvel, controls the first end d₅₁ of the second three-way valve T-valve2 to be connected to the third end d₅₃ of the second three-way valve T-valve2, controls the third end a₃ of the valve body component to be connected to the fourth end a₄ of the valve body component, controls the sixth end a₆ of the valve body component to be connected to the seventh end a₇ of the valve body component, and controls the first end a₁ of the valve body component to be connected to the eighth end as of the valve body component, so that a loop is formed between the heater, the heater core, and the second heat exchange pipe d₂₃d₂₄ of the battery chiller. In this way, a coolant output from the outlet end of the first water pump EWP_H flows into the heater core after being heated by the heater, to heat the heater core. Further, the fan 1 blows warm air heated by the heater core to the passenger compartment, to heat the passenger compartment for a first time. Then, the coolant flowing out from the heater core flows into the second heat exchange pipe d₂₃d₂₄ of the battery chiller after sequentially passing through the first end d₃₁ of the first three-way valve T-valvel, the third end d₃₃ of the first three-way valve T-valvel, the third water pump EWP_B, the first end d₅₁ of the second three-way valve T-valve2, the third end d₅₃ of the second three-way valve T-valve2, the third end a₃ of the valve body component, and the fourth end a₄ of the valve body component, to heat the second heat exchange pipe d₂₃d₂₄ of the battery chiller. Then, the coolant flowing out from the second heat exchange pipe d₂₃d₂₄ of the battery chiller enters the sixth end a₆ of the valve body component, and then flows out from the seventh end a₇ of the valve body component. One part of the coolant returns to the third water pump EWP_B, and the other part flows into the first heat exchange pipe d₁₁d₁₂ of the water-cooled condenser through the one-way valve V₁, and then returns to the first water pump EWP_H after sequentially passing through the eighth end as of the valve body component and the first end a₁ of the valve body component.

In the process in which the second heat exchange pipe d₂₃d₂₄ of the battery chiller is heated, if the controller determines that the coolant temperature that is collected by the temperature sensor Tpₒ and that is at the outlet end of the second heat exchange pipe d₂₃d₂₄ is not lower than the second temperature threshold, the controller controls the compressor to be started, so that a loop is formed between the compressor and the first heat exchange pipe d₂₁d₂₂ of the battery chiller. In this way, after the first heat exchange pipe d₂₁d₂₂ of the battery chiller absorbs heat of the coolant flowing in the second heat exchange pipe d₂₃d₂₄ of the battery chiller, heated refrigerant liquid is obtained. The refrigerant liquid is further compressed into high-temperature and high-pressure refrigerant gas by the compressor, then enters a second heat exchange pipe d₁₃d₁₄ of the water-cooled condenser, heats the second heat exchange pipe d₁₃d₁₄ of the water-cooled condenser, and then returns to the first heat exchange pipe d₂₁d₂₂ of the battery chiller.

After controlling the compressor to be started, the controller may further control the first end d₃₁ of the first three-way valve T-valvel to be connected to the second end d₃₂ of the first three-way valve T-valvel, so that a loop is formed between the heater core and the first heat exchange pipe d₁₁d₁₂ of the water-cooled condenser. In this way, the first heat exchange pipe d₁₁d₁₂ of the water-cooled condenser absorbs heat of the refrigerant flowing in the second heat exchange pipe d₁₃d₁₄ of the water-cooled condenser, to obtain a heated coolant. The heated coolant flows into the heater after sequentially passing through the eighth end as of the valve body component, the first end a₁ of the valve body component, and the first water pump EWP_H, and the heater further heats the coolant that has been heated by the compressor to obtain a coolant of a higher temperature. Then, the coolant flows into the heater core to heat the heater core, and the fan 1 blows, to the passenger compartment, warm air of the heater core that is jointly heated by the compressor and the heater, to heat the passenger compartment for a second time. Then, the coolant flowing out from the heater core flows into the first end d₃₁ of the first three-way valve T-valvel, one part flows backs to the first heat exchange pipe d₁₁d₁₂ of the water-cooled condenser through the second end d₃₂ of the first three-way valve T-valvel, and the other part is merged into the third water pump EWP_B through the third end d₃₃ of the first three-way valve T-valve1.

In conclusion, when the mode of heating only the passenger compartment is implemented, the heater is first used to heat the heater core for the first time, and the heater is also used to heat the second heat exchange pipe of the battery chiller to start the compressor. Then, after the compressor is started, the compressor is used to assist the heater in heating the heater core for the second time. In this way, limited heat of the heater can be fully used, and heating efficiency can be improved.

### Mode of heating only the battery

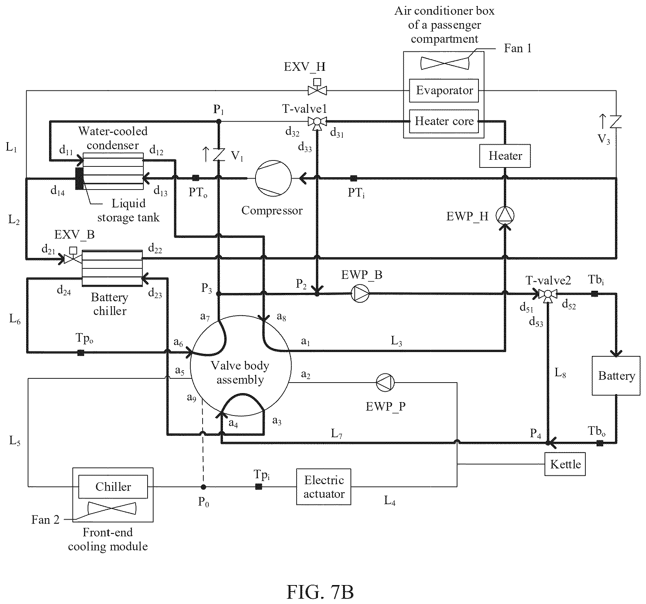

FIG. 7B is a diagram of a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started, if the mode of heating only the battery is to be implemented, the controller controls the first end d₅₁ of the second three-way valve T-valve2 to be connected to the third end d₅₃ of the second three-way valve T-valve2, so that one part of a coolant that enters the first end d₅₁ of the second three-way valve T-valve2 and that is heated by using heat generated by the compressor through compression flows out from the third end d₅₃ of the second three-way valve T-valve2 and participates in the loop for heating the compressor, and the other part flows out from the third end d₅₃ of the second three-way valve T-valve2 and heats the battery.

It should be noted that, when the mode of heating only the battery is implemented, in the control logic before the compressor is controlled to be started, although the coolant heated by the heater flows through the heater core, because the air conditioner is not turned on, the heater core serves only as an intermediate pipeline to transfer the coolant, and is not used to heat the passenger compartment.

### Mode of heating both the passenger compartment and the battery

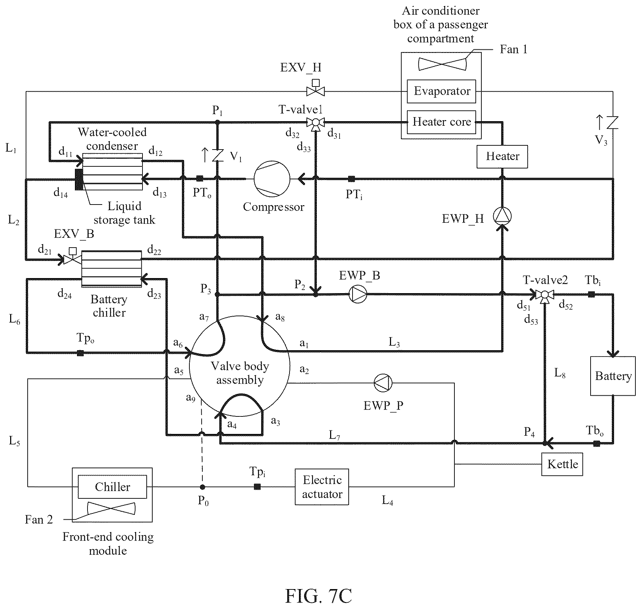

FIG. 7C is a diagram of a pipeline flow relationship for implementing the mode of heating both the passenger compartment and the battery. In this mode, control logic for controlling the compressor to be started and control logic before the startup are completely the same as the control logic in the mode of heating only the passenger compartment and the mode of heating only the battery, and control logic after the compressor is controlled to be started is different from the control logic in the mode of heating only the passenger compartment and the mode of heating only the battery. Main differences are as follows:

After the compressor is controlled to be started, if the mode of heating both the passenger compartment and the battery is to be implemented, the controller may control the first end d₃₁ of the first three-way valve T-valvel to be connected to the second end d₃₂ of the first three-way valve T-valvel, to heat the heater core by using a heated coolant obtained through heat exchange with a loop in which the compressor is located, so as to heat the passenger compartment. In addition, the controller may further control the first end d₅₁ of the second three-way valve T-valve2 to be connected to the third end d₅₃ of the second three-way valve T-valve2, to heat the battery by using the heated coolant obtained through heat exchange with the loop in which the compressor is located.

In the non-preheating thermal management solution 3, although the heater is also disposed on the third pipeline L₃ in which the heater core is located as in the conventional technology, the first valve body V₃ and the second three-way valve T-valve2 are further disposed in the thermal management system. The second three-way valve T-valve2, the first valve body V₃, and other valve body components in the thermal management system are controlled, to implement a technical effect that the compressor is started before the passenger compartment and/or the battery are/is heated, and then the started compressor is used to assist in heating, and also reduce a power requirement for the heater.

### Non-preheating thermal management solution 4

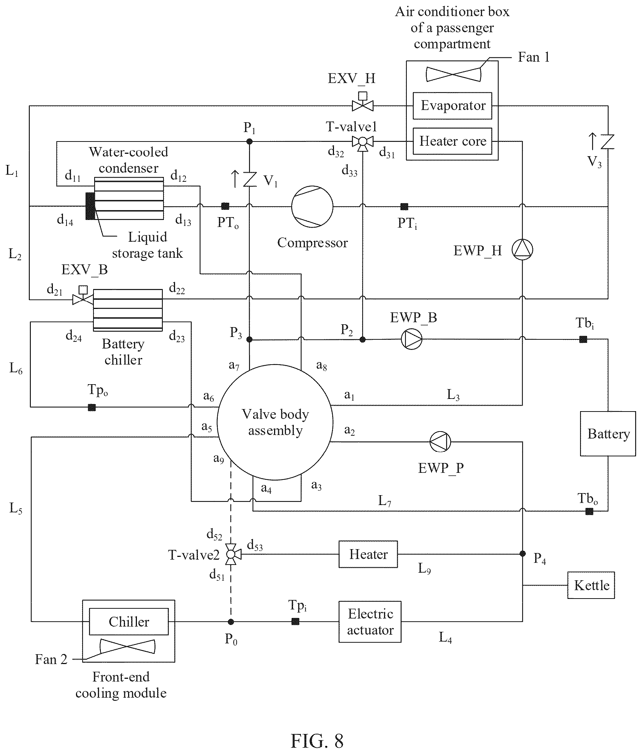

FIG. 8 is an architectural diagram of another non-preheating thermal management system according to an embodiment of this application. A difference between the thermal management system and that in the non-preheating thermal management solution 1 lies in that a second three-way valve T-valve2 is disposed on a common pipeline between a fourth pipeline L₄ and a fifth pipeline L₅ (that is, the fourth pipeline L₄ or the fifth pipeline L₅ between a ninth end a₉ of a valve body component and a branch point P₀), a first end d₅₁ of the second three-way valve T-valve2 is separately connected to a chiller and an electric actuator, a second end d₅₂ of the second three-way valve T-valve2 is connected to the ninth end a₉ of the valve body component, a third end d₅₃ of the second three-way valve T-valve2 is connected to a branch point P₄ on the fourth pipeline L₄ through a ninth pipeline L₉, and the ninth pipeline L₉ passes through a heater.

In addition, except that the heater and the second three-way valve T-valve2 are different from those in the non-preheating thermal management solution 1, a first valve body V₁, a compressor, a water-cooled condenser, the battery chiller, the valve body component, a first three-way valve T-vavle1, a one-way valve V₁, a first water pump EWP_H, a second water pump EWP_P, and a third water pump EWP_B in the non-preheating thermal management solution 4 are all the same as those in the non-preheating thermal management solution 1. Details are not described herein again.

The following describes in detail specific control logic for implementing each heating mode in the non-preheating thermal management solution 4.

### Mode of heating only the passenger compartment

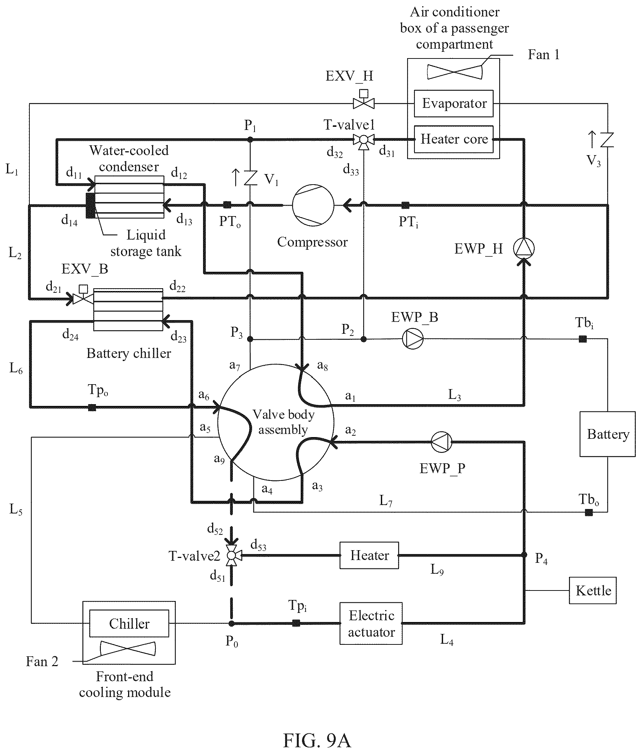

FIG. 9A is a diagram of a pipeline flow relationship for implementing the mode of heating only the passenger compartment, and entire control logic corresponding to the mode may include the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater and the second water pump EWP_P to be started, controls the second end d₅₂ of the second three-way valve T-valve2 to be separately connected to the first end d₅₁ of the second three-way valve T-valve2 and the third end d₅₃ of the second three-way valve T-valve2, controls the second end a₂ of the valve body component to be connected to the third end a₃ of the valve body component, and controls the sixth end a₆ of the valve body component to be connected to the ninth end a₉ of the valve body component, so that a loop is formed between the heater and the second heat exchange pipe d₂₃d₂₄ of the battery chiller. In this way, a coolant heated by the heater flows into the second end a₂ of the valve body component after being driven by the second water pump EWP_P, then flows out from the third end a₃ of the valve body component, and enters the second heat exchange pipe d₂₃d₂₄ of the battery chiller, to heat the second heat exchange pipe d₂₃d₂₄ of the battery chiller. Then, the coolant flowing out from the second heat exchange pipe d₂₃d₂₄ of the battery chiller flows into the second end d₅₂ of the second three-way valve T-valve2 through the sixth end a₆ of the valve body component and the ninth end a₉ of the valve body component. Then, one part flows out from the first end d₅₁ of the second three-way valve T-valve2 for cooling the electric actuator, and the other part flows back to the heater from the third end d₅₃ of the second three-way valve T-valve2. The coolant flowing out from the electric actuator and the coolant flowing out from the heater merge and return to the second water pump EWP_P.

In the process in which the second heat exchange pipe d₂₃d₂₄ of the battery chiller is heated, if the controller determines that the coolant temperature that is collected by the temperature sensor Tpₒ and that is at the outlet end of the second heat exchange pipe d₂₃d₂₄ is not lower than the second temperature threshold, the controller controls the compressor to be started, so that a loop is formed between the compressor and the first heat exchange pipe d₂₁d₂₂ of the battery chiller, and the compressor heats a refrigerant flowing in the second heat exchange pipe d₁₃d₁₄ of the water-cooled condenser.

After controlling the compressor to be started, the controller may further control the first water pump EWP_H to be started, control the first end d₃₁ of the first three-way valve T-valve1 to be connected to the second end d₃₂ of the first three-way valve T-valvel, and control the first end a₁ of the valve body component to be connected to the eighth end as of the valve body component, so that a loop is formed between the heater core and the first heat exchange pipe d₁₁d₁₂ of the water-cooled condenser. In this way, after the first heat exchange pipe d₁₁d₁₂ of the water-cooled condenser absorbs heat of the refrigerant flowing in the second heat exchange pipe d₁₃d₁₄ of the water-cooled condenser, a heated coolant is obtained, and the heated coolant flows into the heater core after sequentially passing through the eighth end as of the valve body component, the first end a₁ of the valve body component, and the first water pump EWP_H, to heat the heater core. In addition, the fan 1 blows warm air heated by the heater core to the passenger compartment, to heat the passenger compartment. Then, the coolant flowing out from the heater core sequentially passes through the first end d₃₁ of the first three-way valve T-valvel and the second end d₃₂ of the first three-way valve T-valvel, and then returns to the first heat exchange pipe d₁₁d₁₂ of the water-cooled condenser.

In conclusion, even if the heater is disposed on an electric-actuator-related pipeline, when the mode of heating only the passenger compartment is implemented, a connection between the electric actuator-related pipeline and the second heat exchange pipe of the battery chiller may be controlled, so that the heater can still heat the second heat exchange pipe of the battery chiller, to start the compressor as soon as possible. The started compressor is used to assist in heating the passenger compartment, to reduce a power requirement for the heater.

### Mode of heating only the battery

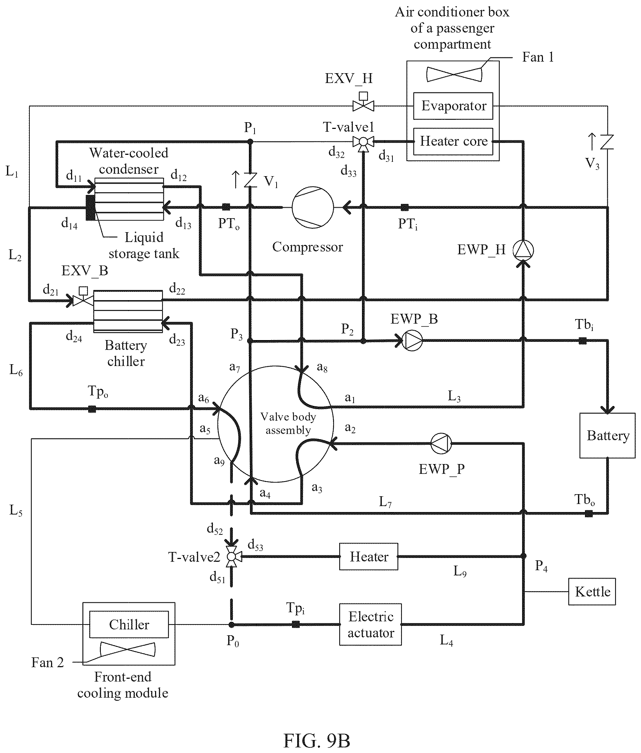

In an optional implementation, FIG. 9B is a diagram of a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started, if the mode of heating only the battery is to be implemented, the controller controls the first water pump EWP_H and the third water pump EWP_B to be started, controls the first end d₃₁ of the first three-way valve T-valvel to be connected to the third end d₃₃ of the first three-way valve T-valvel, controls the first end a₁ of the valve body component to be connected to the eighth end as of the valve body component, and controls the fourth end a₄ of the valve body component to be connected to the seventh end a₇ of the valve body component, so that a loop is formed between the battery and the first heat exchange pipe d₁₁d₁₂ of the water-cooled condenser. In this way, after the first heat exchange pipe d₁₁d₁₂ of the water-cooled condenser absorbs heat of the refrigerant flowing in the second heat exchange pipe d₁₃d₁₄ of the water-cooled condenser, a heated coolant is obtained, and the heated coolant flows into the heater core after sequentially passing through the eighth end as of the valve body component, the first end a₁ of the valve body component, and the first water pump EWP_H. Because the air conditioner is not turned on, the heater core serves only as a transfer member to transfer the heated coolant to the first end d₃₁ of the first three-way valve T-valvel, and then the coolant flows out from the third end d₃₃ of the first three-way valve T-valvel to the third water pump EWP_B. The coolant flowing out from the third water pump EWP_B flows into the battery to heat the battery, then flows out from the battery and enters the fourth end a₄ of the valve body component, and flows out from the seventh end a₇ of the valve body component. Then, one part of the coolant flows back to the third water pump EWP_B, and the other part flows back to the first heat exchange pipe d₁₁d₁₂ of the water-cooled condenser through the one-way valve V₁.

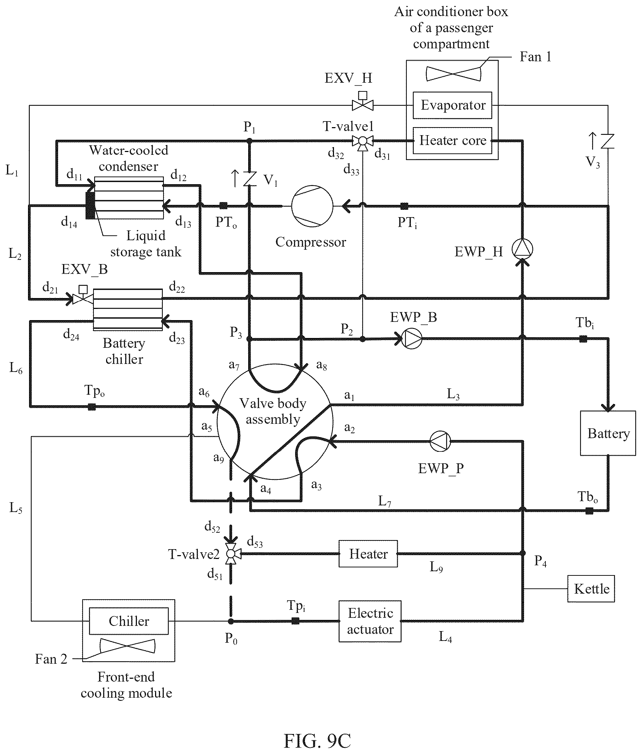

In another optional implementation, FIG. 9C is a diagram of another pipeline flow relationship for implementing the mode of heating only the battery. A difference between control logic in this implementation and the control logic in the foregoing implementation lies in the following.

After controlling the compressor to be started, the controller controls the first water pump EWP_H and the third water pump EWP_B to be started, controls the first end d₃₁ of the first three-way valve T-valvel to be connected to the second end d₃₂ of the first three-way valve T-valve1, controls the first end a₁ of the valve body component to be connected to the fourth end a₄ of the valve body component, and controls the seventh end a₇ of the valve body component to be connected to the eighth end as of the valve body component, so that a loop is formed between the battery and the first heat exchange pipe d₁₁d₁₂ of the water-cooled condenser. In this way, after the first heat exchange pipe d₁₁d₁₂ of the water-cooled condenser absorbs heat of the refrigerant flowing in the second heat exchange pipe d₁₃d₁₄ of the water-cooled condenser, a heated coolant is obtained. The heated coolant flows into the eighth end as of the valve body component, and then flows out from the seventh end a₇ of the valve body component. Then, one part of the coolant directly returns to the first heat exchange pipe d₁₁d₁₂ of the water-cooled condenser after passing through the one-way valve V₁, and the other part of the coolant flows into the battery after passing through the third water pump EWP_B, to heat the battery. The coolant flowing out from the battery flows into the heater core after sequentially passing through the fourth end a₄ of the valve body component, the first end a₁ of the valve body component, and the first water pump EWP_H. Because the air conditioner is not turned on, the heater core serves only as a transfer member to transfer the coolant to the first end d₃₁ of the first three-way valve T-valvel, and then the coolant flows back to the first heat exchange pipe d₁₁d₁₂ of the water-cooled condenser through the second end d₃₂ of the first three-way valve T-valvel.

It should be understood that, the foregoing merely provides, as examples, two types of control logic for heating only the battery. Any solution in which the battery is connected to the first heat exchange pipe d₁₁d₁₂ of the water-cooled condenser after the compressor is started by controlling a port connection relationship of the valve body component falls within the protection scope of embodiments of this application. Examples are not listed one by one in embodiments of this application.

### Mode of heating both the passenger compartment and the battery

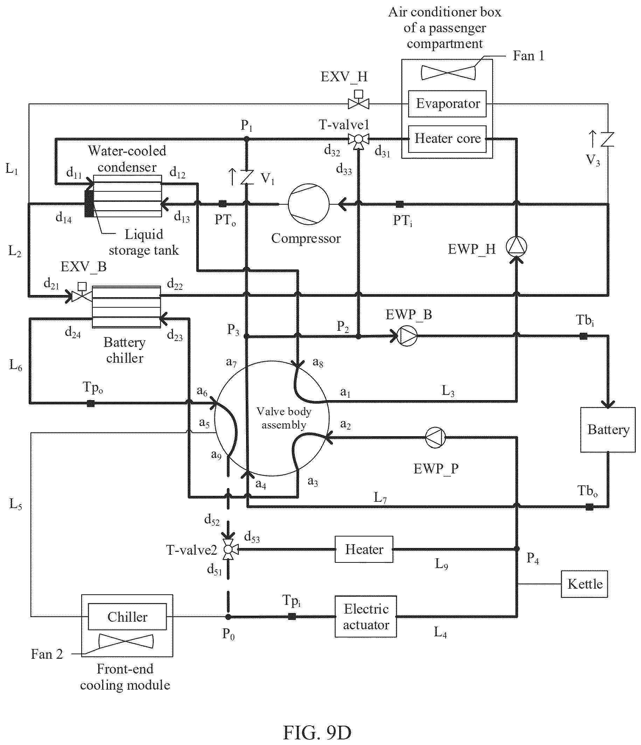

In an optional implementation, FIG. 9D is a diagram of a pipeline flow relationship in the mode of heating both the passenger compartment and the battery. A difference between control logic corresponding to the mode and the control logic in the mode of heating only the battery shown in FIG. 9B lies in that, after the compressor is started, in addition to controlling, according to the control logic in the mode of heating only the battery shown in FIG. 9B, the compressor to heat the battery, the first end d₃₁ of the first three-way valve T-valvel is further controlled to be connected to the second end d₃₂ of the first three-way valve T-valvel, to heat the heater core by using a heated coolant obtained through heat exchange with the loop in which the compressor is located, so as to heat the passenger compartment while the battery is heated.

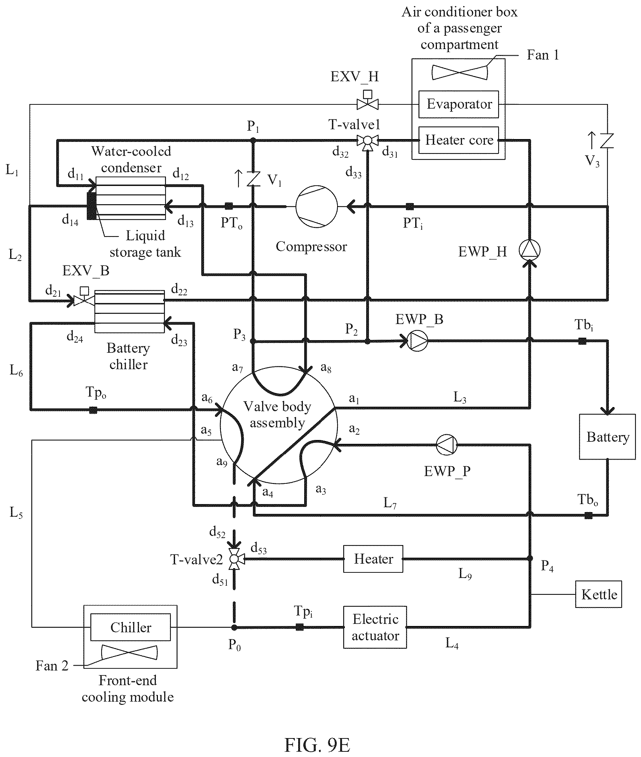

In another optional implementation, FIG. 9E is a diagram of another pipeline flow relationship for implementing the mode of heating both the passenger compartment and the battery. A difference between control logic corresponding to the mode and the control logic in the mode of heating only the battery shown in FIG. 9C lies in that, after the compressor is started, in addition to controlling, according to the control logic in the mode of heating only the battery shown in FIG. 9C, the compressor to heat the battery, the first end d₃₁ of the first three-way valve T-valvel is further controlled to be connected to the third end d₃₃ of the first three-way valve T-valvel, so that a heated coolant obtained through heat exchange in the loop in which the compressor is located is merged into the loop in which the battery is located as soon as possible, to improve a battery heating speed.

In the non-preheating thermal management solution 4, the heater and the second three-way valve T-valve2 are disposed on the electric-actuator-related pipeline. The second three-way valve T-valve2 and other valve body components in the thermal management system are controlled, so that the compressor can still be started before the passenger compartment and/or the battery are/is heated. In this way, the compressor can be used to assist in heating, to reduce a power requirement for the heater.

### Non-preheating thermal management solution 5

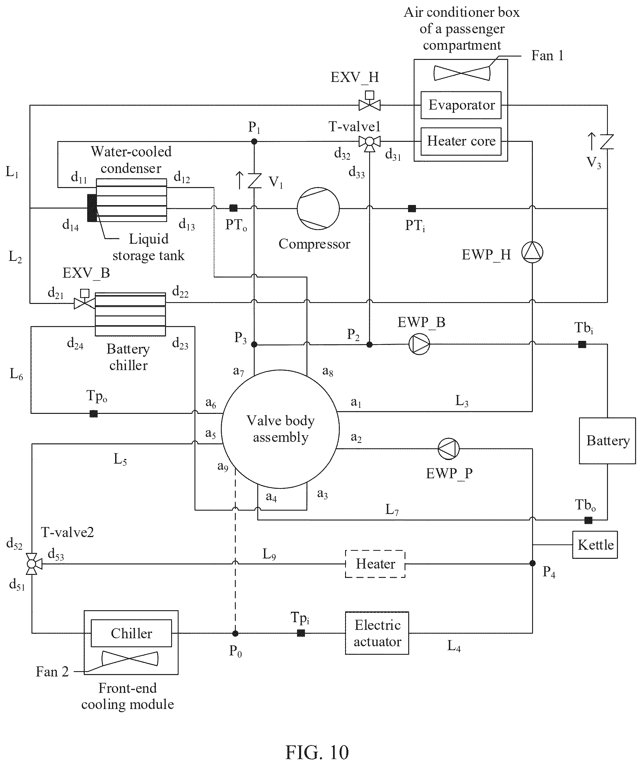

FIG. 10 is an architectural diagram of another non-preheating thermal management system according to an embodiment of this application. A difference between the thermal management system and that in the non-preheating thermal management solution 1 lies in that a second three-way valve T-valve2 is disposed on a fifth pipeline L₅, a first end d₅₁ of the second three-way valve T-valve2 is connected to a chiller, a second end d₅₂ of the second three-way valve T-valve2 is connected to a fifth end as of a valve body component, a third end d₅₃ of the second three-way valve T-valve2 is connected to a branch point P₄ on a fourth pipeline L₄ through a ninth pipeline L₉, and the ninth pipeline L₉ passes through a heater.

In addition, except that the heater and the second three-way valve T-valve2 are different from those in the non-preheating thermal management solution 1, a first valve body V₁, a compressor, a water-cooled condenser, the battery chiller, the valve body component, a first three-way valve T-vavle1, a one-way valve V₁, a first water pump EWP_H, a second water pump EWP_P, and a third water pump EWP_B in the non-preheating thermal management solution 4 are all the same as those in the non-preheating thermal management solution 1. Details are not described herein again.

The following describes in detail specific control logic for implementing each heating mode in the non-preheating thermal management solution 5.

### Mode of heating only the passenger compartment

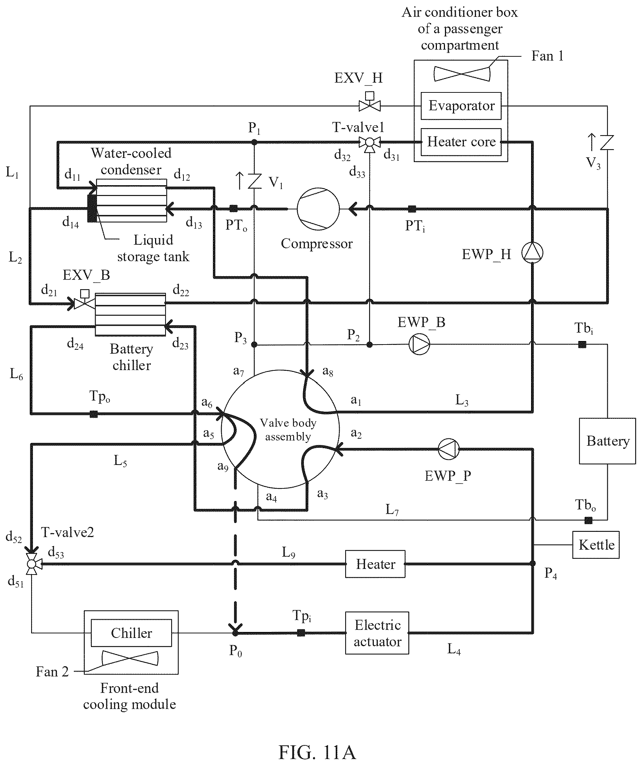

FIG. 11A is a diagram of a pipeline flow relationship for implementing the mode of heating only the passenger compartment, and entire control logic corresponding to the mode may include the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater and the second water pump EWP_P to be started, controls the second end d₅₂ of the second three-way valve T-valve2 to be connected to the third end d₅₃ of the second three-way valve T-valve2, controls the second end a₂ of the valve body component to be connected to the third end a₃ of the valve body component, and controls the sixth end a₆ of the valve body component to be separately connected to the fifth end as of the valve body component and the ninth end a₉ of the valve body component. In this way, a coolant heated by the heater flows into the second end a₂ of the valve body component after being driven by the second water pump EWP_P, then flows out from the third end a₃ of the valve body component, and enters the second heat exchange pipe d₂₃d₂₄ of the battery chiller, to heat the second heat exchange pipe d₂₃d₂₄ of the battery chiller. Then, the coolant flowing out from the second heat exchange pipe d₂₃d₂₄ of the battery chiller enters the sixth end a₆ of the valve body component. Then, one part of the coolant flows out through the ninth end a₉ of the valve body component for cooling the electric actuator, and the other part flows out through the fifth end as of the valve body component and flows into the second end d₅₂ of the second three-way valve T-valve2, and then flows out from the third end d₅₃ of the second three-way valve T-valve2 and returns to the heater. The coolant flowing out from the electric actuator and the coolant flowing out from the heater merge and enter the second water pump EWP_P.

In the process in which the second heat exchange pipe d₂₃d₂₄ of the battery chiller is heated, if the controller determines that the coolant temperature that is collected by the temperature sensor Tpₒ and that is at the outlet end of the second heat exchange pipe d₂₃d₂₄ is not lower than the second temperature threshold, the controller controls the compressor to be started, so that a loop is formed between the compressor and the first heat exchange pipe d₂₁d₂₂ of the battery chiller, and the compressor heats a refrigerant flowing in the second heat exchange pipe d₁₃d₁₄ of the water-cooled condenser.

After controlling the compressor to be started, the controller may further control the first water pump EWP_H to be started, control the first end d₃₁ of the first three-way valve T-valve1 to be connected to the second end d₃₂ of the first three-way valve T-valvel, and control the first end a₁ of the valve body component to be connected to the eighth end as of the valve body component, so that a loop is formed between the heater core and the first heat exchange pipe d₁₁d₁₂ of the water-cooled condenser, the heater core is heated by using heat absorbed by the first heat exchange pipe d₁₁d₁₂ of the water-cooled condenser from the second heat exchange pipe d₁₃d₁₄ of the water-cooled condenser. The fan 1 blows warm air heated by the heater core to the passenger compartment, to heat the passenger compartment.

In conclusion, even if the heater is disposed on another electric-actuator-related pipeline, when the mode of heating only the passenger compartment is implemented, a connection between the electric actuator-related pipeline and the second heat exchange pipe of the battery chiller may be controlled, so that the heater can still heat the second heat exchange pipe of the battery chiller, to start the compressor as soon as possible. The started compressor is used to assist in heating the passenger compartment, to reduce a power requirement for the heater.

### Mode of heating only the battery

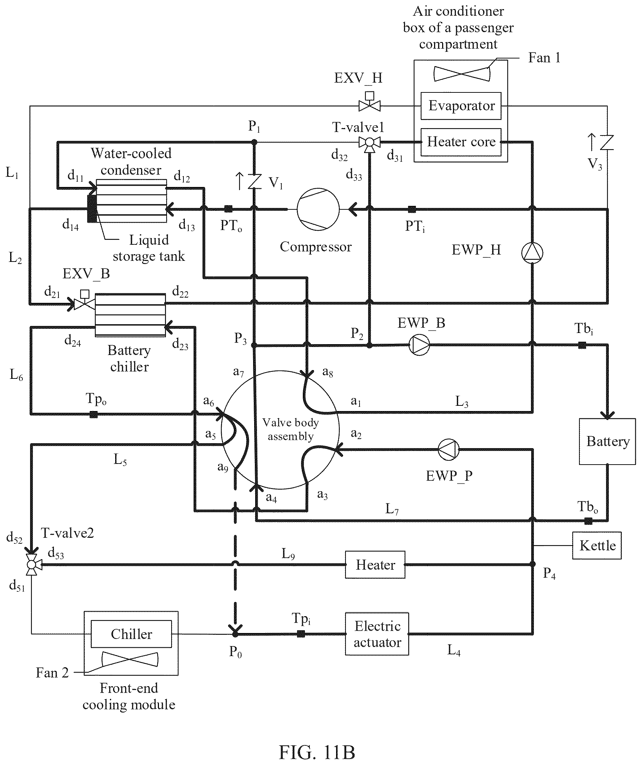

In an optional implementation, FIG. 11B shows a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started, if the mode of heating only the battery is to be implemented, the controller controls the first water pump EWP_H and the third water pump EWP_B to be started, controls the first end d₃₁ of the first three-way valve T-valvel to be connected to the third end d₃₃ of the first three-way valve T-valvel, controls the first end a₁ of the valve body component to be connected to the eighth end as of the valve body component, and controls the fourth end a₄ of the valve body component to be connected to the seventh end a₇ of the valve body component, so that a loop is formed between the battery and the first heat exchange pipe d₁₁d₁₂ of the water-cooled condenser, to heat the battery by using heat absorbed by the first heat exchange pipe d₁₁d₁₂ of the water-cooled condenser from the second heat exchange pipe d₁₃d₁₄ of the water-cooled condenser.

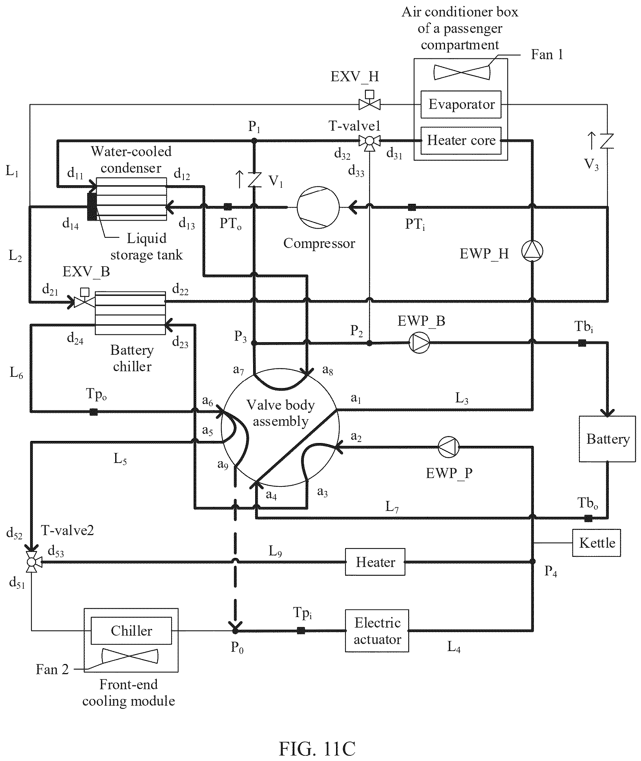

In another optional implementation, FIG. 11C is a diagram of another pipeline flow relationship for implementing the mode of heating only the battery. A difference between control logic in this implementation and the control logic in the foregoing implementation lies in the following.

After controlling the compressor to be started, the controller controls the first water pump EWP_H and the third water pump EWP_B to be started, controls the first end d₃₁ of the first three-way valve T-valvel to be connected to the second end d₃₂ of the first three-way valve T-valve1, controls the first end a₁ of the valve body component to be connected to the fourth end a₄ of the valve body component, and controls the seventh end a₇ of the valve body component to be connected to the eighth end as of the valve body component, so that a loop is formed between the battery and the first heat exchange pipe d₁₁d₁₂ of the water-cooled condenser, to heat the battery by using heat absorbed by the first heat exchange pipe d₁₁d₁₂ of the water-cooled condenser from the second heat exchange pipe d₁₃d₁₄ of the water-cooled condenser.

It should be noted that, the distinguishing control logic for heating only the battery in the non-preheating thermal management solution 5 is the same as the distinguishing control logic for heating only the battery in the non-preheating thermal management solution 4. For details, directly refer to the foregoing description content. Details are not described herein again.

### Mode of heating both the passenger compartment and the battery

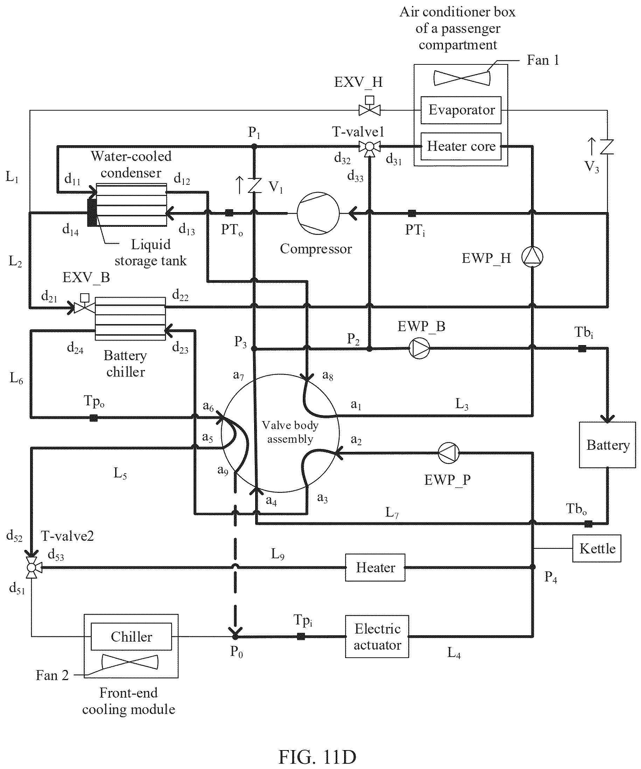

In an optional implementation, FIG. 11D is a diagram of a pipeline flow relationship in the mode of heating both the passenger compartment and the battery. A difference between control logic corresponding to the mode and the control logic in the mode of heating only the battery shown in FIG. 11B lies in that, after the compressor is started, in addition to controlling, according to the control logic in the mode of heating only the battery shown in FIG. 11B, the compressor to heat the battery, the first end d₃₁ of the first three-way valve T-valvel is further controlled to be connected to the second end d₃₂ of the first three-way valve T-valvel, to heat the heater core by using a heated coolant obtained through heat exchange with the loop in which the compressor is located, so as to heat the passenger compartment while the battery is heated.

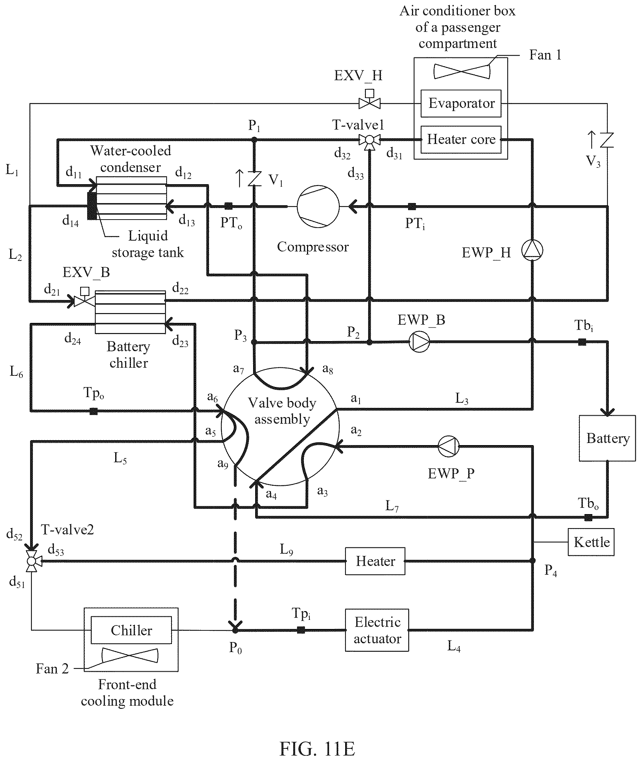

In addition, in another optional implementation, FIG. 11E is a diagram of another pipeline flow relationship for implementing the mode of heating both the passenger compartment and the battery. A difference between control logic corresponding to the mode and the control logic in the mode of heating only the battery shown in FIG. 11C lies in that, after the compressor is started, in addition to controlling, according to the control logic in the mode of heating only the battery shown in FIG. 11C, the compressor to heat the battery, the first end d₃₁ of the first three-way valve T-valvel is further controlled to be connected to the third end d₃₃ of the first three-way valve T-valvel, so that a heated coolant obtained through heat exchange in the loop in which the compressor is located is merged into the loop in which the battery is located as soon as possible, to improve a battery heating speed.

In the non-preheating thermal management solution 5, the heater and the second three-way valve T-valve2 are also disposed on the electric-actuator-related pipeline. The second three-way valve T-valve2 and other valve body components in the thermal management system are controlled, so that the compressor can still be started before the passenger compartment and/or the battery are/is heated. In this way, the compressor can be used to assist in heating, to reduce a power requirement for the heater.

In conclusion, in the foregoing non-preheating thermal management solutions, the heater may be disposed on any one of a battery-related pipeline, an air-heating-related pipeline, or an electric-actuator-related pipeline. The second three-way valve T-valve2 and the first valve body V₃ are disposed, so that the heater disposed on any one of the related pipelines can be connected to the second heat exchange pipe of the battery chiller by controlling a connection relationship between the valve bodies. In this way, the compressor assists in heating, to reduce power consumption and costs of heating using the heater.

In addition, the foregoing non-preheating thermal management solutions are described by using the example in which the first valve body V₃ is a one-way valve. The one-way valve may be automatically turned on or turned off based on a flow direction of liquid in the pipeline, and no controller is required for additional control. However, in another embodiment, if the first valve body V₃ is a control valve, after controlling the compressor to be started, the controller further needs to control the first valve body V₃ to be turned off, to ensure that the compressor forms a loop only with the first heat exchange pipe d₂₁d₂₂ of the battery chiller, and ensure that all the heating capability of the compressor is used to heat the battery chiller.

The foregoing content mainly describes the non-preheating thermal management solutions, and the following describes preheating heat management solutions.

### Preheating thermal management solution 1

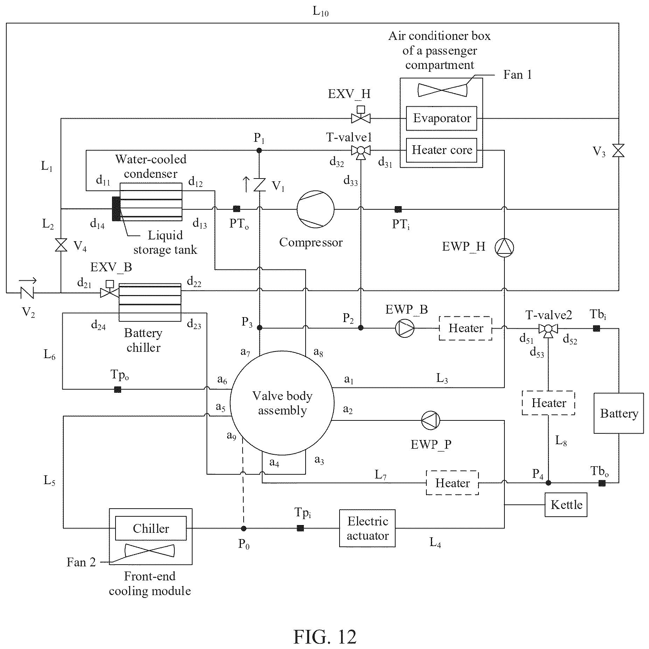

FIG. 12 is an architectural diagram of a preheating thermal management system according to an embodiment of this application. In addition to the second three-way valve T-valve2, the heater, the first valve body V₃, the compressor, the water-cooled condenser, the battery chiller, the valve body component, the first three-way valve T-vavle1, the one-way valve V₁, the first water pump EWP_H, the second water pump EWP_P, and the third water pump EWP_B in the non-preheating thermal management solution 1, the thermal management system further includes a second valve body V₂ and a third valve body V₄, and a tenth pipeline L₁₀ is disposed between the second end of the first valve body V₃ and the port d₂₁ of the battery chiller. The second valve body V₂ is disposed on the tenth pipeline L₁₀, a first end of the second valve body V₂ is separately connected to the second end of the first valve body V₃ and the evaporator, and a second end of the second valve body V₂ is separately connected to the port d₂₁ of the battery chiller and a first end of the third valve body V₄. The third valve body V₄ is disposed on the second pipeline L₂, the first end of the third valve body V₄ is separately connected to the second end of the second valve body V₂ and the port d₂₁ of the battery chiller, and a second end of the third valve body V₄ is separately connected to the evaporator and the port d₁₄ of the water-cooled condenser.

In some embodiments, the first valve body V₃ and the third valve body V₄ are solenoid valves, and the second valve body V₂ may be a solenoid valve or a one-way valve. When the second valve body V₂ is a one-way valve, as shown in FIG. 12, an input end of the one-way valve is the first end of the second valve body V₂, and an output end of the one-way valve is the second end of the second valve body V₂.

The following uses an example in which the heater is disposed on the eighth pipeline L₈ and the second valve body V₂ is a one-way valve, to separately describe in detail specific control logic for implementing each heating mode in the preheating thermal management solution 1.

### Mode of heating only the passenger compartment

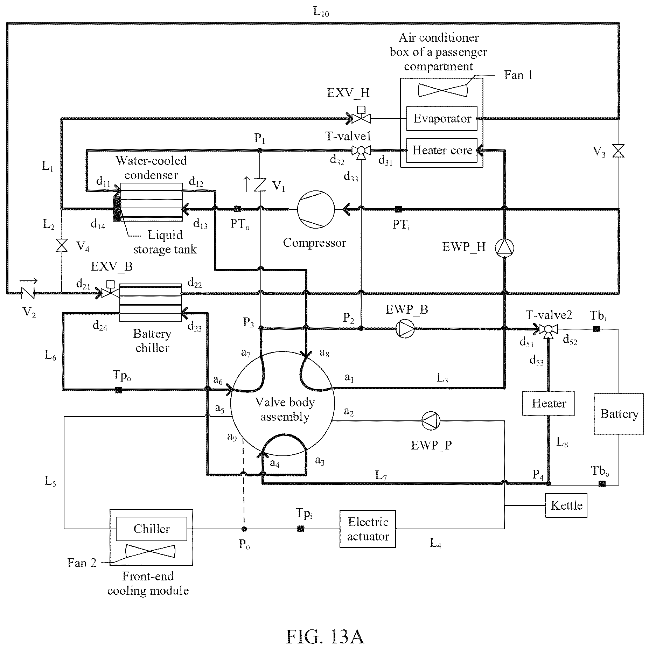

FIG. 13A is a diagram of a pipeline flow relationship for implementing the mode of heating only the passenger compartment, and entire control logic corresponding to the mode includes the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater and the third water pump EWP_B to be started, and controls the first end d₅₁ of the second three-way valve T-valve2 to be connected to the third end d₅₃ of the second three-way valve T-valve2, controls the third end a₃ of the valve body component to be connected to the fourth end a₄ of the valve body component, and controls the sixth end a₆ of the valve body component to be connected to the seventh end a₇ of the valve body component, so that the heater heats a coolant flowing in the second heat exchange pipe d₂₃d₂₄ of the battery chiller.

In the process in which the second heat exchange pipe d₂₃d₂₄ of the battery chiller is heated, if the controller determines that the coolant temperature that is collected by the temperature sensor Tpₒ and that is at the outlet end of the second heat exchange pipe d₂₃d₂₄ is not lower than the second temperature threshold, the controller controls the compressor to be started, and controls the first valve body V₃ and the third valve body V₄ to be turned off. In this way, after the first heat exchange pipe d₂₁d₂₂ of the battery chiller absorbs heat of the coolant flowing in the second heat exchange pipe d₂₃d₂₄ of the battery chiller, heated refrigerant liquid is obtained. The refrigerant liquid is further compressed into high-temperature and high-pressure refrigerant gas by the compressor, and then enters the second heat exchange pipe d₁₃d₁₄ of the water-cooled condenser, to heat the second heat exchange pipe d₁₃d₁₄ of the water-cooled condenser. Then, the refrigerant flowing out from the second heat exchange pipe d₁₃d₁₄ of the water-cooled condenser flows into the evaporator, and the heat is dissipated to the passenger compartment through the evaporator, to heat the passenger compartment for a first time. Then, the refrigerant flowing out from the evaporator returns to the first heat exchange pipe d₂₁d₂₂ of the battery chiller through the second valve body V₂.

After controlling the compressor to be started, the controller may further control the first water pump EWP_H to be started, control the first end d₃₁ of the first three-way valve T-valve1 to be connected to the second end d₃₂ of the first three-way valve T-valvel, and control the first end a₁ of the valve body component to be connected to the eighth end as of the valve body component, so that the heater core is heated by using heat absorbed by the first heat exchange pipe d₁₁d₁₂ of the water-cooled condenser from the second heat exchange pipe d₁₃d₁₄ of the water-cooled condenser, and the fan 1 blows ambient air heated by the heater core to the passenger compartment, to heat the passenger compartment.

According to the preheating thermal management solution 1, a specification requirement for the heater can be reduced. In addition, in the process of heating the passenger compartment, the passenger compartment is heated for the first time by the evaporator before the compressor is started, and then the passenger compartment is heated for the second time by the compressor after the compressor is started. In this heating manner, the passenger compartment can be heated more quickly, and this helps improve passenger experience of a user.

### Mode of heating only the battery

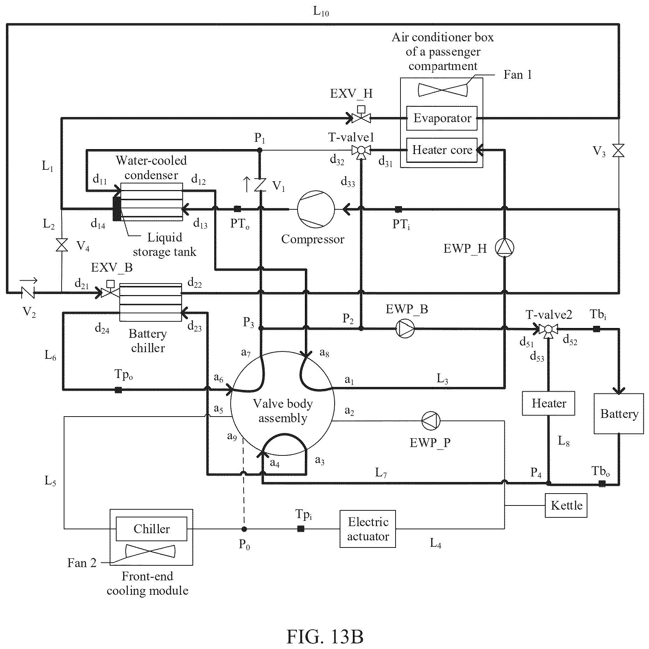

FIG. 13B is a diagram of a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started and the first valve body V₃ and the third valve body V₄ are controlled to be turned off, if the mode of heating only the battery needs to be implemented, the controller controls the first end d₅₁ of the second three-way valve T-valve2 to be connected to the second end d₅₂ of the second three-way valve T-valve2, so that the battery and the heater form a loop, to heat the battery for a first time.

After controlling the first end d₅₁ of the second three-way valve T-valve2 to be connected to the second end d₅₂ of the second three-way valve T-valve2, the controller may further control the first end d₃₁ of the first three-way valve T-valve1 to be connected to the third end d₃₃ of the first three-way valve T-valvel, and control the first end a₁ of the valve body component to be connected to the eighth end as of the valve body component, so that the first heat exchange pipe d₁₁d₁₂ of the water-cooled condenser is merged into the loop in which the heater is located, to heat the battery for a second time together with the heater and the compressor.

It should be noted that the distinguishing control logic is the same as the distinguishing control logic in the mode of heating only the battery in the non-preheating thermal management solution 1. For details, refer to related descriptions in the non-preheating thermal management solution 1. Details are not described herein again.

In addition, the second three-way valve T-valve2 may be a shunt valve. When an ambient temperature is insufficient to be used to start the compressor, the heater is first started, and all the coolant flowing out from the first end d₅₁ of the second three-way valve T-valve2 flows into the third end d₅₃ of the second three-way valve T-valve2, to start the compressor as soon as possible. Then, one part of the coolant flowing out from the first end d₅₁ of the second three-way valve T-valve2 is shunted to the second end d₅₂ of the second three-way valve T-valve2, to heat the battery by using a power margin of the battery during the startup of the compressor. Finally, after the compressor is completely started, all the coolant flowing out from the first end d₅₁ of the second three-way valve T-valve2 flows into the third end d₅₃ of the second three-way valve T-valve2, so that the compressor and heater heat the battery together. Therefore, in this heating manner, not only a specification of the heater that needs to be disposed in the thermal management system can be effectively reduced, but also heat of the heater and the compressor can be fully used in an entire thermal management periodicity, to improve battery heating efficiency.

### Mode of heating both the passenger compartment and the battery

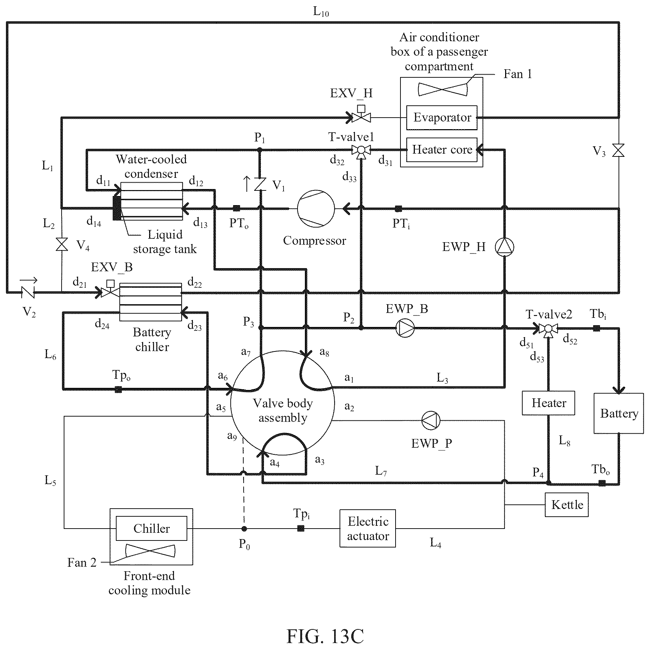

FIG. 13C is a diagram of a pipeline flow relationship for implementing the mode of heating both the passenger compartment and the battery. In this mode, control logic for controlling the compressor to be started and control logic before the startup are completely the same as the control logic in the mode of heating only the passenger compartment and the mode of heating only the battery, and control logic after the compressor is controlled to be started is different from the control logic in the mode of heating only the passenger compartment and the mode of heating only the battery. Main differences are as follows:

After the compressor is controlled to be started and the first valve body V₃ and the third valve body V₄ are controlled to be turned off, if the mode of heating both the passenger compartment and the battery is to be implemented, the controller may control the first end d₅₁ of the second three-way valve T-valve2 to be connected to the second end d₅₂ of the second three-way valve T-valve2, so that a loop is formed between the battery and the heater, and the heater is used to heat the battery for a first time. In addition, the controller may further control the first water pump EWP_H to be started, control the first end d₃₁ of the first three-way valve T-valve1 to be connected to the second end d₃₂ of the first three-way valve T-valve1, and control the first end a₁ of the valve body component to be connected to the eighth end as of the valve body component, so that a loop is formed between the first heat exchange pipe d₁₁d₁₂ of the water-cooled condenser and the heater core, and the heater core is heated by using heat absorbed by the first heat exchange pipe d₁₁d₁₂ of the water-cooled condenser from the second heat exchange pipe d₁₃d₁₄ of the water-cooled condenser, to heat the passenger compartment.

After controlling the first end d₅₁ of the second three-way valve T-valve2 to be connected to the second end d₅₂ of the second three-way valve T-valve2, the controller may further control the first end d₃₁ of the first three-way valve T-valve1 to be connected to the third end d₃₃ of the first three-way valve T-valve1. In this way, the coolant flowing out from the heater core flows into the first end d₃₁ of the first three-way valve T-valve1. Then, a part of the coolant flows back to the first heat exchange pipe d₁₁d₁₂ of the water-cooled condenser through the second end d₃₂ of the first three-way valve T-valvel, and the other part is merged into the third water pump EWP_B, to heat the battery together with the heater.

It should be noted that the distinguishing control logic is the same as the distinguishing control logic in the mode of heating both the passenger compartment and the battery in the non-preheating thermal management solution 1. For details, refer to related descriptions in the non-preheating thermal management solution 1. Details are not described herein again. In addition, the first three-way valve T-valvel may alternatively be a shunt valve. After the first end d₂₁ of the first three-way valve T-valvel is separately connected to the second end d₃₂ and the third end d₂₃ of the first three-way valve T-valve1, proportions of coolants obtained by the second end d₃₂ and the third end d₂₃ from the first end d₂₁ may be specifically determined by a temperature difference between a current temperature and a target temperature of the passenger compartment. For related descriptions of shunting of the first three-way valve T-valvel, directly refer to the non-preheating thermal management solution 1. Details are not described herein again.

According to the preheating thermal management solution 1, not only a power requirement for the heater can be reduced, but also the evaporator can participate in heating of the passenger compartment, and serve as a carrier for heating the passenger compartment for the first time to preheat the passenger compartment, to heat the passenger compartment together with the heater core, so as to improve passenger compartment heating efficiency.

### Preheating thermal management solution 2

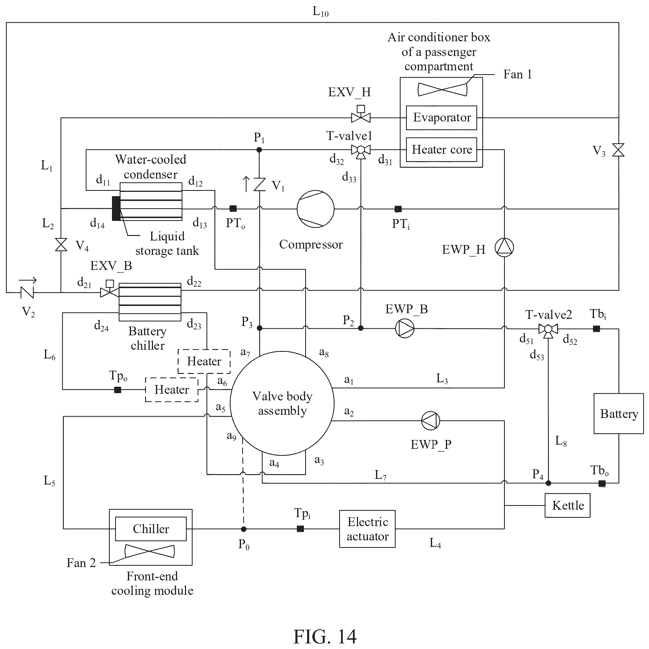

FIG. 14 is an architectural diagram of another preheating thermal management system according to an embodiment of this application. A difference between the thermal management system and that in the preheating thermal management solution 1 lies in that a heater is disposed on a sixth pipeline L₆, for example, may be disposed between a sixth end a₆ of a valve body component and a port d₂₄ of a second heat exchange pipe d₂₃d₂₄ of a battery chiller, or may be disposed between a port d₂₃ of the battery chiller and a third end a₃ of the valve body component.

In addition, except that the heater is different from that in the preheating thermal management solution 1, a second three-way valve T-valve2, a first valve body V₃, a second valve body V₂, a third valve body V₄, a compressor, a water-cooled condenser, the battery chiller, the valve body component, a first three-way valve T-vavlel, a one-way valve V₁, a first water pump EWP_H, a second water pump EWP_P, and a third water pump EWP_B in the preheating thermal management solution 2 are all the same as those in the preheating thermal management solution 1. Details are not described herein again.

In addition, in an ultra-low-temperature environment, all control logic for implementing the mode of heating only the passenger compartment, the mode of heating only the battery, and the mode of heating both the passenger compartment and the battery in the preheating thermal management solution 2 may also be the same as that in the preheating thermal management solution 1. For details, refer to related descriptions of the modes in the preheating thermal management solution 1. Details are not described herein again.

### Preheating thermal management solution 3

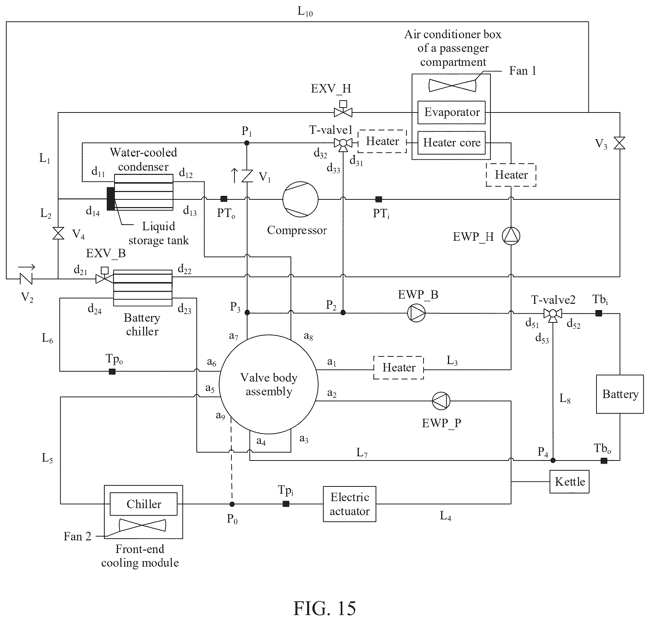

FIG. 15 is an architectural diagram of another preheating thermal management system according to an embodiment of this application. A difference between the thermal management system and that in the preheating thermal management solution 1 lies in that a heater is disposed on a third pipeline L₃ between a first end a₁ of a valve body component and a first end d₃₁ of a first three-way valve T-valve1, for example, may be disposed between the first end a₁ of the valve body component and an input end of a first water pump EWP_H, or may be disposed between an output end of the first water pump EWP_H and an input end of a heater core, or may be disposed between an output end of the heater core and the first end d₃₁ of the first three-way valve T-valvel.

In addition, except that the heater is different from that in the preheating thermal management solution 1, a second three-way valve T-valve2, a first valve body V₃, a second valve body V₂, a third valve body V₄, a compressor, a water-cooled condenser, the battery chiller, the valve body component, a first three-way valve T-vavlel, a one-way valve V₁, a first water pump EWP_H, a second water pump EWP_P, and a third water pump EWP_B in the preheating thermal management solution 2 are all the same as those in the preheating thermal management solution 1. Details are not described herein again.

For example, the following uses an example in which the heater is disposed on the third pipeline L₃ between the output end of the first water pump EWP_H and the input end of the heater core, to separately describe in detail specific control logic for implementing each heating mode in the preheating thermal management solution 3.

### Mode of heating only the passenger compartment

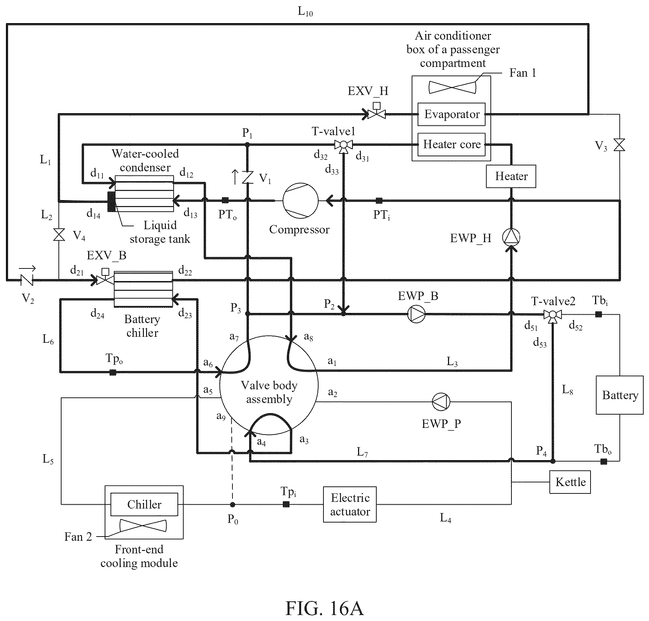

FIG. 16A is a diagram of a pipeline flow relationship for implementing the mode of heating only the passenger compartment, and entire control logic corresponding to the mode may include the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater, the first water pump EWP_H, and the third water pump EWP_B to be started, controls the first end d₃₁ of the first three-way valve T-valve1 to be connected to the third end d₃₃ of the first three-way valve T-valve1, controls the first end d₅₁ of the second three-way valve T-valve2 to be connected to the third end d₅₃ of the second three-way valve T-valve2, controls the third end a₃ of the valve body component to be connected to the fourth end a₄ of the valve body component, controls the sixth end a₆ of the valve body component to be connected to the seventh end a₇ of the valve body component, and controls the first end a₁ of the valve body component to be connected to the eighth end as of the valve body component. In this way, a coolant flowing out from the output end of the first water pump EWP_H enters the heater core after being heated by the heater, flows into the first end d₃₁ of the first three-way valve T-valvel after heating the passenger compartment for a first time through the heater core, then flows out from the third end d₃₃ of the first three-way valve T-valvel, flows into the first end d₅₁ of the second three-way valve T-valve2 through the third water pump EWP_B and flows out from the third end d₅₃ of the second three-way valve T-valve2, and flows into the second heat exchange pipe d₂₃d₂₄ of the battery chiller after sequentially passing through the third end a₃ of the valve body component and the fourth end a₄ of the valve body component, to heat the second heat exchange pipe d₂₃d₂₄ of the battery chiller. Then, the coolant flows into the seventh end a₇ of the valve body component from the sixth end a₆ of the valve body component. After flowing out from the seventh end a₇ of the valve body component, one part of the coolant is merged into the third water pump EWP_B together with the coolant flowing out from the third end d₃₃ of the first three-way valve T-valve1, and the other part flows into the first heat exchange pipe d₁₁d₁₂ of the water-cooled condenser through the one-way valve V₁, then enters the eighth end as of the valve body component, flows out from the first end a₁ of the valve body component, and returns to the first water pump EWP_H.

In the process in which the second heat exchange pipe d₂₃d₂₄ of the battery chiller is heated, if the controller determines that the temperature that is collected by the temperature sensor Tpₒ and that is at the outlet end of the second heat exchange pipe d₂₃d₂₄ is not lower than the second temperature threshold, the controller controls the compressor to be started, and controls the first valve body V₃ and the third valve body V₄ to be turned off, to heat the second heat exchange pipe d₁₃d₁₄ of the water-cooled condenser through the compressor, and dissipate heat thereof to the passenger compartment through the evaporator, so as to heat the passenger compartment for a second time.

After controlling the compressor to be started and controlling the first valve body V₃ and the third valve body V₄ to be turned off, the controller may further control the first end d₃₁ of the first three-way valve T-valvel to be connected to the second end d₃₂ of the first three-way valve T-valve1. In this way, after the first heat exchange pipe d₁₁d₁₂ of the water-cooled condenser absorbs heat of the refrigerant flowing in the second heat exchange pipe d₁₃d₁₄ of the water-cooled condenser, a heated coolant is obtained, and the heated coolant flows into the heater core after sequentially passing through the eighth end as of the valve body component, the first end a₁ of the valve body component, the first water pump EWP_H, and the heater. The heater core blows heated warm air to the passenger compartment, to heat the passenger compartment for a third time. Then, the coolant flowing out from the heater core flows into the first end d₃₁ of the first three-way valve T-valvel, one part flows backs to the first heat exchange pipe d₁₁d₁₂ of the water-cooled condenser through the second end d₃₂ of the first three-way valve T-valve1, and the other part is merged into the third water pump EWP_B through the third end d₃₃ of the first three-way valve T-valve1.

In conclusion, when only the passenger compartment is heated, the heater is directly disposed on the pipeline on which the heater core is located. When the passenger compartment is heated according to the foregoing control logic, the heater first directly heats the heater core, to heat the passenger compartment for the first time. Then, the compressor performs compression to generate heat, to heat the passenger compartment for the second time through the evaporator. Finally, the compressor performs compression to generate heat, to heat the passenger compartment for the third time through the heater core. In this heating manner, the passenger compartment can be heated more quickly, and this helps improve passenger experience of a user.

### Mode of heating only the battery

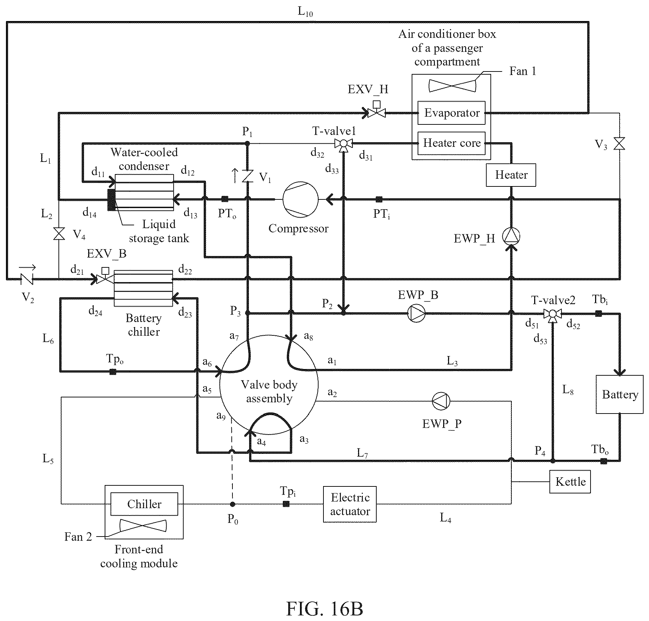

FIG. 16B is a diagram of a pipeline flow relationship in the mode of heating only the battery, and entire control logic corresponding to the mode may include the following content.

First, when detecting that the battery needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater, the first water pump EWP_H, and the third water pump EWP_B to be started, controls the first end d₃₁ of the first three-way valve T-valve1 to be connected to the third end d₃₃ of the first three-way valve T-valve1, controls the first end d₅₁ of the second three-way valve T-valve2 to be connected to the third end d₅₃ of the second three-way valve T-valve2, controls the third end a₃ of the valve body component to be connected to the fourth end a₄ of the valve body component, controls the sixth end a₆ of the valve body component to be connected to the seventh end a₇ of the valve body component, and controls the first end a₁ of the valve body component to be connected to the eighth end as of the valve body component, so that a loop is formed between the heater and the second heat exchange pipe d₂₃d₂₄ of the battery chiller, and the heater heats the second heat exchange pipe d₂₃d₂₄ of the battery chiller.

It should be noted that, in this process, although the coolant heated by the heater flows through the heater core, because the air conditioner is not turned on, the heater core serves only as an intermediate pipeline to transfer the coolant, and is not used to heat the passenger compartment.

Then, after determining that the temperature that is collected by the temperature sensor Tpₒ and that is at the outlet end of the second heat exchange pipe d₂₃d₂₄ is not lower than the second temperature threshold, the controller controls the compressor to be started, and controls the first valve body V₃ and the third valve body V₄ to be turned off, so that a loop is formed between the compressor and the first heat exchange pipe d₂₁d₂₂ of the battery chiller, and the compressor heats the refrigerant flowing in the second heat exchange pipe d₁₃d₁₄ of the water-cooled condenser.

It should be noted that, in this process, although the coolant heated by the compressor flows through the evaporator, because the air conditioner is not turned on, the evaporator serves only as an intermediate pipeline to transfer the coolant, and is not used to heat the passenger compartment.

In addition, the controller may further control the first end d₅₁ of the second three-way valve T-valve2 to be connected to the third end d₅₃ of the second three-way valve T-valve2, so that after the coolant heated by the compressor enters the first end d₅₁ of the second three-way valve T-valve2, one part of the coolant flows out from the second end d₅₃ of the second three-way valve T-valve2 and participates in the loop for heating the compressor, and the other part flows out from the third end d₅₃ of the second three-way valve T-valve2 and then heats the battery.

In conclusion, when only the battery is heated, all heat generated by the heater is first used to start the compressor, to accelerate a startup speed of the compressor, and then the first end d₅₁ of the second three-way valve T-valve2 is connected to the second end d₅₂ of the second three-way valve T-valve2 after the compressor is started, so that the two components, namely, the compressor and the heater, generate heat to jointly heat the battery, to improve a battery heating speed.

However, it should be understood that the foregoing control logic is only an optional implementation. In another implementation, alternatively, the first end d₅₁ of the second three-way valve T-valve2 may be connected to the second end d₅₂ of the second three-way valve T-valve2 before the compressor is started. In this way, heat generated by the heater is used to preliminarily heat the battery, and is also used to start the compressor. After the compressor is started, the compressor and the heater generate heat to jointly heat the battery for the second time. In this way, the battery can be preheated.

### Mode of heating both the passenger compartment and the battery

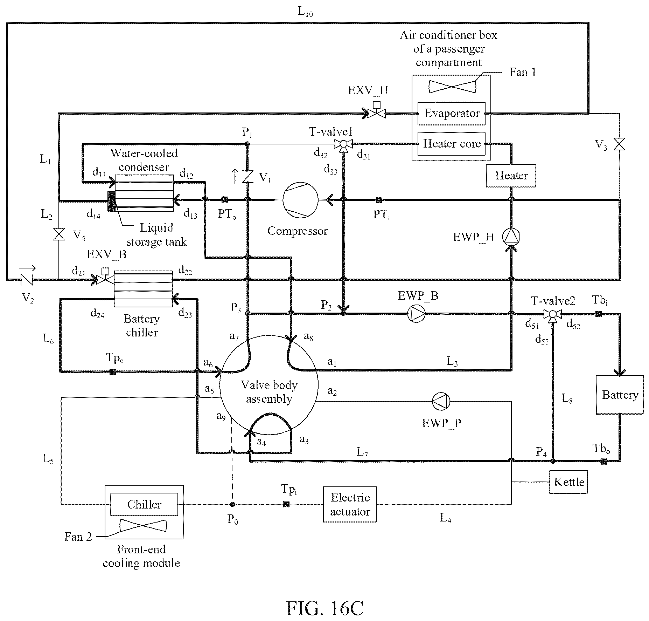

FIG. 16C is a diagram of a pipeline flow relationship in the mode of heating both the passenger compartment and the battery. In this mode, control logic for controlling the compressor to be started and control logic before the startup are completely the same as the control logic in the mode of heating only the passenger compartment and the mode of heating only the battery, and control logic after the compressor is controlled to be started is different from the control logic in the mode of heating only the passenger compartment and the mode of heating only the battery. Main differences are as follows:

After controlling the compressor to be started and controlling the first valve body V₃ and the third valve body V₄ to be turned off, the controller may control the first end d₃₁ of the first three-way valve T-valvel to be connected to the second end d₅₂ of the first three-way valve T-valve1, to heat the heater core by using a heated coolant obtained through heat exchange with the loop in which the compressor is located. In addition, the controller may further control the first end d₅₁ of the second three-way valve T-valve2 to be connected to the third end d₅₃ of the second three-way valve T-valve2, to heat the battery by using the heated coolant obtained through heat exchange with the loop in which the compressor is located.

In the preheating thermal management solution 3, although the heater is also disposed on the third pipeline L₃ on which the heater core is located as in the conventional technology, the second three-way valve T-valve2, the first valve body V₃, the second valve body V₂, and the third valve body V₄ are further disposed in the preheating thermal management system. These valve bodies and other valve body components in the thermal management system are controlled, so that the solution in which the compressor is used to assist in heating the passenger compartment and/or the battery can still be implemented, to reduce a power requirement for the heater.

### Preheating thermal management solution 4

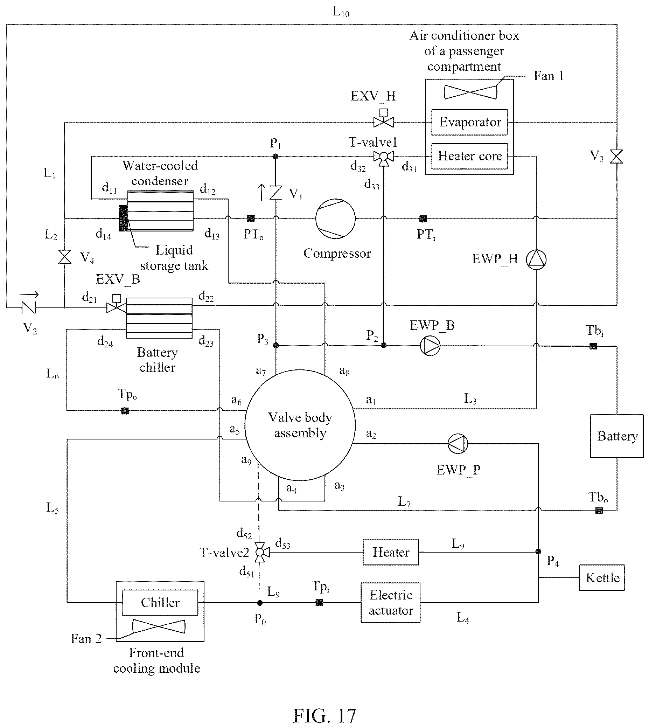

FIG. 17 is an architectural diagram of another preheating thermal management system according to an embodiment of this application. A difference between the preheating thermal management system and that in the preheating thermal management solution 1 lies in that a second three-way valve T-valve2 is disposed on a common pipeline between a fourth pipeline L₄ and a fifth pipeline L₅ (that is, the fourth pipeline L₄ or the fifth pipeline L₅ between a ninth end a₉ of a valve body component and a branch point P₀), a first end d₅₁ of the second three-way valve T-valve2 is separately connected to a chiller and an electric actuator, a second end d₅₂ of the second three-way valve T-valve2 is connected to the ninth end a₉ of the valve body component, a third end d₅₃ of the second three-way valve T-valve2 is connected to a branch point P₄ on the fourth pipeline L₄ through a ninth pipeline L₉, and the ninth pipeline L₉ passes through a heater.

In addition, except that the heater and the second three-way valve T-valve2 are different from those in the preheating thermal management solution 1, a first valve body V₃, a second valve body V₂, a third valve body V₄, a compressor, a water-cooled condenser, the battery chiller, the valve body component, a first three-way valve T-vavlel, a one-way valve V₁, a first water pump EWP_H, a second water pump EWP_P, and a third water pump EWP_B in the preheating thermal management solution 4 are all the same as those in the preheating thermal management solution 1. Details are not described herein again.

The following describes in detail specific control logic for implementing each heating mode in the preheating thermal management solution 4.

### Mode of heating only the passenger compartment

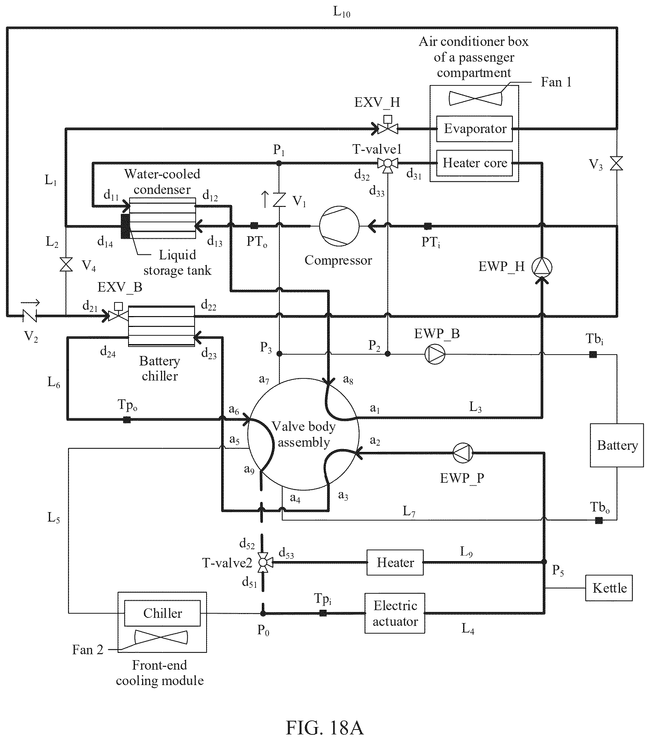

FIG. 18A is a diagram of a pipeline flow relationship for implementing the mode of heating only the passenger compartment, and entire control logic corresponding to the mode may include the following content.

When detecting that the passenger compartment needs to be heated, if the controller determines that a coolant temperature that is collected by the temperature sensor Tpₒ and that is at the outlet end of the second heat exchange pipe d₂₃d₂₄ of the battery chiller is lower than the first temperature threshold, the controller controls the heater and the second water pump EWP_P to be started, controls the second end d₅₂ of the second three-way valve T-valve2 to be separately connected to the first end d₅₁ of the second three-way valve T-valve2 and the third end d₅₃ of the second three-way valve T-valve2, controls the second end a₂ of the valve body component to be connected to the third end a₃ of the valve body component, and controls the sixth end a₆ of the valve body component to be connected to the ninth end a₉ of the valve body component, so that a loop is formed between the heater and the second heat exchange pipe d₂₃d₂₄ of the battery chiller, and the heater heats the second heat exchange pipe d₂₃d₂₄ of the battery chiller.

In the process in which the second heat exchange pipe d₂₃d₂₄ of the battery chiller is heated, if the controller determines that the temperature that is collected by the temperature sensor Tpₒ and that is at the outlet end of the second heat exchange pipe d₂₃d₂₄ is not lower than the second temperature threshold, the controller controls the compressor to be started, and controls the first valve body V₃ and the third valve body V₄ to be turned off, so that the compressor and the second heat exchange pipe d₁₃d₁₄ of the water-cooled condenser form a loop, and the compressor heats the second heat exchange pipe d₁₃d₁₄ of the water-cooled condenser. In addition, the evaporator heats the passenger compartment for a first time.

After controlling the compressor to be started and controlling the first valve body V₃ and the third valve body V₄ to be turned off, the controller may further control the first water pump EWP_H to be started, control the first end d₃₁ of the first three-way valve T-valve1 to be connected to the second end d₃₂ of the first three-way valve T-valve1, and control the first end a₁ of the valve body component to be connected to the eighth end as of the valve body component, so that the first heat exchange pipe d₁₁d₁₂ of the water-cooled condenser and the heater core form a loop, and the heater core heats the passenger compartment for a second time.

### Mode of heating only the battery

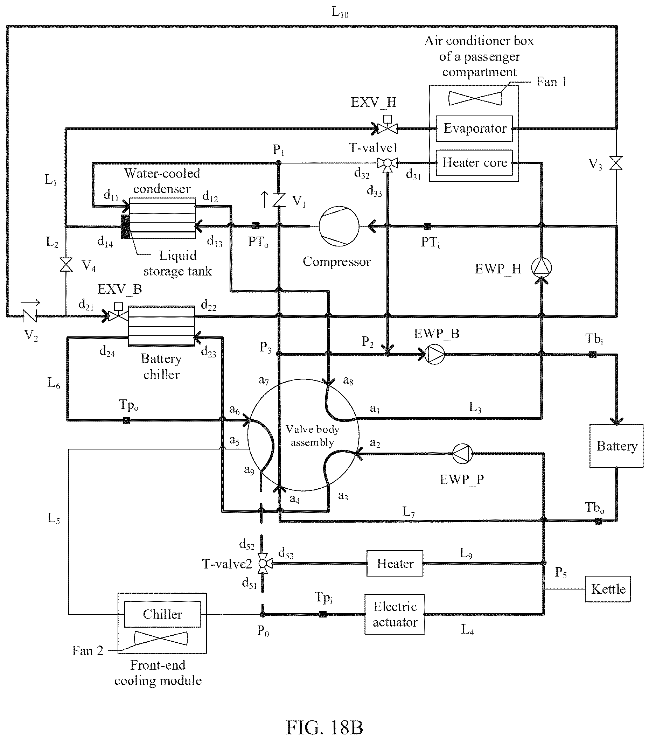

In an optional implementation, FIG. 18B is a diagram of a pipeline flow relationship for implementing the mode of heating only the battery. In this mode, control logic for controlling the compressor to be started and control logic before the startup are completely the same as the control logic in the mode of heating only the passenger compartment, and control logic after the compressor is controlled to be started is different from the control logic in the mode of heating only the passenger compartment. Main differences are as follows:

After the compressor is controlled to be started and the first valve body V₃ and the third valve body V₄ are controlled to be turned off, if the mode of heating only the battery is to be implemented, the controller controls the first water pump EWP_H and the third water pump EWP_B to be started, controls the first end d₃₁ of the first three-way valve T-valve1 to be connected to the third end d₃₃ of the first three-way valve T-valvel, controls the first end a₁ of the valve body component to be connected to the eighth end as of the valve body component, and controls the fourth end a₄ of the valve body component to be connected to the seventh end a₇ of the valve body component, so that a loop is formed between the battery and the first heat exchange pipe d₁₁d₁₂ of the water-cooled condenser, and the started compressor is used to heat the battery.

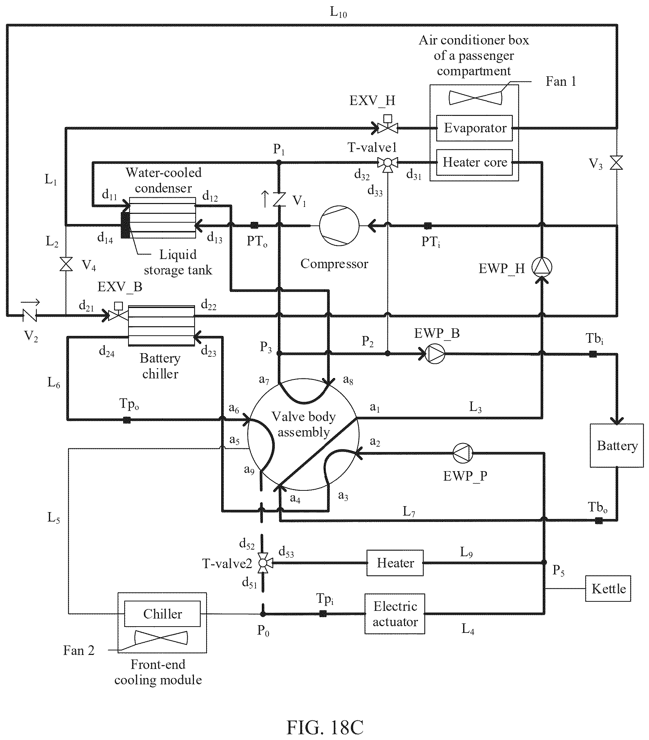

In another optional implementation, FIG. 18C is a diagram of another pipeline flow relationship for implementing the mode of heating only the battery. A difference between control logic in this implementation and the control logic in the foregoing implementation lies in the following.

After the compressor is controlled to be started and the first valve body V₃ and the third valve body V₄ are controlled to be turned off, if the mode of heating only the battery is to be implemented, the controller controls the first water pump EWP_H and the third water pump EWP_B to be started, controls the first end d₃₁ of the first three-way valve T-valve1 to be connected to the second end d₃₂ of the first three-way valve T-valve1, controls the first end a₁ of the valve body component to be connected to the fourth end a₄ of the valve body component, and controls the seventh end a₇ of the valve body component to be connected to the eighth end as of the valve body component, so that a loop is formed between the battery and the first heat exchange pipe d₁₁d₁₂ of the water-cooled condenser, and the started compressor is used to heat the battery.

For a specific implementation of the distinguishing control logic, refer to related descriptions in the non-preheating control solution 4. Details are not described herein again.

### Mode of heating both the passenger compartment and the battery

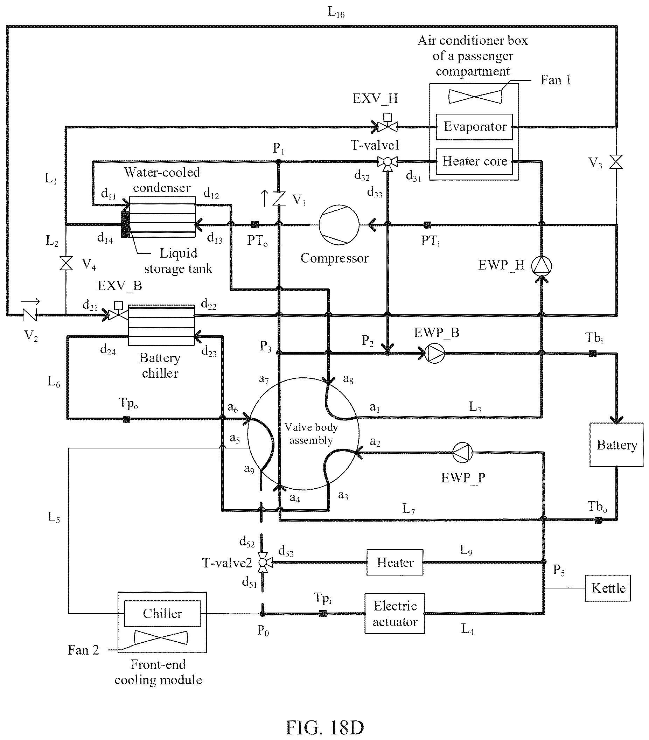

In an optional implementation, FIG. 18D is a diagram of a pipeline flow relationship for implementing the mode of heating both the passenger compartment and the battery. A difference between control logic corresponding to the mode and the control logic in the mode of heating only the battery shown in FIG. 18B lies in that after the compressor is controlled to be started and the first valve body V₃ and the third valve body V₄ are controlled to be turned off, in addition to controlling, according to the control logic in the mode of heating only the battery shown in FIG. 18B, the compressor to heat the battery, the first end d₃₁ of the first three-way valve T-valve1 is further controlled to be connected to the second end d₃₂ of the first three-way valve T-valve1, to heat the heater core by using a heated coolant obtained through heat exchange with the loop in which the compressor is located, so as to heat the passenger compartment while the battery is heated.

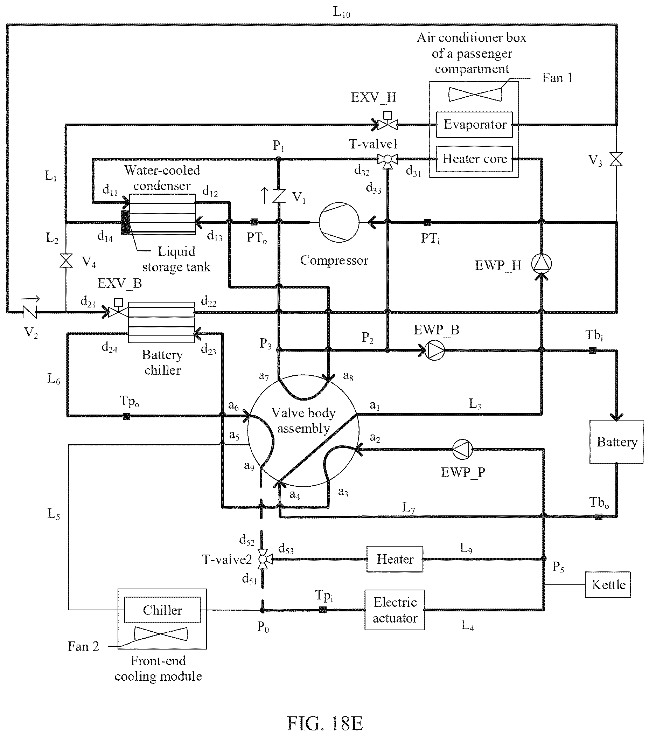

In another optional implementation, FIG. 18E is a diagram of a pipeline flow relationship for implementing the mode of heating both the passenger compartment and the battery. A difference between control logic corresponding to the mode and the control logic in the mode of heating only the battery shown in FIG. 18C lies in that, after the compressor is started, in addition to controlling, according to the control logic in the mode of heating only the battery shown in FIG. 18C, the compressor to heat the battery, the first end d₃₁ of the first three-way valve T-valve1 is further controlled to be connected to the third end d₃₃ of the first three-way valve T-valve1, so that a heated coolant obtained through heat exchange in the loop in which the compressor is located is merged into the loop in which the battery is located as soon as possible, to improve a battery heating speed.

In the preheating thermal management solution 4, the heater and the second three-way valve T-valve2 are disposed on a pipeline related to the pipeline on which the electric actuator is located. The second three-way valve T-valve2 and other valve body components in the thermal management system are controlled, so that not only the compressor can be used to assist in heating the passenger compartment and/or the battery, to reduce a power requirement for the heater, but also the passenger compartment can be preheated by using the evaporator before the compressor heats the passenger compartment, to improve passenger compartment heating efficiency.

### Preheating thermal management solution 5

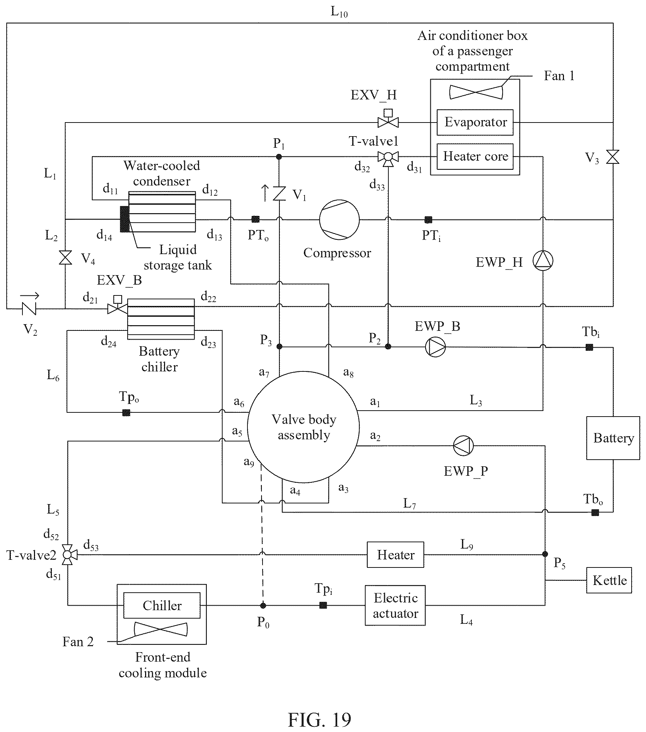

FIG. 19 is an architectural diagram of another preheating thermal management system according to an embodiment of this application. A difference between the thermal management system and that in the preheating thermal management solution 1 lies in that a second three-way valve T-valve2 is disposed on a fifth pipeline L₅, a first end d₅₁ of the second three-way valve T-valve2 is connected to a chiller, a second end d₅₂ of the second three-way valve T-valve2 is connected to a fifth end as of a valve body component, a third end d₅₃ of the second three-way valve T-valve2 is connected to a branch point P₄ on a fourth pipeline L₄ through a ninth pipeline L₉, and the ninth pipeline L₉ passes through a heater.

In addition, except that the heater and the second three-way valve T-valve2 are different from those in the preheating thermal management solution 1, a first valve body V₃, a second valve body V₂, a third valve body V₄, a compressor, a water-cooled condenser, the battery chiller, the valve body component, a first three-way valve T-vavlel, a one-way valve V₁, a first water pump EWP_H, a second water pump EWP_P, and a third water pump EWP_B in the preheating thermal management solution 5 are all the same as those in the preheating thermal management solution 1. Details are not described herein again.

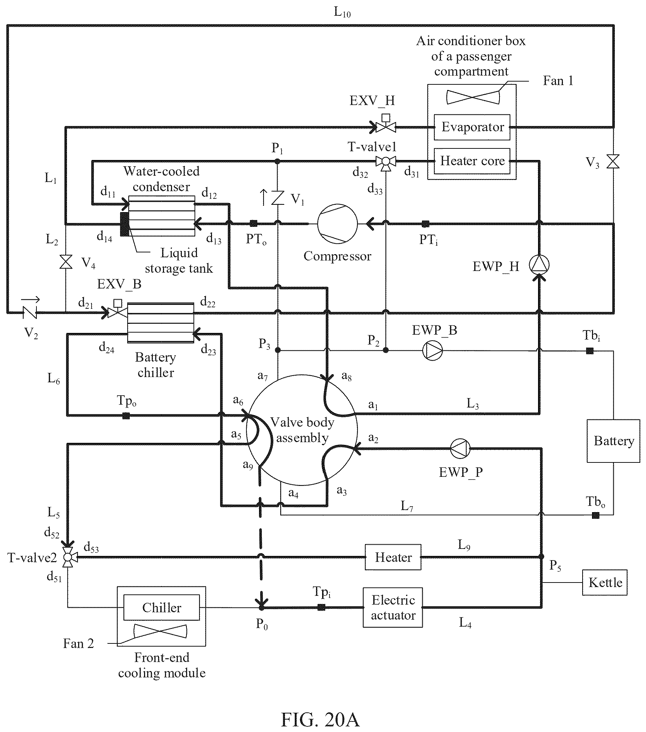

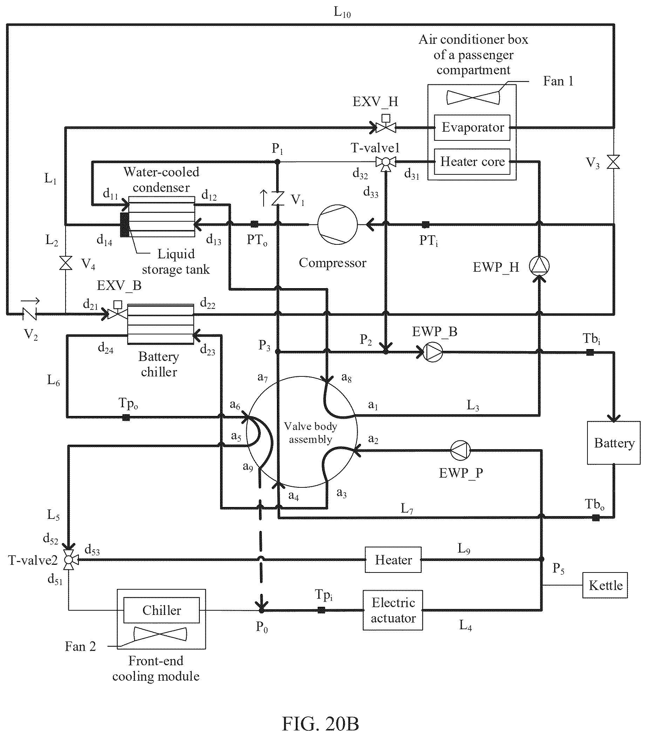

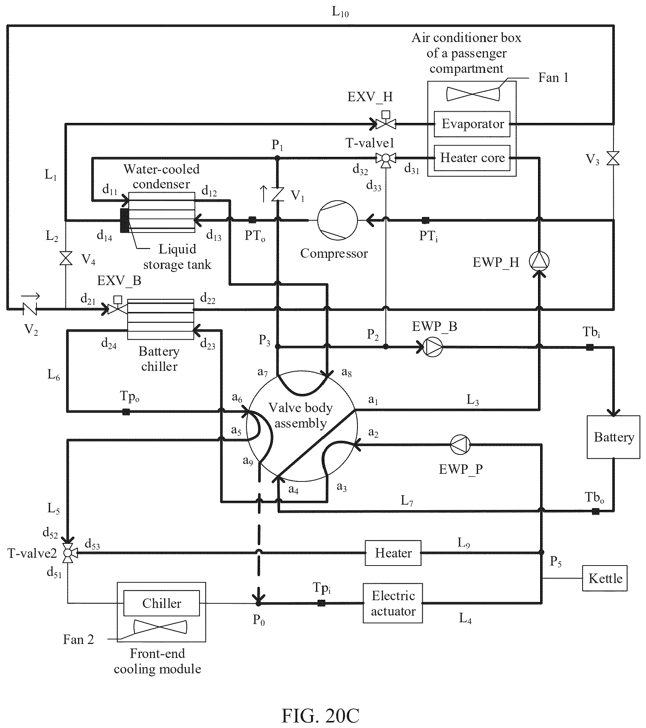

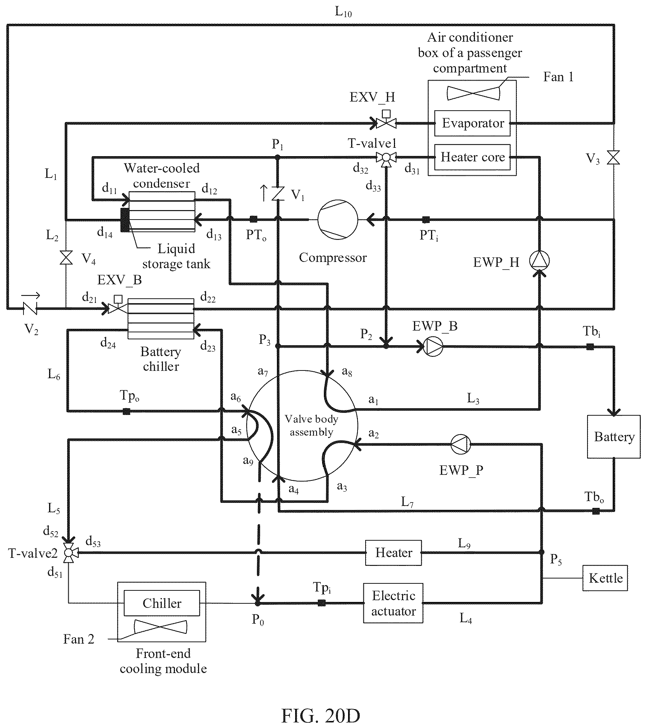

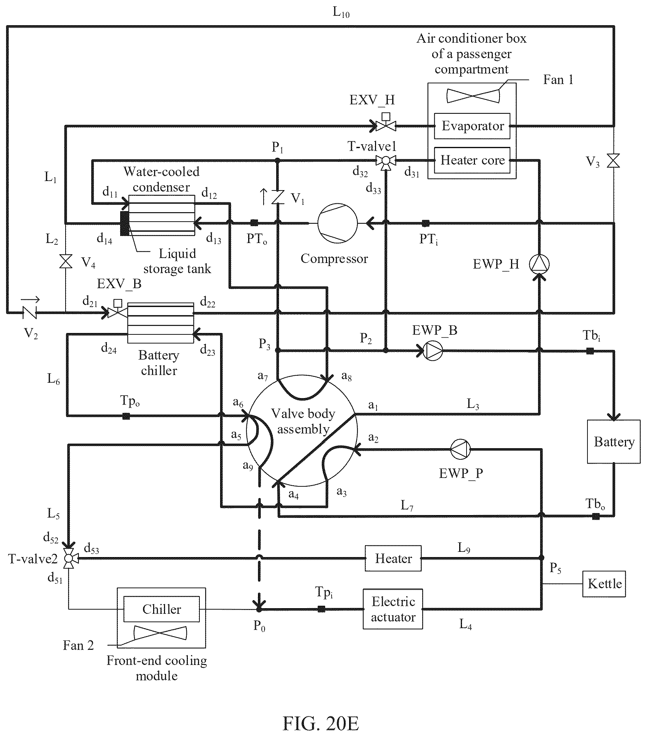

For example, FIG. 20A is a diagram of a pipeline flow relationship for implementing the mode of heating only the passenger compartment in the preheating thermal management solution 5. FIG. 20B is a diagram of a pipeline flow relationship for implementing the mode of heating only the battery in the preheating thermal management solution 5. FIG. 20C is a diagram of another pipeline flow relationship for implementing the mode of heating only the battery in the preheating thermal management solution 5. FIG. 20D is a diagram of a pipeline flow relationship for implementing the mode of heating both the passenger compartment and the battery in the preheating thermal management solution 5. FIG. 20E is a diagram of another pipeline flow relationship for implementing the mode of heating both the passenger compartment and the battery in the preheating thermal management solution 5. Refer to all of FIG. 20A to FIG. 20E. A difference between control logic in FIG. 20A to FIG. 20E and the control logic in FIG. 18A to FIG. 18E corresponding to the modes in the preheating thermal management solution 4 is as follows:

When determining that a coolant temperature that is collected by the temperature sensor Tpₒ and that is at the outlet end of the second heat exchange pipe d₂₃d₂₄ of the battery chiller is lower than the first temperature threshold, the controller controls the heater and the second water pump EWP_P to be started, controls the second end d₅₂ of the second three-way valve T-valve2 to be connected to the third end d₅₃ of the second three-way valve T-valve2, controls the second end a₂ of the valve body component to be connected to the third end a₃ of the valve body component, and controls the sixth end a₆ of the valve body component to be separately connected to the fifth end as of the valve body component and the ninth end a₉ of the valve body component. In this way, a coolant heated by the heater flows into the second end a₂ of the valve body component after passing through the second water pump EWP_P, then flows out from the third end a₃ of the valve body component, and enters the second heat exchange pipe d₂₃d₂₄ of the battery chiller, to heat the second heat exchange pipe d₂₃d₂₄ of the battery chiller. Then, the coolant flowing out from the second heat exchange pipe d₂₃d₂₄ of the battery chiller enters the sixth end a₆ of the valve body component. One part of the coolant flows out through the ninth end a₉ of the valve body component for cooling the electric actuator, and the other part flows out through the fifth end as of the valve body component and flows into the second end d₅₂ of the second three-way valve T-valve2, and then flows out from the third end d₅₃ of the second three-way valve T-valve2 and returns to the heater. The coolant flowing out from the electric actuator and the coolant flowing out from the heater merge and enter the second water pump EWP_P.

It should be noted that other control logic shown in FIG. 20A to FIG. 20E is completely the same as the control logic in FIG. 18A to FIG. 18E in the preheating thermal management solution 4. Details are not described herein again.

In the preheating thermal management solution 5, the heater and the second three-way valve T-valve2 are also disposed on an electric-actuator-related pipeline. The second three-way valve T-valve2 and other valve body components in the thermal management system are controlled, so that the compressor can also be used to assist in heating the passenger compartment and/or the battery, to reduce a power requirement for the heater, and the passenger compartment can be further preheated by using the evaporator before the compressor heats the passenger compartment, to improve passenger compartment heating efficiency.

In conclusion, in the foregoing preheating thermal management solutions, the heater may be disposed on any one of a battery-related pipeline, an air-heating-related pipeline, or an electric-actuator-related pipeline. The second three-way valve T-valve2, the first valve body V₃, the second valve body V₂, and the third valve body V₄ are disposed, so that the heater disposed on any one of the related pipelines can also be connected to the second heat exchange pipe of the battery chiller by controlling a connection relationship between the valve bodies. In this way, the compressor assists in heating, to reduce power consumption and costs of heating using the heater. In addition, in the foregoing preheating thermal management solutions, when the passenger compartment is heated, the passenger compartment is first preheated by using the evaporator, and then the passenger compartment is heated for the second time by using the heater core. In this way, a rate of heating the passenger compartment at a low temperature can be further improved.

In addition, the foregoing preheating thermal management solutions are described by using the example in which the second valve body V₂ is a one-way valve. The one-way valve may be automatically turned on or turned off based on a flow direction of liquid in the pipeline, and no controller is required for additional control. However, in another embodiment, if the second valve body V₂ is a control valve, after controlling the compressor to be started, the controller further needs to control the second valve body V₂ to be turned on, to ensure that the compressor can smoothly form a loop with the first heat exchange pipe d₂₁d₂₂ of the battery chiller through the turned-on second valve body V₂, and ensure that the heating capability of the compressor is used to heat the battery chiller.

It should be noted that the non-preheating thermal management solution 1 to the non-preheating thermal management solution 5 and the preheating thermal management solution 1 to the non-preheating thermal management solution 5 describe how to heat the passenger compartment and/or the battery in the ultra-low-temperature environment. An embodiment of this application further provides a solution for heating the passenger compartment and/or the battery in a non-ultra-low-temperature environment. The following uses the non-preheating thermal management system shown in FIG. 3 and the preheating thermal management system shown in FIG. 12 as examples to describe specific control logic for implementing various heating modes in the non-ultra-low-temperature environment from two perspectives: a non-preheating thermal management solution and a preheating thermal management solution.

### Non-ultra-low temperature non-preheating thermal management solution

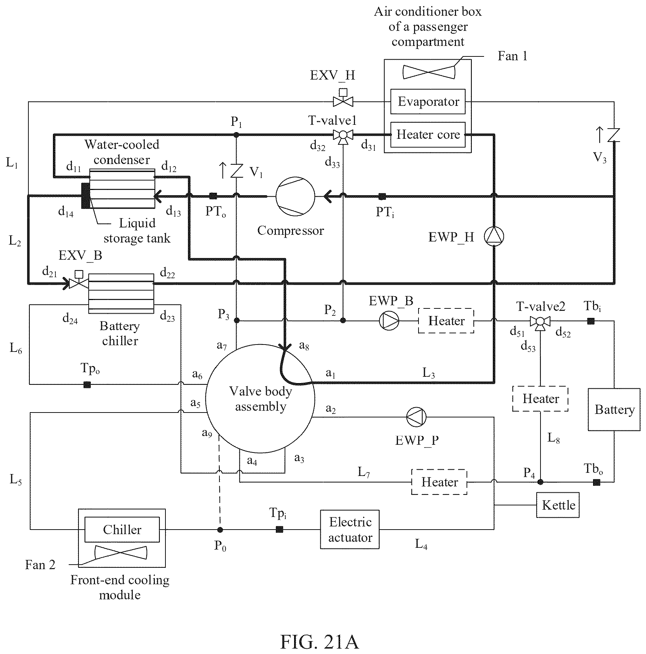

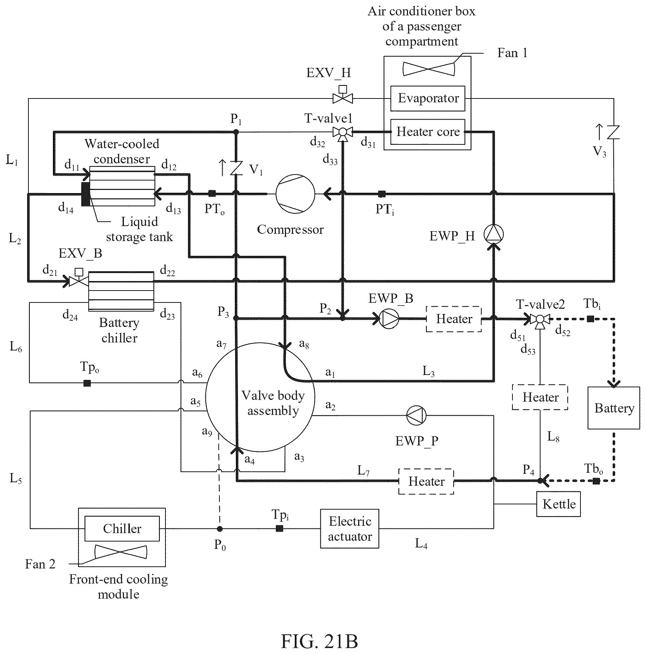

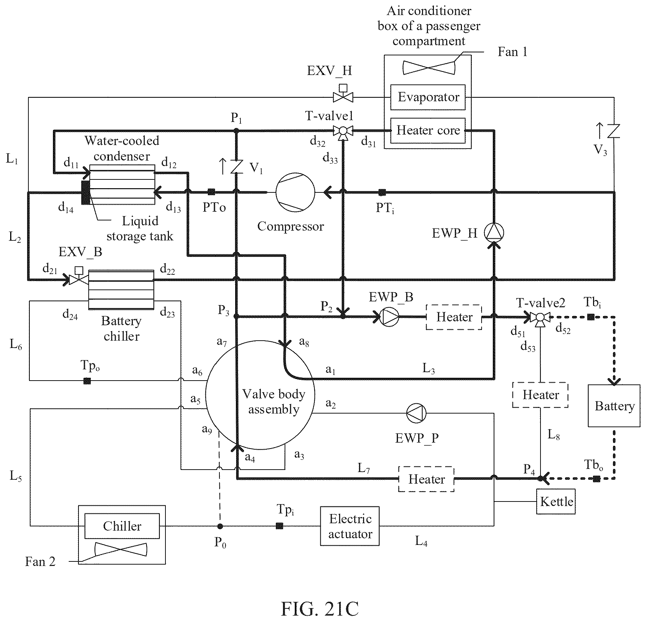

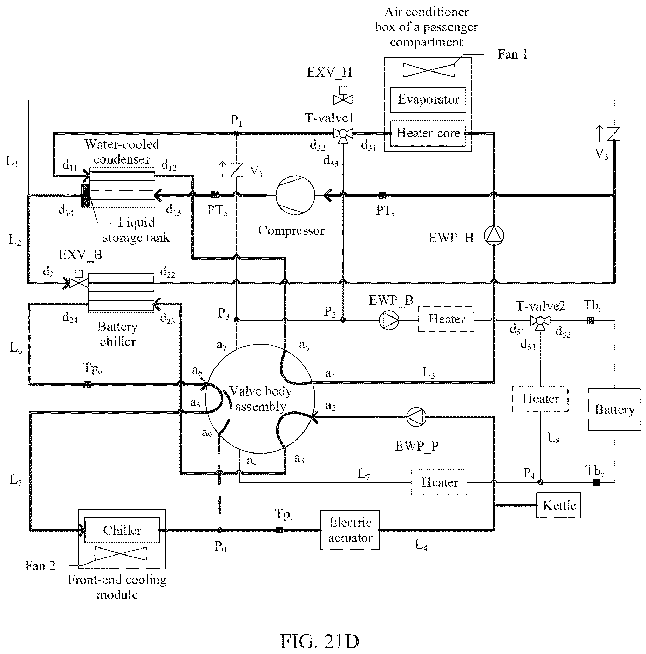

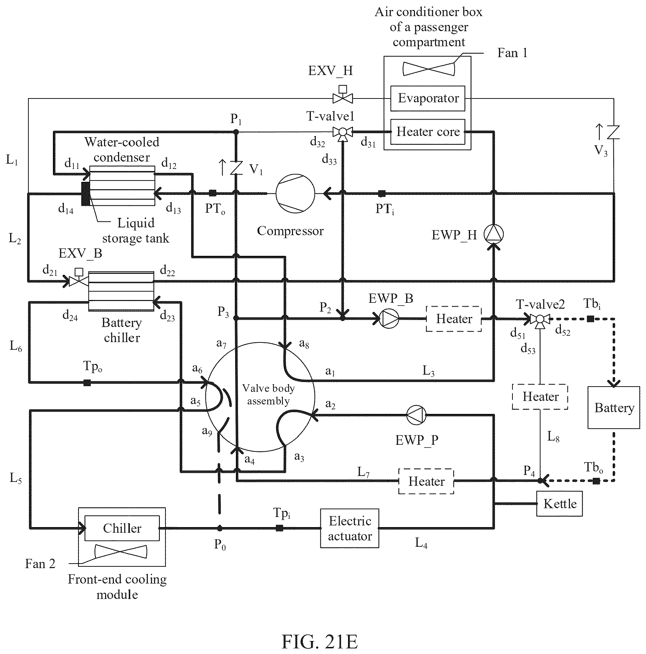

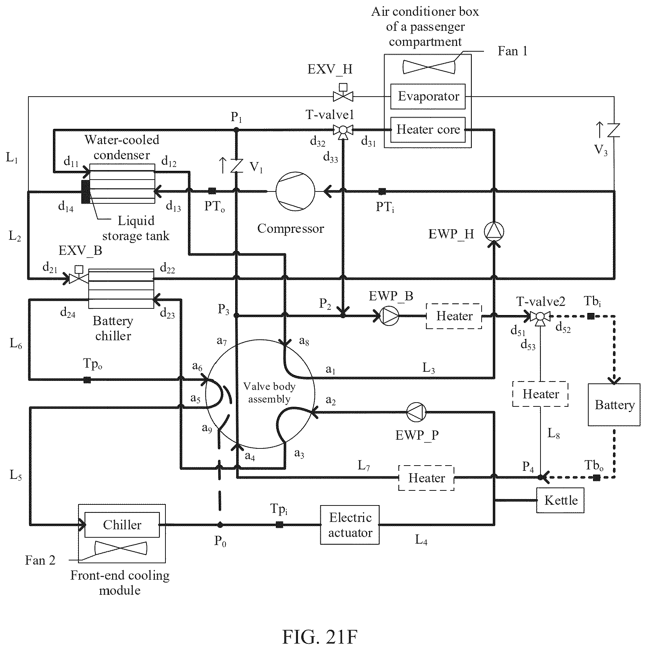

FIG. 21A is a diagram of a pipeline flow relationship for implementing non-ultra-low-temperature heating of the passenger compartment in the non-preheating thermal management solution. FIG. 21B is a diagram of a pipeline flow relationship for implementing non-ultra-low-temperature heating of the battery in the non-preheating thermal management solution. FIG. 21C is a diagram of a pipeline flow relationship for implementing non-ultra-low-temperature heating of the passenger compartment and the battery in the non-preheating thermal management solution. FIG. 21D is a diagram of another pipeline flow relationship for implementing non-ultra-low-temperature heating of the passenger compartment in the non-preheating thermal management solution. FIG. 21E is a diagram of another pipeline flow relationship for implementing non-ultra-low-temperature heating of the battery in the non-preheating thermal management solution. FIG. 21F is a diagram of another pipeline flow relationship for implementing non-ultra-low-temperature heating of the passenger compartment and the battery in the non-preheating thermal management solution. Refer to all of FIG. 21A to FIG. 21F.

When the controller implements any heating mode, if it is determined that a coolant temperature that is collected by the temperature sensor Tpₒ and that is at the outlet end of the second heat exchange pipe d₂₃d₂₄ of the battery chiller is not lower than the second temperature threshold (namely, -15°C), it indicates that a current ambient temperature has exceeded a start temperature threshold of the compressor, and the compressor may be directly started. Therefore, as shown in FIG. 21A to FIG. 21C, the controller may directly control the compressor to be started, and does not need to use the heater to heat the second heat exchange pipe d₂₃d₂₄ of the battery chiller before the compressor is started. In this way, because the ambient temperature is sufficient to be used to start the compressor, after the compressor is started, refrigerant liquid at the inlet of the compressor is directly compressed into high-temperature and high-pressure refrigerant gas, and is input into the second heat exchange pipe d₁₃d₁₄ of the water-cooled condenser, to heat the second heat exchange pipe d₁₃d₁₄ of the water-cooled condenser. Then, the refrigerant output from the second heat exchange pipe d₁₃d₁₄ of the water-cooled condenser returns to the compressor after passing through the first heat exchange pipe d₂₁d₂₂ of the battery chiller.

Further, after the compressor is controlled to be started, if the mode of heating only the passenger compartment needs to be implemented, as shown in FIG. 21A, the controller further controls the first water pump EWP_H to be started, controls the first end d₃₁ of the first three-way valve T-valvel to be connected to the second end d₃₂ of the first three-way valve T-valvel, and controls the eighth end as of the valve body component to be connected to the first end a₁ of the valve body component, so that the heater core is heated by using heat absorbed by the first heat exchange pipe d₁₁d₁₂ of the water-cooled condenser from the second heat exchange pipe d₁₃d₁₄, to heat the passenger compartment.

Alternatively, after the compressor is controlled to be started, if the mode of heating only the battery needs to be implemented, as shown in FIG. 21B, the controller further controls the first water pump EWP_H and the third water pump EWP_B to be started, controls the first end d₃₁ of the first three-way valve T-valvel to be connected to the third end d₃₃ of the first three-way valve T-valvel, controls the first end d₅₁ of the second three-way valve T-valve2 to be connected to the second end d₅₂ of the second three-way valve T-valve2, controls the eighth end as of the valve body component to be connected to the first end a₁, and controls the fourth end a₄ of the valve body component to be connected to the seventh end a₇. In this way, after the first heat exchange pipe d₁₁d₁₂ of the water-cooled condenser absorbs heat from the second heat exchange pipe d₁₃d₁₄, a heated coolant is obtained, and the coolant flows into the battery after passing through the eighth end as of the valve body component, the first end a₁ of the valve body component, the first water pump EWP_H, the heater core, the first end d₃₁ of the first three-way valve T-valvel, the third end d₃₃ of the first three-way valve T-valvel, the third water pump EWP_B, and the first end d₅₁ of the second three-way valve T-valve2, and the second end d₅₂ of the second three-way valve T-valve2, to heat the battery. Then, the coolant flowing out from the battery enters the fourth end a₄ of the valve body component, and then flows out from the seventh end a₇ of the valve body component. One part of the coolant is merged into the third water pump EWP_B, and the other part returns to the first heat exchange pipe d₁₁d₁₂ of the water-cooled condenser.

Alternatively, after the compressor is controlled to be started, if the mode of heating both the passenger compartment and the battery needs to be implemented, as shown in FIG. 21C, a difference between the control logic and that in the mode of heating only the battery shown in FIG. 21B lies in that, in addition to performing control according to the control logic shown in FIG. 21B, the controller further controls the first end d₃₁ of the first three-way valve T-valvel to be connected to the second end d₃₂ of the first three-way valve T-valve1, so that the heated coolant obtained through heat exchange by the first heat exchange pipe d₁₁d₁₂ of the water-cooled condenser can also be used to heat the heater core, to heat the passenger compartment.

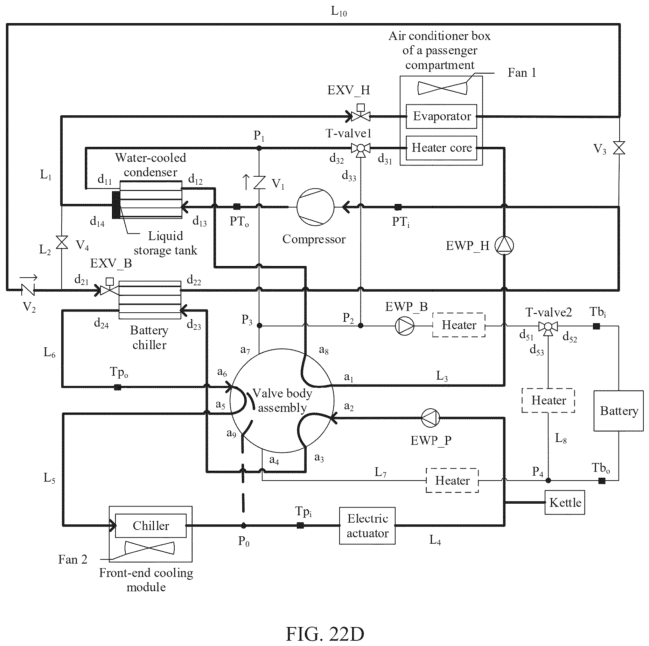

On the contrary, when the coolant temperature that is collected by the temperature sensor Tpₒ and that is at the outlet end of the second heat exchange pipe d₂₃d₂₄ of the battery chiller is not lower than the first temperature threshold (namely, -18°C or -20°C), but is lower than the second temperature threshold (namely, -15°C), although the current ambient temperature is not an ultra-low temperature, the current ambient temperature is slightly lower than the start temperature threshold of the compressor, and the compressor may be started through slight heating. In this case, the heater is no longer required to waste energy, but a heat dissipation capability of the electric actuator during operation may be used, and heat of a loop in which the electric actuator is located may be used to assist in starting the compressor. Specifically, as shown in FIG. 22D to FIG. 22F, the controller may control the second water pump EWP_P to be started, control the second end a₂ of the valve body component to be connected to the third end a₃ of the valve body component, and control the sixth end a₆ of the valve body component to be connected to the fifth end as of the valve body component. In this way, the coolant heated by the electric actuator sequentially flows through the second water pump EWP_P, the second end a₂ of the valve body component, and the third end a₃ of the valve body component, and then enters the second heat exchange pipe d₂₃d₂₄ of the battery chiller, to heat the second heat exchange pipe d₂₃d₂₄ of the battery chiller. Then, the coolant flows out to the sixth end a₆ of the valve body component, and enters the chiller after flowing out from the fifth end as of the valve body component. After the temperature is exchanged with the ambient temperature through the chiller, the coolant returns to the electric actuator to cool the electric actuator.

In the process of heating through the electric actuator, the controller may further monitor a temperature that is collected by the temperature sensor Tpᵢ and that is at the outlet end of the chiller and a temperature that is collected by the temperature sensor Tpₒ and that is at the outlet end of the battery chiller. When the temperature collected by Tpₒ is lower than the temperature collected by Tpᵢ, it indicates that the temperature of the coolant flowing through the battery chiller is still lower than the ambient temperature. In this case, the sixth end a₆ of the valve body component may continue to be connected to the fifth end as of the valve body component. In this way, a higher ambient temperature is first obtained through heat exchange by using the chiller, and then the coolant is heated by using the electric actuator, to increase the coolant temperature at the output end of the electric actuator. On the contrary, when the temperature collected by Tpₒ is higher than the temperature collected by Tpᵢ, it indicates that the temperature of the coolant flowing through the battery chiller is higher than the ambient temperature. In this case, the sixth end a₆ of the valve body component may be controlled to be disconnected from the fifth end as of the valve body component, and the sixth end a₆ of the valve body component may be controlled to be connected to the ninth end a₉ of the valve body component, so that the coolant that passes through the battery chiller and whose temperature is higher than the ambient temperature directly flows into the electric actuator for heating, to increase the temperature of the coolant at the output end of the electric actuator. It can be learned that, according to this control logic, the electric actuator can perform heating on a higher temperature between the ambient temperature and the temperature flowing through the battery chiller, to reach the temperature required for starting the compressor as soon as possible, and start the compressor as soon as possible.

Further, in the process in which the second heat exchange pipe d₂₃d₂₄ of the battery chiller is heated, the controller may further monitor the temperature that is collected by the temperature sensor Tpₒ and that is at the outlet end of the battery chiller. When the temperature is no longer lower than the second temperature threshold (namely, -15°C), it indicates that the temperature of the loop in which the electric actuator is located is sufficient to be used to start the compressor. In this case, the controller may control the compressor to be started, so that the compressor, the first heat exchange pipe d₂₁d₂₂ of the battery chiller, and the second heat exchange pipe d₁₃d₁₄ of the water-cooled condenser form a loop, to successfully start the compressor by using the high-temperature refrigerant obtained through heat exchange by the first heat exchange pipe d₂₁d₂₂ of the battery chiller, and heat the second heat exchange pipe d₁₃d₁₄ of the water-cooled condenser through a compression heating operation of the compressor.

After the compressor is started, if the mode of heating only the passenger compartment needs to be implemented, as shown in FIG. 21D, the controller further controls the first water pump EWP_H to be started, controls the first end d₃₁ of the first three-way valve T-valve1 to be connected to the second end d₃₂, and controls the eighth end as of the valve body component to be connected to the first end a₁, so that the heater core is heated by using heat absorbed by the first heat exchange pipe d₁₁d₁₂ of the water-cooled condenser from the second heat exchange pipe d₁₃d₁₄, to heat the passenger compartment.

Alternatively, after the compressor is started, if the mode of heating only the battery needs to be implemented, as shown in FIG. 21E, the controller further controls the first water pump EWP_H and the third water pump EWP_B to be started, controls the first end d₃₁ of the first three-way valve T-valve1 to be connected to the third end d₃₃ of the first three-way valve T-valve1, controls the first end d₅₁ of the second three-way valve T-valve2 to be connected to the second end d₅₂ of the second three-way valve T-valve2, controls the eighth end as of the valve body component to be connected to the first end a₁ of the valve body component, and controls the fourth end a4 of the valve body component to be connected to the seventh end a7 of the valve body component, so that heat absorbed by the first heat exchange pipe d₁₁d₁₂ of the water-cooled condenser from the second heat exchange pipe d₁₃d₁₄ is used to heat the battery, so as to implement battery heating.

Alternatively, after the compressor is started, if the mode of heating both the passenger compartment and the battery needs to be implemented, as shown in FIG. 21F, the controller further controls the first water pump EWP_H and the third water pump EWP_B to be started, controls the first end d₃₁ of the first three-way valve T-valve1 to be separately connected to the second end d₃₂ and the third end d₃₃ of the first three-way valve T-valve1, controls the first end d₅₁ of the second three-way valve T-valve2 to be connected to the second end d₅₂ of the second three-way valve T-valve2, controls the eighth end as of the valve body component to be connected to the first end a₁ of the valve body component, and controls the fourth end a₄ of the valve body component to be connected to the seventh end a₇ of the valve body component, so that heat absorbed by the first heat exchange pipe d₁₁d₁₂ of the water-cooled condenser from the second heat exchange pipe d₁₃d₁₄ is used to heat the heater core and the battery at the same time, to heat both the passenger compartment and the battery.

It should be noted that, after the compressor is started, the second heat exchange pipe d₂₃d₂₄ of the battery chiller performs heat exchange with the first heat exchange pipe d₂₁d₂₂ of the loop in which the compressor is located, so that the temperature of the second heat exchange pipe d₂₃d₂₄ of the battery chiller suddenly decreases, and if the temperature drops below the first temperature threshold, subsequent braking of the compressor is affected. Therefore, after the compressor is started, the controller may further monitor the temperature that is collected by the temperature sensor Tpₒ and that is at the outlet end of the battery chiller. When the temperature suddenly drops below the first temperature threshold, the controller may disconnect the electric actuator from the second heat exchange pipe d₂₃d₂₄ of the battery chiller, and use the heater to heat the second heat exchange pipe d₂₃d₂₄ of the battery chiller according to the control logic in the non-preheating thermal management solution 1 to the non-preheating thermal management solution 5, to ensure that the temperature obtained through exchange in the loop in which the compressor is located can be continuously used to start the compressor.

### Non-ultra-low temperature preheating thermal management solution

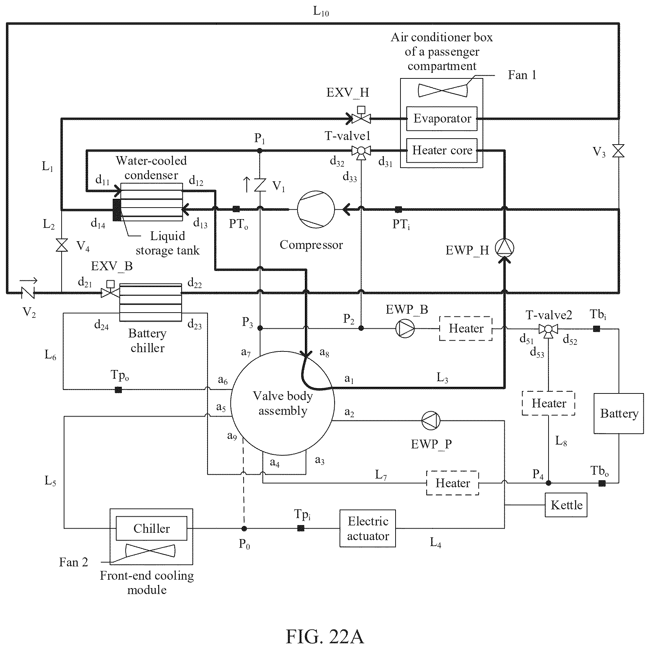

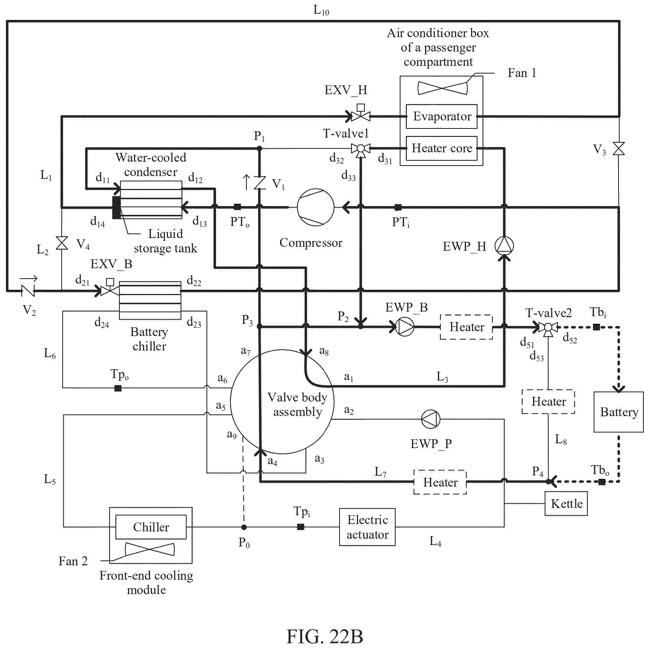

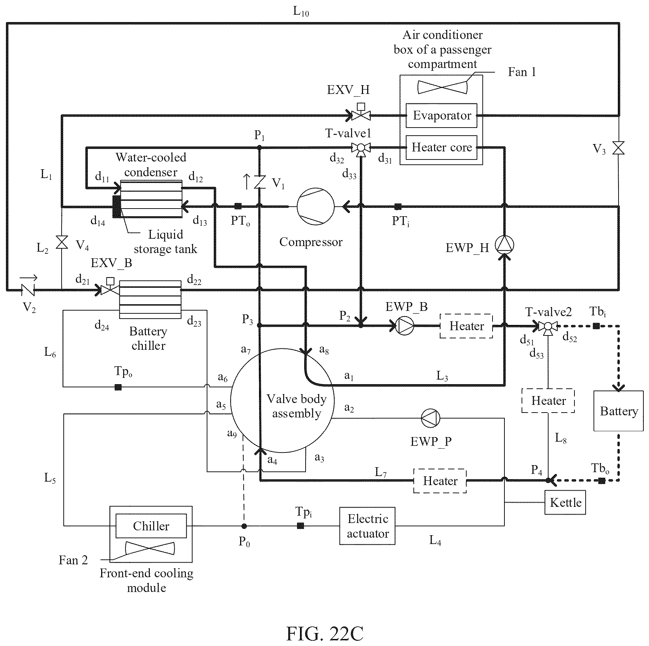

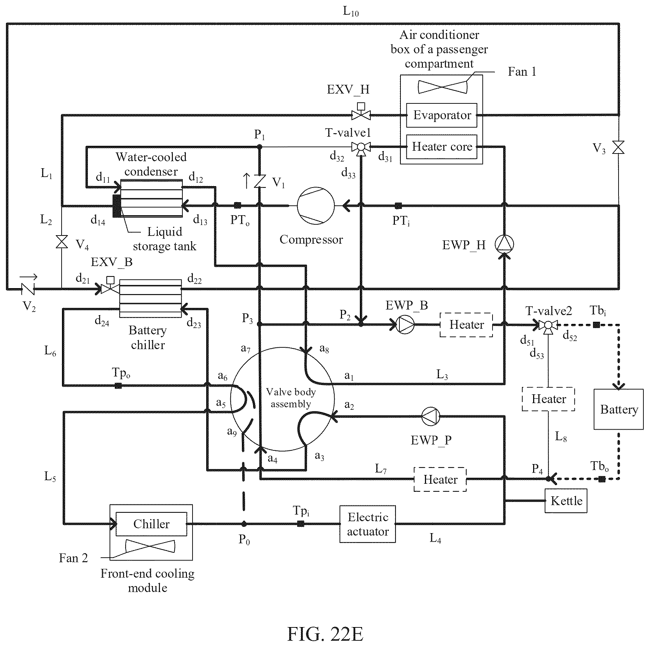

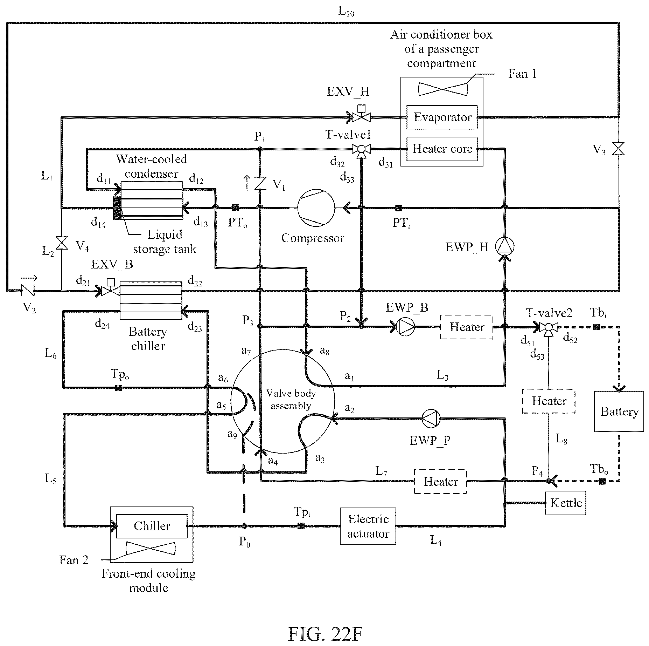

FIG. 22A is a diagram of a pipeline flow relationship for implementing non-ultra-low-temperature heating of the passenger compartment in the preheating thermal management solution. FIG. 22B is a diagram of a pipeline flow relationship for implementing non-ultra-low-temperature heating of the battery in the preheating thermal management solution. FIG. 22C is a diagram of a pipeline flow relationship for implementing non-ultra-low-temperature heating of the passenger compartment and the battery in the preheating thermal management solution. FIG. 22D is a diagram of another pipeline flow relationship for implementing non-ultra-low-temperature heating of the passenger compartment in the preheating thermal management solution. FIG. 22E is a diagram of another pipeline flow relationship for implementing non-ultra-low-temperature heating of the battery in the preheating thermal management solution. FIG. 22F is a diagram of another pipeline flow relationship for implementing non-ultra-low-temperature heating of the passenger compartment and the battery in the preheating thermal management solution. FIG. 22A to FIG. 22F are in a one-to-one correspondence with FIG. 21A to FIG. 21F. In the preheating thermal management solution, control logic for controlling the compressor to be started and control logic before the startup are completely the same as the control logic in the non-preheating thermal management solution, and control logic after the compressor is controlled to be started is different from the control logic in the non-preheating thermal management solution. Main differences are as follows:
When controlling the compressor to be started, the controller also controls the first valve body V₃ and the third valve body V₄ to be turned off, so that a loop is formed between the compressor, the second heat exchange pipe d₁₃d₁₄ of the water-cooled condenser, the evaporator, the second valve body V₂, and the first heat exchange pipe d₂₁d₂₂ of the battery chiller, and the compressor performs compression to generate heat, to heat the second heat exchange pipe d₁₃d₁₄ of the water-cooled condenser. In addition, if the mode of heating only the passenger compartment or the mode of heating both the passenger compartment and the battery is implemented, the control operation further causes the evaporator to heat the passenger compartment for a first time.

**In** conclusion, regardless of the non-preheating thermal management solution or the preheating thermal management solution, when the ambient temperature is not lower than the start temperature of the compressor, the compressor may be directly started to heat the passenger compartment and/or the battery, and when the ambient temperature is lower than the start temperature of the compressor but is not lower than the temperature of the ultra-low-temperature environment, the compressor may be started by using a heating function of the electric actuator. In this way, the original electric actuator in the thermal management system can be used for heating in a scenario in which the heater is not necessary, to reduce a power loss of the system.

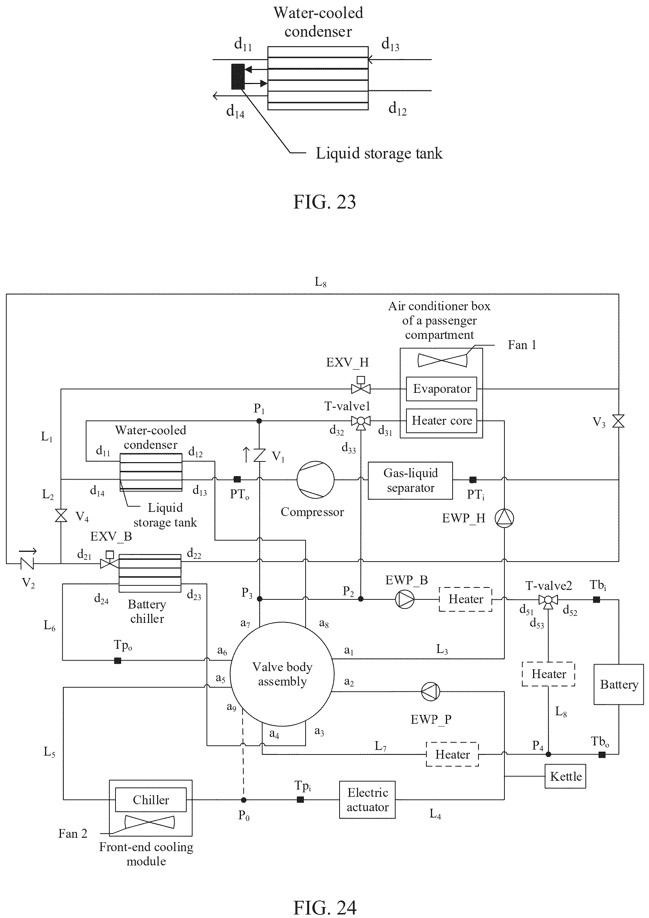

**In** some embodiments, a liquid storage tank and the water-cooled condenser may be connected in an undercooled manner, and the liquid storage tank and the water-cooled condenser that are connected in this way are also referred to as an undercooled water-cooled condenser. For example, FIG. 23 is a diagram of a connection manner of an undercooled water-cooled condenser according to an embodiment of this application. In the connection manner, the refrigerant from the port d13 of the water-cooled condenser first enters the liquid storage tank, and after the refrigerant is stored in the liquid storage tank, a remaining refrigerant flows out from the port d14 of the water-cooled condenser. Through a connection arrangement of the undercooled water-cooled condenser, a cooling capacity flowing out from the water-cooled condenser can be recycled, a gasification rate of liquid flowing out from the water-cooled condenser can be reduced, and condensation performance of the water-cooled condenser can be improved.

In some embodiments, the liquid storage tank may alternatively be replaced by a gas-liquid separator. The thermal management system shown in FIG. 12 is used as an example. FIG. 24 is an architectural diagram of another thermal management system according to an embodiment of this application. In this example, the gas-liquid separator is disposed on a common pipeline of the first pipeline L₁ and the second pipeline L₂, an input end of the gas-liquid separator is separately connected to the first valve body V₃ and the port d₂₂ of the battery chiller, and an output end of the gas-liquid separator is connected to the input end of the compressor. The gas-liquid separator may separate refrigerant gas and refrigerant liquid that flow into the input end of the gas-liquid separator, then make the refrigerant gas flow into the compressor, and retain the refrigerant liquid inside the gas-liquid separator. In this way, the gas-liquid separator is disposed in front of the input end of the compressor, so that the compressor can receive pure refrigerant gas, to improve a compression effect of the compressor.

In some embodiments, components in the thermal management system are classified into an exchanger component and a non-exchanger component. The exchanger component may include the water-cooled condenser, the battery chiller, the heater, the compressor, and the gas-liquid separator described in the foregoing content, and the non-exchanger component may include the valve body component, the first three-way valve T-valvel, the second three-way valve T-valve2, the one-way valve V₁, the first valve body V₃, the second valve body V₂, the third valve body V₄, the throttle valve EXV_H, the throttle valve EXV_B, the first water pump EWP_H, the second water pump EWP_P, the third water pump EWP_B, and a kettle. To reduce space occupied by the thermal management system, the exchanger component and/or the non-exchanger component may be further integrated based on a modular design. For example, exchanger components and/or non-exchanger components that are close to each other are integrated into an integrated unit, or required exchanger components and/or non-exchanger components are integrated into an integrated unit based on an actual requirement, so that a structure of the entire thermal management system is more compact, and meets a design concept of miniaturization of an electric vehicle.

To describe the integration solution more clearly, the following further describes a specific implementation of the integration solution from perspectives of a non-preheating thermal management system and a preheating thermal management system.

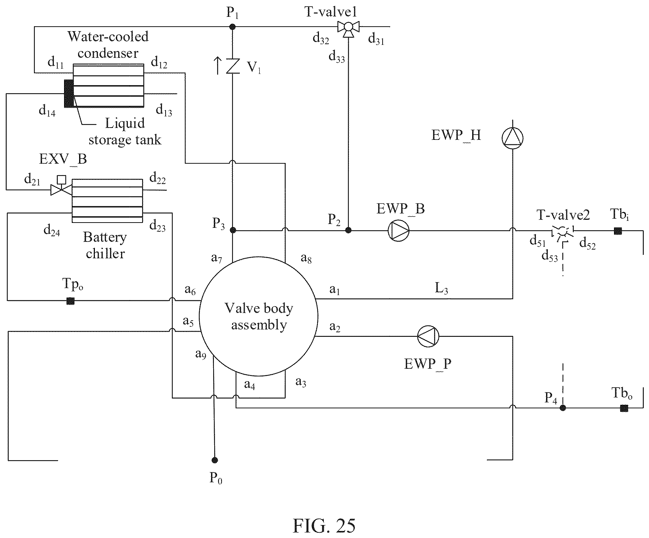

The non-preheating thermal management system shown in FIG. 3 is used as an example. FIG. 25 is a diagram of an integration manner of the non-preheating thermal management system according to an embodiment of this application. In this example, the water-cooled condenser, the battery chiller, the valve body component, the first valve body V₁, the first three-way valve T-valve 1, the second three-way valve T-valve2, the first water pump EWP_H, the second water pump EWP_P, the third water pump EWP_B, and the throttle valve EXV_B are integrated. In this way, the components that are close to each other are integrated, so that a distance between the components that are close to each other can be further shortened, and pipeline cabling between the components that are close to each other can be shortened, to reduce a pressure loss when the liquid circulates along the pipelines, and improve cooling efficiency or heating efficiency of the thermal management system.

It should be noted that, because the second three-way valve T-valve2 has different positions in different non-preheating thermal management solutions, to make the integrated module applicable to various scenarios, the second three-way valve T-valve2 and a related pipeline (namely, a dashed line part in FIG. 25) may not be integrated. In this way, even if the second three-way valve T-valve2 needs to be disposed at different positions in different scenarios, the module may be directly used to connect the second three-way valve T-valve2, to improve universality of the module.

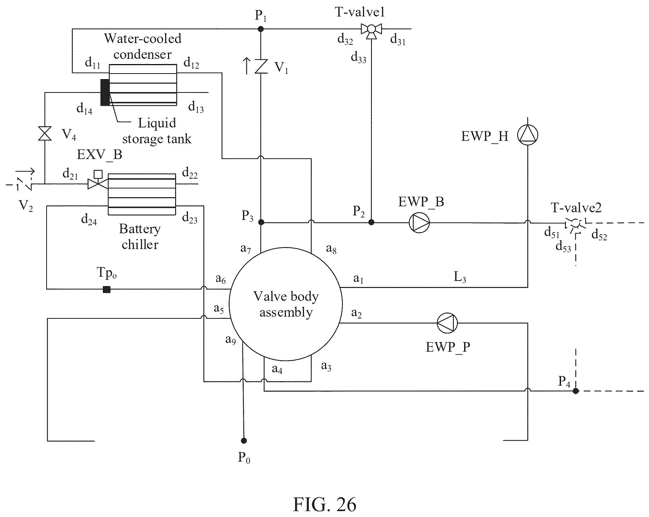

Correspondingly, the preheating thermal management system shown in FIG. 12 is used as an example. FIG. 26 is a diagram of an integration manner of the preheating thermal management system according to an embodiment of this application. In this example, the water-cooled condenser, the battery chiller, the valve body component, the one-way valve V₁, the second valve body V₂, the first three-way valve T-valvel, the second three-way valve T-valve2, the first water pump EWP_H, the second water pump EWP_P, the third water pump EWP_B, and the throttle valve EXV_B that are close to each other are integrated, to shorten pipeline cabling between the components that are close to each other, and improve cooling or heating efficiency of the thermal management system.

It should be noted that, because the second three-way valve T-valve2 has different positions in different preheating thermal management solutions, the second three-way valve T-valve2 and a related pipeline (namely, a dashed line part in FIG. 26) may not be integrated. In addition, because the second valve body V₂ may be a one-way valve or a solenoid valve, the second valve body V₂ may not be integrated, so that during actual application, a required type of second valve body V₂ is selected based on a scenario requirement to be connected to the integrated module, to further improve universality of the module.

In the foregoing implementations, the plurality of components in the thermal management system are integrated. This not only helps reduce structural complexity of the thermal management system and reduce occupied space, but also shortens cabling between the components through this compact structural arrangement. In this way, when the coolant or the refrigerant circulates in such a short circulation link, a pressure loss of the coolant or the refrigerant in a circulation flow process is reduced, to further help improve efficiency of a refrigerant loop. In addition, this integration manner can be made into modular components that are easy to maintain and carry.

It should be noted that the foregoing merely describes several possible implementation solutions of the thermal management system as examples. However, it should be understood that any solution in which the heater is first used to heat the compressor for startup before the passenger compartment and/or the battery are/is heated, and then the started compressor is used to assist the heater in heating the passenger compartment and/or the battery falls within the protection scope of embodiments of this application. For example, when the heater is disposed on the sixth pipeline L₆, in the thermal management solutions, the third water pump EWP_B is connected to the sixth pipeline L₆ by controlling a connection relationship between the valve bodies, so that the third water pump EWP_B drives the coolant on the sixth pipeline L₆ to flow, and the heater on the sixth pipeline L₆ heats the flowing coolant. However, some modifications may alternatively be made to the solution. For example, the connection relationship between the valve bodies is controlled, so that either of the first water pump EWP_H or the second water pump EWP_P is connected to the sixth pipeline L₆, the first water pump EWP_H or the second water pump EWP_P drives the coolant on the sixth pipeline L₆ to flow, and the heater on the sixth pipeline L₆ heats the flowing coolant.

In addition, in the foregoing embodiments, only the electric vehicle is used as an example to describe possible application of the thermal management system. The thermal management system may be further applied to any other movable device that can be driven by electric energy, for example, may include but is not limited to an electric ship, an electric aircraft, an electric tricycle, an electric robot, and an electric motorcycle. Alternatively, the thermal management system may be further applied to another field other than the mobile device, for example, a smart home field or an industrial remote control field. This is not specifically limited in embodiments of this application.

In addition, with evolution of a system architecture and emergence of a new scenario, the thermal management system provided in embodiments of this application is also applicable to a similar technical problem. This is not specifically limited in embodiments of this application.

According to the thermal management system provided in embodiments of this application, an embodiment of this application further provides a control method. The control method is performed by the foregoing controller. The controller is configured to control startup of each component in the thermal management system and a port connection relationship between valve bodies, to implement one or more of a mode of heating only a passenger compartment, a mode of heating only a battery, or a mode of heating both a passenger compartment and a battery.

According to the thermal management system provided in embodiments of this application, an embodiment of this application further provides an electric movable device. The movable device includes the foregoing thermal management system. Some examples of the movable device include but are not limited to a car, a ship, a drone, a train, a lorry, a truck, and the like.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thermal management system, comprising a heating component, a compressor, a water-cooled condenser, a battery chiller, a valve body component, a first three-way valve, a one-way valve, a first water pump, a second water pump, and a third water pump, wherein
a first pipeline is connected between an output end of the compressor and an input end of the compressor, and the first pipeline passes through a second heat exchange pipe of the water-cooled condenser and an evaporator in an air conditioner box of a passenger compartment;
a second pipeline is further connected between the output end of the compressor and the input end of the compressor, and the second pipeline passes through the second heat exchange pipe of the water-cooled condenser and a first heat exchange pipe of the battery chiller;
a third pipeline is connected between a first end of the valve body component and an eighth end of the valve body component, and the third pipeline passes through the first water pump, a heater core in the air conditioner box of the passenger compartment, a first end of the first three-way valve, a second end of the first three-way valve, and a first heat exchange pipe of the water-cooled condenser;
a fourth pipeline is connected between a second end of the valve body component and a ninth end of the valve body component, and the fourth pipeline passes through an electric actuator and the second water pump;
a fifth pipeline is connected between a fifth end of the valve body component and the ninth end of the valve body component, and the fifth pipeline passes through a front-end cooling module;
a sixth pipeline is connected between a third end of the valve body component and a sixth end of the valve body component, and the sixth pipeline passes through a second heat exchange pipe of the battery chiller;
a seventh pipeline is connected between a seventh end of the valve body component and a fourth end of the valve body component, the seventh pipeline passes through the third water pump and a battery, and the seventh end of the valve body component is further connected to a third end of the first three-way valve, and is further connected to the second end of the first three-way valve and the first heat exchange pipe of the water-cooled condenser through the one-way valve; and
the heating component is disposed on a target pipeline, and the target pipeline is a pipeline that connects the heating component to the second heat exchange pipe of the battery chiller by controlling a port connection relationship between the valve body component and the first three-way valve.

2. The thermal management system according to claim 1, wherein
the heating component comprises a second three-way valve, a heater, and a first valve body;
the second three-way valve is disposed on the seventh pipeline, a first end of the second three-way valve is connected to an output end of the third water pump, a second end of the second three-way valve is connected to an input end of the battery, and a third end of the second three-way valve is connected to a branch point between the input end of the battery and the fourth end of the valve body component on the seventh pipeline through an eighth pipeline;
the heater is disposed on the sixth pipeline, or disposed on the seventh pipeline between the seventh end of the valve body component and the first end of the second three-way valve, or disposed on the eighth pipeline, or disposed on the seventh pipeline between the branch point and the fourth end of the valve body component; and
the first valve body is disposed on the first pipeline, a first end of the first valve body is separately connected to the input end of the compressor and the first heat exchange pipe of the battery chiller, and a second end of the first valve body is connected to the evaporator.

3. The thermal management system according to claim 1, wherein
the heating component comprises a second three-way valve, a heater, and a first valve body;
the second three-way valve is disposed on the seventh pipeline, a first end of the second three-way valve is connected to an output end of the third water pump, a second end of the second three-way valve is connected to an input end of the battery, and a third end of the second three-way valve is connected to a branch point between the input end of the battery and the fourth end of the valve body component on the seventh pipeline through an eighth pipeline;
the heater is disposed on the third pipeline between the first end of the valve body component and the first end of the first three-way valve; and
the first valve body is disposed on the first pipeline, a first end of the first valve body is separately connected to the input end of the compressor and the first heat exchange pipe of the battery chiller, and a second end of the first valve body is connected to the evaporator.

4. The thermal management system according to claim 1, wherein
the heating component comprises a second three-way valve, a heater, and a first valve body;
the second three-way valve is disposed on a common pipeline of the fourth pipeline and the fifth pipeline, a first end of the second three-way valve is separately connected to the front-end cooling module and the electric actuator, a second end of the second three-way valve is connected to the ninth end of the valve body component, and a third end of the second three-way valve is connected to a branch point between the second water pump and the electric actuator on the fourth pipeline through a ninth pipeline;
the heater is disposed on the ninth pipeline; and
the first valve body is disposed on the first pipeline, a first end of the first valve body is separately connected to the input end of the compressor and the first heat exchange pipe of the battery chiller, and a second end of the first valve body is connected to the evaporator.

5. The thermal management system according to claim 1, wherein
the heating component comprises a second three-way valve, a heater, and a first valve body;
the second three-way valve is disposed on the fifth pipeline, a first end of the second three-way valve is connected to the front-end cooling module, a second end of the second three-way valve is connected to the fifth end of the valve body component, and a third end of the second three-way valve is connected to a branch point between the second water pump and the electric actuator on the fourth pipeline through a ninth pipeline;
the heater is disposed on the ninth pipeline; and
the first valve body is disposed on the first pipeline, a first end of the first valve body is separately connected to the input end of the compressor and the first heat exchange pipe of the battery chiller, and a second end of the first valve body is connected to the evaporator.

6. The thermal management system according to any one of claims 2 to 5, wherein
the first valve body is a control valve; or
the first valve body is a one-way valve, an input end of the first valve body is the second end of the first valve body, and an output end of the first valve body is the first end of the first valve body.

7. The thermal management system according to any one of claims 2 to 5, wherein
the heating component further comprises a second valve body and a third valve body;
a tenth pipeline is connected between the second end of the first valve body and the first heat exchange pipe of the battery chiller;
the second valve body is disposed on the tenth pipeline, a first end of the second valve body is separately connected to the second end of the first valve body and an end of the evaporator, and a second end of the second valve body is separately connected to the first heat exchange pipe of the battery chiller and a first end of the third valve body; and
the third valve body is disposed on the second pipeline, the first end of the third valve body is separately connected to the second end of the second valve body and the first heat exchange pipe of the battery chiller, and a second end of the third valve body is separately connected to the other end of the evaporator and the second heat exchange pipe of the water-cooled condenser.

8. The thermal management system according to claim 7, wherein
the first valve body and the third valve body are control valves; and
the second valve body is a control valve, or the second valve body is a one-way valve, an input end of the second valve body is the first end of the second valve body, and an output end of the second valve body is the second end of the second valve body.

9. The thermal management system according to any one of claims 1 to 8, wherein the thermal management system further comprises a liquid storage tank, the liquid storage tank is disposed outside an output end of the second heat exchange pipe of the water-cooled condenser, and the liquid storage tank and the water-cooled condenser form an undercooled water-cooled condenser.

10. The thermal management system according to any one of claims 1 to 8, wherein the thermal management system further comprises a gas-liquid separator, and the gas-liquid separator is disposed at an inlet end of the compressor.

11. The thermal management system according to any one of claims 1 to 10, wherein an integrated design is performed on at least two of the following components in the thermal management system and a pipeline connected between the at least two components:
the water-cooled condenser, the battery chiller, the valve body component, the one-way valve, the first three-way valve, the first water pump, the second water pump, the third water pump, the liquid storage tank, the second three-way valve, the first valve body, the second valve body, and the third valve body.

12. A control method, applicable to the thermal management system according to any one of claims 1 to 11, wherein the method comprises:
when it is determined that an ambient temperature is lower than a first temperature threshold, controlling a heater and one or more water pumps in the thermal management system to be started, and controlling a port connection relationship between valve bodies in the thermal management system, to make the heater and a second heat exchange pipe of a battery chiller form a loop, wherein the first temperature threshold indicates an ultra-low-temperature environment;
after it is determined that a temperature at an output end of the second heat exchange pipe of the battery chiller is not lower than a second temperature threshold, controlling a compressor in the thermal management system to be started, to make the compressor, a first heat exchange pipe of the battery chiller, and a second heat exchange pipe of a water-cooled condenser form a loop, wherein the second temperature threshold indicates a start temperature of the compressor; and
controlling the port connection relationship between the valve bodies in the thermal management system, and/or controlling one or more water pumps in the thermal management system to be started, to make a to-be-heated device and a first heat exchange pipe of the water-cooled condenser form a loop.

13. The method according to claim 12, wherein when the thermal management system comprises a second three-way valve, the heater, and a first valve body,
when the first valve body is a control valve, after controlling the compressor in the thermal management system to be started, the method further comprises:
controlling the first valve body to be turned off.

14. The method according to claim 12, wherein when the thermal management system comprises a second three-way valve, the heater, a first valve body, a second valve body, and a third valve body,
after controlling the compressor in the thermal management system to be started, the method further comprises:
controlling the first valve body and the third valve body to be turned off; and
when the second valve body is a control valve, after controlling the compressor in the thermal management system to be started, the method further comprises:
controlling the second valve body to be turned off.

15. The method according to any one of claims 12 to 14, wherein when the heater is disposed on a sixth pipeline, a seventh pipeline, or an eighth pipeline,
the controlling the heater and the one or more water pumps in the thermal management system to be started, and controlling the port connection relationship between the valve bodies in the thermal management system, to make the heater and the second heat exchange pipe of the battery chiller form the loop comprises:
controlling the heater and a third water pump to be started, controlling a first end of the second three-way valve to be connected to a third end of the second three-way valve, controlling a third end of a valve body component to be connected to a fourth end of the valve body component, and controlling a sixth end of the valve body component to be connected to a seventh end of the valve body component.

16. The method according to claim 15, wherein when the to-be-heated device is a passenger compartment,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump to be started, controlling a first end of a first three-way valve to be connected to a second end of the first three-way valve, and controlling a first end of the valve body component to be connected to an eighth end of the valve body component.

17. The method according to claim 15, wherein when the to-be-heated device is a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump to be started, controlling a first end of a first three-way valve to be connected to a third end of the first three-way valve, controlling the first end of the second three-way valve to be connected to a second end of the second three-way valve, and controlling a first end of the valve body component to be connected to an eighth end of the valve body component.

18. The method according to claim 15, wherein when the to-be-heated device is a passenger compartment and a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump to be started, controlling a first end of a first three-way valve to be separately connected to a second end of the first three-way valve and a third end of the first three-way valve, controlling the first end of the second three-way valve to be connected to a second end of the second three-way valve, and controlling a first end of the valve body component to be connected to an eighth end of the valve body component.

19. The method according to any one of claims 12 to 14, wherein when the heater is disposed on a third pipeline,
the controlling the heater and the one or more water pumps in the thermal management system to be started, and controlling the port connection relationship between the valve bodies in the thermal management system, to make the heater and the second heat exchange pipe of the battery chiller form the loop comprises:
controlling the heater, a first water pump, and a third water pump to be started, controlling a first end of a first three-way valve to be connected to a third end of the first three-way valve, controlling a first end of the second three-way valve to be connected to a third end of the second three-way valve, controlling a third end of a valve body component to be connected to a fourth end of the valve body component, controlling a sixth end of the valve body component to be connected to a seventh end of the valve body component, and controlling a first end of the valve body component to be connected to an eighth end of the valve body component.

20. The method according to claim 19, wherein when the to-be-heated device is a passenger compartment,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling the first end of the first three-way valve to be connected to a second end of the first three-way valve.

21. The method according to claim 19, wherein when the to-be-heated device is a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling the first end of the second three-way valve to be connected to the third end of the second three-way valve.

22. The method according to claim 19, wherein when the to-be-heated device is a passenger compartment and a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling the first end of the first three-way valve to be connected to a second end of the first three-way valve, and controlling the first end of the second three-way valve to be connected to the third end of the second three-way valve.

23. The method according to any one of claims 12 to 14, wherein when the second three-way valve is disposed on a common pipeline of a fourth pipeline and a fifth pipeline, and the heater is disposed on a ninth pipeline,
the controlling the heater and the one or more water pumps in the thermal management system to be started, and controlling the port connection relationship between the valve bodies in the thermal management system, to make the heater and the second heat exchange pipe of the battery chiller form the loop comprises:
controlling the heater and a second water pump to be started, controlling a second end of the second three-way valve to be separately connected to a first end of the second three-way valve and a third end of the second three-way valve, controlling a second end of a valve body component to be connected to a third end of the valve body component, and controlling a sixth end of the valve body component to be connected to a ninth end of the valve body component.

24. The method according to any one of claims 12 to 14, wherein when the second three-way valve is disposed on a fifth pipeline, and the heater is disposed on a ninth pipeline,
the controlling the heater and the one or more water pumps in the thermal management system to be started, and controlling the port connection relationship between the valve bodies in the thermal management system, to make the heater and the second heat exchange pipe of the battery chiller form the loop comprises:
controlling the heater and a second water pump to be started, controlling a second end of the second three-way valve to be connected to a third end of the second three-way valve, controlling a second end of a valve body component to be connected to a third end of the valve body component, and controlling a sixth end of the valve body component to be separately connected to a fifth end of the valve body component and a ninth end of the valve body component.

25. The method according to claim 23 or 24, wherein when the to-be-heated device is a passenger compartment,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump to be started, controlling a first end of a first three-way valve to be connected to a second end of the first three-way valve, and controlling a first end of the valve body component to be connected to an eighth end of the valve body component.

26. The method according to claim 23 or 24, wherein when the to-be-heated device is a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump and a third water pump to be started, controlling a first end of a first three-way valve to be connected to a third end of the first three-way valve, controlling a first end of the valve body component to be connected to an eighth end of the valve body component, and controlling a fourth end of the valve body component to be connected to a seventh end of the valve body component.

27. The method according to claim 23 or 24, wherein when the to-be-heated device is a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump and a third water pump to be started, controlling a first end of a first three-way valve to be connected to a second end of the first three-way valve, controlling a first end of the valve body component to be connected to a fourth end of the valve body component, and controlling a seventh end of the valve body component to be connected to an eighth end of the valve body component.

28. The method according to claim 23 or 24, wherein when the to-be-heated device is a passenger compartment and a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump and a third water pump to be started, controlling a first end of a first three-way valve to be separately connected to a second end of the first three-way valve and a third end of the first three-way valve, controlling a first end of the valve body component to be connected to an eighth end of the valve body component, and controlling a fourth end of the valve body component to be connected to a seventh end of the valve body component.

29. The method according to claim 23 or 24, wherein when the to-be-heated device is a passenger compartment and a battery,
the controlling the one or more water pumps in the thermal management system to be started, and/or controlling the port connection relationship between the valve bodies in the thermal management system, to make the to-be-heated device and the first heat exchange pipe of the water-cooled condenser form the loop comprises:
controlling a first water pump and a third water pump to be started, controlling a first end of a first three-way valve to be separately connected to a second end of the first three-way valve and a third end of the first three-way valve, controlling a first end of the valve body component to be connected to a fourth end of the valve body component, and controlling a seventh end of the valve body component to be connected to an eighth end of the valve body component.

30. The method according to any one of claims 12 to 29, wherein before the determining that the temperature at the output end of the second heat exchange pipe of the battery chiller is not lower than the second temperature threshold, the method further comprises:
if it is determined that the ambient temperature is not lower than the first temperature threshold and is lower than the second temperature threshold, controlling one or more water pumps in the thermal management system to be started, and controlling the port connection relationship between the valve bodies in the thermal management system, to make an electric actuator and the second heat exchange pipe of the battery chiller form a loop.

31. The method according to claim 30, wherein the controlling the one or more water pumps in the thermal management system to be started, and controlling the port connection relationship between the valve bodies in the thermal management system, to make the electric actuator and the second heat exchange pipe of the battery chiller form the loop comprises:
controlling the second water pump to be started, controlling the second end of the valve body component to be connected to the third end of the valve body component, and controlling the sixth end of the valve body component to be connected to the fifth end of the valve body component.

32. The method according to claim 31, wherein after the controlling the sixth end of the valve body component to be connected to the fifth end of the valve body component, the method further comprises:
if it is determined that the temperature at the output end of the second heat exchange pipe of the battery chiller is not lower than a temperature at an inlet end of the electric actuator, controlling the sixth end of the valve body component to be disconnected from the fifth end of the valve body component, and controlling the sixth end of the valve body component to be connected to the ninth end of the valve body component.

33. A controller, comprising at least one processor and an interface circuit, wherein the interface circuit is configured to provide data or code instructions for the at least one processor, and the at least one processor is configured to implement the method according to any one of claims 12 to 32 through a logic circuit or by executing the code instructions.

34. An electric vehicle, comprising a controller and the thermal management system according to any one of claims 1 to 11, wherein the controller is configured to control components in the thermal management system, to implement one or more of a mode of heating only a passenger compartment, a battery heating mode, or a mode of heating both a passenger compartment and a battery.

35. A computer-readable storage medium, wherein the computer-readable storage medium stores a computer program, and when the computer program is run, the method according to any one of claims 12 to 32 is performed.
